(19) Europäisches Patentamt
European Patent Office
Office européen des brevets

(11) EP 4 697 633 A1

(12) **EUROPEAN PATENT APPLICATION**
published in accordance with Art. 153(4) EPC

(43) Date of publication:
**18.02.2026 Bulletin 2026/08**

(21) Application number: **23937641.1**

(22) Date of filing: **01.12.2023**

(51) International Patent Classification (IPC):
***H04L 5/00*** *(2006.01)* ***H04W 72/232*** *(2023.01)*
***H04W 72/231*** *(2023.01)* ***H04W 72/04*** *(2023.01)*
***H04L 27/26*** *(2006.01)* ***H04W 72/12*** *(2023.01)*
***H04B 7/0413*** *(2017.01)*

(52) Cooperative Patent Classification (CPC):
**H04B 7/0413; H04L 5/00; H04L 27/26; H04W 72/04; H04W 72/12; H04W 72/231; H04W 72/232**

(86) International application number:
**PCT/KR2023/019715**

(87) International publication number:
**WO 2024/237412 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2023 KR 20230061999**
**03.11.2023 KR 20230150844**

(71) Applicant: **Samsung Electronics Co., Ltd.**
**Suwon-si, Gyeonggi-do 16677 (KR)**

(72) Inventors:
- **JUNG, Euichang**
  **Suwon-si, Gyeonggi-do 16677 (KR)**
- **JANG, Youngrok**
  **Suwon-si, Gyeonggi-do 16677 (KR)**
- **MYUNG, Seho**
  **Suwon-si, Gyeonggi-do 16677 (KR)**

(74) Representative: **Nederlandsch Octrooibureau**
**P.O. Box 29720**
**2502 LS The Hague (NL)**

(54) **METHOD AND DEVICE FOR TRANSMITTING AND RECEIVING SOUNDING REFERENCE SIGNAL IN COMMUNICATION SYSTEM**

(57) The present disclosure relates to a 5G or 6G communication system for supporting a higher data transmission rate. A method performed by a terminal in a communication system according to an embodiment may comprise the steps of: receiving information on sounding reference signal (SRS) resource configuration through higher layer signaling; receiving downlink control information (DCI) for scheduling a plurality of cells, wherein the DCI includes an SRS request field; identifying a plurality of SRS resources for the plurality of cells on the basis of the information on the SRS resource configuration and a code point of the SRS request field; and transmitting an SRS for the plurality of cells on the basis of the plurality of SRS resources.

EP 4 697 633 A1

FIG. 1

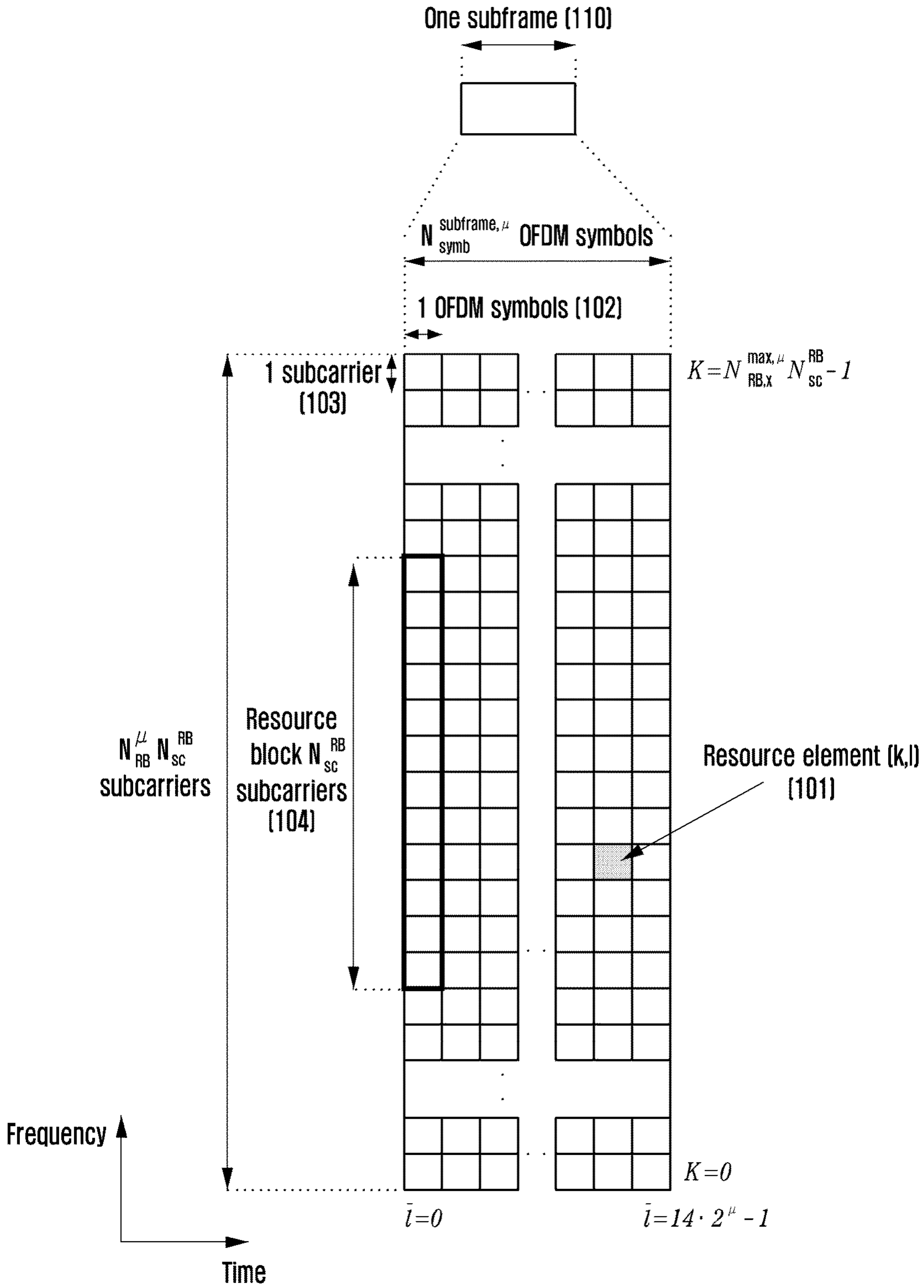
One subframe (110)
N subframe,μ symb OFDM symbols
1 OFDM symbols (102)
1 subcarrier (103)
K=N max,μ RB,x N RB sc - 1
Resource block N RB sc subcarriers (104)
N μ RB N RB sc subcarriers
Resource element (k,l) (101)
Frequency
Time
K=0
l=0
l=14·2μ-1

## Description

### [Technical Field]

The disclosure relates to the operation of a UE and a base station in a wireless communication system. Specifically, the disclosure relates to a method for determining a transmission configuration indicator for multi-cell scheduling in a wireless communication system and a device capable of performing the same. In addition, the disclosure relates to a method and device for transmitting and receiving a sounding reference signal (SRS) in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

An embodiment of the disclosure is to provide a device and a method capable of effectively providing services in a mobile communication system.

An embodiment of the disclosure provides a method and device for determining SRS resources when multi-cell or multi-carrier scheduling is applied in a communication system.

The technical subjects pursued in various embodiments of the disclosure may not be limited to the above-mentioned matters, and other technical subjects which are not mentioned herein may be considered by those skilled in the art from various embodiments of the disclosure to be described below.

**[Solution to Problem]**

According to an embodiment, there may be provided a method performed by a UE in a communication system.

According to an embodiment, the method may include receiving information on sounding reference signal (SRS) resource configuration through higher layer signaling.

According to an embodiment, the method may include receiving downlink control information (DCI) for scheduling a plurality of cells.

According to an embodiment, the DCI may include an SRS request field.

According to an embodiment, the method may include identifying a plurality of SRS resources for the plurality of cells, based on the information on the SRS resource configuration and a code point of the SRS request field.

According to an embodiment, the code point of the SRS request field may indicate a mapping relationship between one or more SRS resource sets included in the SRS resource configuration and the plurality of cells.

According to an embodiment, the SRS resource for each cell may be included in an SRS resource set corresponding to each cell.

According to an embodiment, the method may include transmitting an SRS for the plurality of cells, based on the plurality of SRS resources.

According to an embodiment, the SRS request field may have a size of 4 bits.

According to an embodiment, 2 most significant bits (MSBs) of the SRS request field may be associated with one or more cells among the plurality of cells.

According to an embodiment, 2 least significant bits (LSBs) of the SRS request field may be associated with one or more of the remaining cells, excluding the one or more cells, among the plurality of cells.

According to an embodiment, each index of the one or more cells associated with the 2 MSBs may be smaller than each index of the one or more cells associated with the 2 LSBs.

According to an embodiment, the maximum number of the plurality of cells may be 4.

According to an embodiment, the DCI may further include a 4-bit field indicating the plurality of cells.

According to an embodiment, the format of the DCI may be DCI format 0_3 or DCI format 1_3.

According to an embodiment, an information element (IE) for a size of the SRS request field may be received through the higher layer signaling.

According to an embodiment, the IE may be separately configured according to the format of the DCI.

According to an embodiment, in a case where a medium access control element (MAC CE) for updating the mapping relationship is received prior to receiving the DCI, the mapping relationship may be identified as having been updated by the MAC CE.

According to an embodiment, the MAC CE may include information corresponding to the plurality of cells and information indicating one or more SRS resource sets mapped to specific values of the code points of the SRS request field.

According to an embodiment, there may be provided a UE of a communication system.

According to an embodiment, the UE may include a transceiver, and one or more processors connected to the transceiver.

According to an embodiment, the processors may be configured to receive information on sounding reference signal (SRS) resource configuration through higher layer signaling.

According to an embodiment, the processors may be configured to receive downlink control information (DCI) for scheduling a plurality of cells.

According to an embodiment, the DCI may include an SRS request field.

According to an embodiment, the processors may be configured to identify a plurality of SRS resources for the plurality of cells, based on the information on the SRS resource configuration and a code point of the SRS request field.

According to an embodiment, the code point of the SRS request field may indicate a mapping relationship between one or more SRS resource sets included in the SRS resource configuration and the plurality of cells.

According to an embodiment, the SRS resource for each cell may be included in an SRS resource set corresponding to each cell.

According to an embodiment, the processors may be configured to transmit an SRS for the plurality of cells, based on the plurality of SRS resources.

According to an embodiment, there may be provided a method performed by a base station in a communication system.

According to an embodiment, the method may include transmitting information on sounding reference signal (SRS) resource configuration through higher layer signaling.

According to an embodiment, the method may include transmitting downlink control information (DCI) for scheduling a plurality of cells.

According to an embodiment, the DCI may include an SRS request field.

According to an embodiment, the method may include transmitting an SRS for the plurality of cells, based on a plurality of SRS resources.

According to an embodiment, the plurality of SRS resources may be based on information on the SRS resource configuration and a code point of the SRS request field.

According to an embodiment, the code point of the SRS request field may indicate a mapping relationship between one or more SRS resource sets included in the SRS resource configuration and the plurality of cells.

According to an embodiment, the SRS resource for each cell may be included in an SRS resource set corresponding to each cell.

According to an embodiment, there may be provided a base station of a communication system.

According to an embodiment, the base station may include a transceiver, and one or more processors connected to the transceiver.

According to an embodiment, the processors may be configured to transmit information on sounding reference signal (SRS) resource configuration through higher layer signaling.

According to an embodiment, the processors may be configured to transmit downlink control information (DCI) for scheduling a plurality of cells.

According to an embodiment, the DCI may include an SRS request field.

According to an embodiment, the processors may be configured to transmit an SRS for the plurality of cells, based on a plurality of SRS resources.

According to an embodiment, the plurality of SRS resources may be based on information on the SRS resource configuration and a code point of the SRS request field.

According to an embodiment, the code point of the SRS request field may indicate a mapping relationship between one or more SRS resource sets included in the SRS resource configuration and the plurality of cells.

According to an embodiment, the SRS resource for each cell may be included in an SRS resource set corresponding to each cell.

The various embodiments of the disclosure described above merely represent some of the preferred embodiments of the disclosure, and it will be understood by those skilled in the art that various other embodiments reflecting the technical features of the disclosure may be derived and understood based on the following detailed description.

## [Advantageous Effects of Invention]

An embodiment of the disclosure provides a device and a method capable of effectively providing services in a mobile communication system.

An embodiment of the disclosure provides a method and device for determining SRS resources when multi-cell or multi-carrier scheduling is applied in a communication system.

Advantageous effects obtainable from various embodiments of the disclosure may not be limited to the above-mentioned effects, and other effects which are not mentioned herein may be clearly derived and understood, based on the following description, by those skilled in the art to which the disclosure pertains.

## [Brief Description of Drawings]

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure;

FIG. 4 illustrates radio protocol structures of a base station and a UE in single cell, carrier aggregation, and dual connectivity situations in a wireless communication system according to an embodiment of the disclosure.

FIG. 5 illustrates an example of a control resource set configuration of a downlink control channel in a wireless communication system; according to an embodiment of the disclosure.

FIG. 6 illustrates a structure of a downlink control channel in a wireless communication system according to an embodiment of the disclosure.

FIG. 7 illustrates an example of a beam configuration with regard to a control resource set and a search space in a wireless communication system according to an embodiment of the disclosure.

FIG. 8 illustrates an example of frequency domain resource allocation with regard to a PDSCH or PUSCH in a wireless communication system according to an embodiment of the disclosure.

FIG. 9 illustrates a VRB-PRB interleaving scheme of a PDSCH during FDRA type-1 resource allocation according to an embodiment of the disclosure.

FIG. 10 illustrates an example of time domain resource allocation with regard to a PDSCH in a wireless communication system according to an embodiment of the disclosure.

FIG. 11 illustrates an example of MC-DCI including multiple FDRA fields according to an embodiment of the disclosure.

FIG. 12 illustrates an example of MC-DCI including at least one of a cell set indicator field, a scheduling cell indicator field, and multiple FDRA fields according to an embodiment of the disclosure.

FIG. 13 is a diagram illustrating an example of a field indicating frequency domain resource allocation information depending on the subcarrier spacing of a cell according to an embodiment of the disclosure.

FIG. 14 is a diagram illustrating an example of a field indicating multiple cells and an SRS request in MC-DCI according to an embodiment of the disclosure.

FIG. 15 is a diagram illustrating an example of a field indicating multiple cells and an SRS request in MC-DCI according to an embodiment of the disclosure.

FIG. 16 is a diagram illustrating an example of a MAC-CE message for indicating multiple cells and an SRS request in MC-DCI according to an embodiment of the disclosure.

FIG. 17 is a diagram illustrating the operation of a UE according to an embodiment of the disclosure.

FIG. 18 is a diagram illustrating the operation of a base station according to an embodiment of the disclosure.

FIG. 19 is a diagram illustrating the operation of a UE according to an embodiment of the disclosure.

FIG. 20 is a diagram illustrating the operation of a base station according to an embodiment of the disclosure.

FIG. 21 illustrates a structure of a UE in a wireless communication system according to an embodiment of the disclosure.

FIG. 22 illustrates a structure of a base station in a wireless communication system according to an embodiment of the disclosure.

**[Mode for the Invention]**

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/$km^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, the term "a/b" may be understood as at least one of a and b.

[NR time-frequency resources]

Hereinafter, a frame structure of a 5G system will be described in more detail with reference to the accompanying drawings.

FIG. 1 illustrates a basic structure of a time-frequency domain, which is a radio resource domain used to transmit data or control channels, in a 5G system.

The horizontal axis in FIG. 1 represents a time domain, and the vertical axis in FIG. 1 represents a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1ms.

FIG. 2 illustrates a structure of a frame, a subframe, and a slot in a wireless communication system according to an embodiment of the disclosure.

FIG. 2 illustrates an example of a structure of a frame 200, a subframe 201, and a slot 202. One frame 200 may be defined as 10ms. One subframe 201 may be defined as 1ms, and thus one frame 200 may include a total often subframes 201. One slot 202 or 203 may be defined as 14 OFDM symbols (that is, the number of symbols per one slot $N_{symb}^{slot}=14$ ). One subframe 201 may include one or multiple slots 202 and 203, and the number of slots 202 and 203per one subframe 201 may vary depending on configuration values μ 204 or 205 for the subcarrier spacing. The example of FIG. 2 shows the case of μ=0 (204) and the case of μ=1 (205) as a configuration value for a subcarrier spacing. In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be

defined according to each subcarrier spacing configuration μ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

FIG. 3 illustrates an example of a bandwidth part configuration in a wireless communication system according to an embodiment of the disclosure;

FIG. 3 illustrates an example in which a UE bandwidth 300 is configured to include two bandwidth parts, that is, bandwidth part #1 (BWP#1) 301 and bandwidth part #2(BWP#2) 302. A base station may configure one or multiple bandwidth parts for a UE, and may configure the following pieces of information with regard to each bandwidth part as given in Table 2 below.

[Table 2]

```
P ::=                          SEQUENCE {
 bwp-Id                            BWP-Id,
(bandwidth part identifier)
 locationAndBandwidth              INTEGER (1..65536),
 (bandwidth part location)
 subcarrierSpacing                 ENUMERATED {n0, n1, n2, n3, n4, n5},
 (subcarrier spacing)
 cyclicPrefix                      ENUMERATED { extended }
 (cyclic prefix)
 }
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource region #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (i.e., CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. For example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside the received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in Table 3 below, for example.

[Table 3]

| $\mu$ | **NR Slot length (ms)** | **BWP switch delay $T_{BWP}$ (slots)** | |
|---|---|---|---|
| | | **Type 1[Note 1]** | **Type 2[Note 1]** |
| 0 | 1 | 1 | 3 |
| 1 | 0.5 | 2 | 5 |
| 2 | 0.25 | 3 | 9 |
| 3 | 0.125 | 6 | 18 |

(continued)

| $\mu$ | NR Slot length (ms) | BWP switch delay $T_{BWP}$ (slots) | |
|---|---|---|---|
| | | Type 1[Note 1] | Type 2[Note 1] |
| Note 1: Depends on UE capability.<br>Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+$T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[Regarding CA/DC]

FIG. 4 illustrates radio protocol structures of a base station and a UE in single cell, carrier aggregation, and dual connectivity situations according to an embodiment of the disclosure.

Referring to FIG. 4, a radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access control (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: robust header compression (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

The above-mentioned reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

The above-mentioned in-sequence delivery of the NR RLC device refers to a function of delivering RLC SDUs, received from the lower layer, to the upper layer in sequence. The in-sequence delivery of the NR RLC device may include at least one of a function of, if one original RLC SDU is segmented into multiple RLC SDUs and the segmented RLC SDUs are received, reassembling the RLC SDUs and delivering the reassembled RLC SDUs, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, and a function of requesting retransmission of the lost RLC PDUs. The in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all RLC SDUs received until now to the upper layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

The out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

[PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| |
|---|
| - Identifier for DCI formats – [1] bit |
| - Frequency domain resource assignment – [ $\lceil \log_2(N_{RB}^{UL,BWP}(N_{RB}^{UL,BWP}+1)/2) \rceil$ ] bits |
| - Time domain resource assignment – X bits |
| - Frequency hopping flag – 1 bit. |
| - Modulation and coding scheme – 5 bits |
| - New data indicator – 1 bit |
| - Redundancy version – 2 bits |
| - HARQ process number – 4 bits |
| - Transmit power control (TPC) command for scheduled PUSCH – [2] bits |
| - Uplink/ supplementary uplink (UL/SUL) indicator – 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

| |
|---|
| - Carrier indicator – 0 or 3 bits |
| - UL/SUL indicator – 0 or 1 bit |
| - Identifier for DCI formats – [1] bits |
| - Bandwidth part indicator – 0, 1 or 2 bits |
| - Frequency domain resource assignment |
| * For resource allocation type 0, $\lceil N_{RB}^{UL,BWP} / P \rceil$ bits |
| * For resource allocation type 1, $\lceil \log_2(N_{RB}^{UL,BWP}(N_{RB}^{UL,BWP}+1)/2) \rceil$ bits |
| - Time domain resource assignment –1, 2, 3, or 4 bits |
| - Virtual resource block (VRB)-to-physical resource block (PRB) mapping – 0 or 1 bit, only for resource allocation type 1. |
| * 0 bit if only resource allocation type 0 is configured; |
| * 1 bit otherwise. |

- Frequency hopping flag – 0 or 1 bit, only for resource allocation type 1.

* 0 bit if only resource allocation type 0 is configured;

* 1 bit otherwise.

- Modulation and coding scheme – 5 bits
- New data indicator – 1 bit
- Redundancy version – 2 bits
- HARQ process number – 4 bits
- 1st downlink assignment index– 1 or 2 bits

* 1 bit for semi-static HARQ-ACK codebook;

* 2 bits for dynamic HARQ-ACK codebook with single HARQ-ACK codebook.

- 2nd downlink assignment index – 0 or 2 bits

* 2 bits for dynamic HARQ-ACK codebook with two HARQ-ACK sub-codebooks;

* 0 bit otherwise.

- TPC command for scheduled PUSCH – 2 bits
- SRS resource indicator – $\left\lceil \log_2\left(\sum_{k=1}^{L_{\max}} \binom{N_{SRS}}{k}\right)\right\rceil$ or $\lceil \log_2(N_{SRS}) \rceil$ bits

* $\left\lceil \log_2\left(\sum_{k=1}^{L_{\max}} \binom{N_{SRS}}{k}\right)\right\rceil$ bits for non-codebook based PUSCH transmission;

* $\lceil \log_2(N_{SRS}) \rceil$ bits for codebook based PUSCH transmission.

- Precoding information and number of layers – up to 6 bits
- Antenna ports – up to 5 bits
- SRS request – 2 bits
- Channel state information (CSI) request – 0, 1, 2, 3, 4, 5, or 6 bits
- Code block group (CBG) transmission information – 0, 2, 4, 6, or 8 bits
- Phase tracking reference signal (PTRS)-demodulation reference signal (DMRS) association – 0 or 2 bits.
- beta_offset indicator – 0 or 2 bits
- DMRS sequence initialization – 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

| |
|---|
| - Identifier for DCI formats – [1] bit |
| - Frequency domain resource assignment – [$\lceil \log_2(N_{RB}^{DL,BWP}(N_{RB}^{DL,BWP}+1)/2) \rceil$ ] bits |
| - Time domain resource assignment – X bits |
| - VRB-to-PRB mapping – 1 bit. |
| - Modulation and coding scheme – 5 bits |
| - New data indicator – 1 bit |
| - Redundancy version – 2 bits |
| - HARQ process number – 4 bits |
| - Downlink assignment index – 2 bits |
| - TPC command for scheduled PUCCH – [2] bits |
| - Physical uplink control channel (PUCCH) resource indicator – 3 bits |
| - PDSCH-to-HARQ feedback timing indicator – [3] bits |

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

| |
|---|
| - Carrier indicator – 0 or 3 bits |
| - Identifier for DCI formats – [1] bits |
| - Bandwidth part indicator – 0, 1 or 2 bits |
| - Frequency domain resource assignment |
| * For resource allocation type 0, $\lceil N_{RB}^{DL,BWP}/P \rceil$ bits |

* For resource allocation type 1, $\lceil \log_2(N_{RB}^{DL,BWP}(N_{RB}^{DL,BWP}+1)/2) \rceil$ bits

- Time domain resource assignment –1, 2, 3, or 4 bits
- VRB-to-PRB mapping – 0 or 1 bit, only for resource allocation type 1.

* 0 bit if only resource allocation type 0 is configured;

* 1 bit otherwise.

- Physical resource block (PRB) bundling size indicator – 0 or 1 bit
- Rate matching indicator – 0, 1, or 2 bits
- Zero power (ZP) channel state information (CSI)-reference signal (RS) trigger – 0, 1, or 2 bits

For transport block 1:

- Modulation and coding scheme – 5 bits
- New data indicator – 1 bit
- Redundancy version – 2 bits

For transport block 2:

- Modulation and coding scheme – 5 bits
- New data indicator – 1 bit
- Redundancy version – 2 bits
- HARQ process number – 4 bits
- Downlink assignment index – 0 or 2 or 4 bits
- TPC command for scheduled PUCCH – 2 bits
- PUCCH resource indicator – 3 bits
- PDSCH-to-HARQ_feedback timing indicator – 3 bits
- Antenna ports – 4, 5 or 6 bits
- Transmission configuration indication – 0 or 3 bits
- SRS request – 2 bits
- CBG transmission information – 0, 2, 4, 6, or 8 bits
- CBG flushing out information – 0 or 1 bit
- DMRS sequence initialization – 1 bit

[PDCCH: CORESET, REG, CCE, and Search Space]

Hereinafter, a downlink control channel in a 5G communication system will be described in more detail with reference to the accompanying drawings.

FIG. 5 illustrates an example of a control resource set (CORESET) used to transmit a downlink control channel in a 5G wireless communication system. FIG. 5 illustrates an example in which a UE bandwidth part 510 is configured along the frequency axis, and two control resource sets (control resource set #1 501 and control resource set #2 502) are configured within one slot 520 along the time axis. The control resource sets 501 and 502 may be configured in a specific frequency resource 510 within the entire UE bandwidth part 503 along the frequency domain. The control resource sets 501 and 502 may be each configured as one or multiple OFDM symbols along the time domain, and the number of the OFDM symbols may be defined as a control resource set duration 504. Referring to the example illustrated in FIG. 5, control resource set #1 501 is configured to have a control resource set duration corresponding to two symbols, and control resource set #2 502 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, the configuration information may include the following pieces of information given in Table 8.

[Table 8]

```
trolResourceSet ::=                    SEQUENCE {
 -- Corresponds to L1 parameter 'CORESET-ID'

 controlResourceSetId                  ControlResourceSetId,
(control resource set identity))
 frequencyDomainResources               BIT STRING (SIZE (45)),
(frequency domain resource assignment information)
 duration                              INTEGER (1..maxCoReSetDuration),
(time domain resource assignment information )
 cce-REG-MappingType                        CHOICE {
```

```
(CCE-to-REG mapping scheme)
    interleaved                         SEQUENCE {
        reg-BundleSize                      ENUMERATED {n2, n3, n6},
    (REG bundle size)
        precoderGranularity                 ENUMERATED {sameAsREG-
bundle, allContiguousRBs},
        interleaverSize                     ENUMERATED {n2, n3, n6}
        (interleaver size)
        shiftIndex            INTEGER(0..maxNrofPhysicalResourceBlocks-1)
    OPTIONAL
      (interleaver shift)
   },
nonInterleaved                          NULL
},
tci-StatesPDCCH                     SEQUENCE(SIZE        (1..maxNrofTCI-
StatesPDCCH)) OF TCI-StateId                OPTIONAL,
(QCL configuration information)
tci-PresentInDCI                    ENUMERATED {enabled}
    OPTIONAL,    -- Need S
}
```

In Table 8, tci-StatesPDCCH(simply referred to as transmission configuration indication (TCI) state) configuration information may include information of one or multiple SS/PBCH block indexes or channel state information reference signal (CSI-RS) indexes, which are quasi-co-located (QCLed) with a DMRS transmitted in a corresponding control resource set. FIG. 6 illustrates an example of a basic unit of time and frequency resources constituting a downlink control channel available in 5G. According to FIG. 6, the basic unit of time and frequency resources constituting a control channel may be referred to as a resource element group (REG) 603, and the REG 603 may be defined by one OFDM symbol 601 along the time axis and one physical resource block (PRB) 602, that is, 12 subcarriers, along the frequency axis. The base station may configure a downlink control channel allocation unit by concatenating the REGs 603.

Provided that the basic unit of downlink control channel allocation in 5G is a control channel element 604 as illustrated in FIG. 6, one CCE 604 may include multiple REGs 603. To describe the REG 603 illustrated in FIG .6, for example, the REG 602 may include 12 REs, and if one CCE 604 includes six REGs 603, one CCE 604 may then include 72 REs. A downlink control resource set, once configured, may include multiple CCEs 604, and a specific downlink control channel may be mapped to one or multiple CCEs 604 and then transmitted according to the aggregation level (AL) in the control resource set. The CCEs 604 in the control resource set are distinguished by numbers, and the numbers of CCEs 604 may be allocated according to a logical mapping scheme.

The basic unit of the downlink control channel illustrated in FIG. 6, that is, the REG 603, may include both REs to which DCI is mapped, and an area to which a reference signal (DMRS) 605 for decoding the same is mapped. As in FIG. 6, three DMRSs 605 may be transmitted in one REG 603. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, the following pieces of information given in Table 9 may be included.

[Table 9]

| |
|---|
| rchSpace ::= SEQUENCE { |
| -- Identity of the search space. SearchSpaceId = 0 identifies the SearchSpace configured via PBCH (MIB) or ServingCellConfigCommon. |
| searchSpaceId SearchSpaceId, |
| (search space identity) |
| controlResourceSetId ControlResourceSetId, |
| (control resource set identity) |
| monitoringSlotPeriodicityAndOffset CHOICE { |
| (monitoring slot level periodicity) |
| sl1 NULL, |
| sl2 INTEGER (0..1), |
| sl4 INTEGER (0..3), |
| sl5 INTEGER (0..4), |

```
    sl8                                   INTEGER (0..7),
    sl10                                  INTEGER (0..9),
    sl16                                  INTEGER (0..15),
    sl20                                  INTEGER (0..19)
}
    OPTIONAL,
duration(monitoring duration)                INTEGER (2..2559)
monitoringSymbolsWithinSlot                BIT STRING (SIZE (14))
    OPTIONAL,
(monitoring symbols within slot)
nrofCandidates                        SEQUENCE {
(number of PDCCH candidates for each aggregation level)
    aggregationLevel1                     ENUMERATED {n0, n1, n2, n3, n4, n5, n6, n8},
    aggregationLevel2                     ENUMERATED {n0, n1, n2, n3, n4, n5, n6, n8},
    aggregationLevel4                     ENUMERATED {n0, n1, n2, n3, n4, n5, n6, n8},
    aggregationLevel8                     ENUMERATED {n0, n1, n2, n3, n4, n5, n6, n8},
    aggregationLevel16                    ENUMERATED {n0, n1, n2, n3, n4, n5, n6, n8}
},

searchSpaceType                           CHOICE {
(search space type)
    -- Configures this search space as common search space (CSS) and DCI formats to monitor.
    common                                    SEQUENCE {
(common search space)
  }
    ue-Specific                           SEQUENCE {
```

```
(UE-specific search space)
        -- Indicates whether the UE monitors in this USS for DCI formats 0-0 and
1-0 or for formats 0-1 and 1-1.
        formats                              ENUMERATED {formats0-0-And-
1-0, formats0-1-And-1-1},
        ...
              }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

- Cell RNTI (C-RNTI): used to schedule a UE-specific PDSCH
- Temporary cell RNTI (TC-RNTI): used to schedule a UE-specific PDSCH
- Configured scheduling RNTI (CS-RNTI): used to schedule a semi-statically configured UE-specific PDSCH
- Random access RNTI(RA-RNTI): used to schedule a PDSCH in a random access step
- Paging RNTI (P-RNTI): used to schedule a PDSCH in which paging is transmitted
- System information RNTI (SI-RNTI): used to schedule a PDSCH in which system information is transmitted
- Interruption RNTI(INT-RNTI): used to indicate whether a PDSCH is punctured
- Transmit power control for PUSCH RNTI (TPC-PUSCH-RNTI): used to indicate a power control command regarding a PUSCH
- Transmit power control for PUCCH RNTI (TPC-PUCCH-RNTI): used to indicate a power control command regarding a PUCCH
- Transmit power control for SRS RNTI (TPC-SRS-RNTI): used to indicate a power control command regarding an SRS

The DCI formats enumerated above may follow the definitions given in Table 10 below.

[Table 10]

| DCI format | Usage |
|---|---|
| 0_0 | Scheduling of PUSCH in one cell |

(continued)

| DCI format | Usage |
|---|---|
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below:

[Equation 1]

$$L \cdot \left\{\left(Y_{p,n^{\mu}_{s,f}} + \left\lfloor \frac{m_{s,n_{CI}} \cdot N_{CCE,p}}{L \cdot M^{(L)}_{s,max}} \right\rfloor + n_{CI}\right) mod \left\lfloor \frac{N_{CCE,p}}{L} \right\rfloor\right\} + i$$

- $L$: aggregation level
- $n_{CI}$: carrier index
- $N_{CCE,p}$: total number of CCEs existing in control resource set $p$
- $n^{\mu}_{s,f}$ : slot index
- $M^{(L)}_{s,max}$ : number of PDCCH candidates at aggregation level L
- $m_{s,n_{CI}} = 0, \ldots, M^{(L)}_{s,max}$ -1 : PDCCH candidate index at aggregation level L
- $i = 0, \ldots, L-1$
- $Y_{p,n^{\mu}_{s,f}} = \left(A_p \cdot Y_{p,n^{\mu}_{s,f}-1}\right) mod\ D$ , $Y_{p,-1} = n_{RNTI} = 0$ , $A_p = 39827$ *for pmod3* = 0, $A_p = 39829$ *for pmod3* = *1* , $A_p$ = 39839 *for pmod3* = 2, D = 65537
- $n_{RNTI}$: UE identity

The $Y_{p,n^{\mu}_{s,f}}$ value may correspond to 0 in the case of a common search space.

The $Y_{p,n^{\mu}_{s,f}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

FIG. 7 illustrates an example of a beam configuration with regard to a control resource set and a search space in a wireless communication system according to an embodiment of the disclosure.

Referring to FIG. 7, the base station may indicate one of TCI state lists included in CORESET 700 configuration through MAC CE signaling (705). Until a different TCI state is indicated for the corresponding CORESET through different MAC CE signaling, the UE may consider that identical QCL information (beam #1) 705 is all applied to one or more search spaces 710, 715, and 720 connected to the CORESET. The above-described PDCCH beam allocation method may have a problem in that it is difficult to indicate a beam change faster than MAC CE signaling delay, and the same beam is unilaterally applied to each CORESET regardless of search space characteristics, thereby making flexible PDCCH beam operation difficult. Following embodiments of the disclosure provide more flexible PDCCH beam configuration and operation methods. Although multiple distinctive examples will be provided for convenience of description of embodiments of the disclosure, they are not mutually exclusive, and can be combined and applied appropriately for each situation.

The base station may configure one or multiple TCI states for the UE with regard to a specific control resource set, and may activate one of the configured TCI states through a MAC CE activation command. For example, if {TCI state#0, TCI state#1, TCI state#2} are configured as TCI states for control resource set #1, the base station may transmit an activation command to the UE through a MAC CE such that TCI state#0 is assumed as the TCI state regarding control resource set #1. Based on the activation command regarding the TCI state received through the MAC CE, the UE may correctly receive the DMRS of the corresponding CORESET, based on QCL information in the activated TCI state.

With regard to a CORESET having a configured index of 0 (CORESET #0), if the UE has failed to receive a MAC CE activation command regarding the TCI state of CORESET #0, the UE may assume that the DMRS transmitted in CORESET #0has been QCL-ed with a SS/PBCH block identified in the initial access process,or in a non-contention-based random access process not triggered by a PDCCH command.

With regard to a CORESET having a configured index value other than 0 (CORESET #X), if the UE has no TCI state configured regarding CORESET #X, or if the UE has one or more TCI states configured therefor but has failed to receive a MAC CE activation command for activating one thereof, the UE may assume that the DMRS transmitted in CORESET #X has been QCL-ed with a SS/PBCH block identified in the initial access process.

[PDSCH/PUSCH: regarding frequency resource allocation]

Next, frequency domain resource assignment (FDRA) for a physical downlink shared channel (PDSCH) and a physical uplink shared channel (PUSCH) in NR will be described.

FIG. 8 illustrates an example of frequency domain resource allocation with regard to a PDSCH or PUSCH in a wireless communication system according to an embodiment of the disclosure.

FIG. 8 illustrates three frequency domain resource assignment methods of FDRA type 0 800, FDRA type 1 805, and dynamic switch 810, which are configurable through a higher layer in an NR wireless communication system.

Referring to FIG. 8, in case that a UE is configured to use only FDRA Type 0 through higher-layer signaling (800), partial downlink control information (DCI) for scheduling a PDSCH or a PUSCH for the UE includes a bitmap configured by $N_{RBG}$ bits. The conditions for this will be described again later. As used herein, $N_{RBG}$ refers to the number of resource block groups (RBGs) determined according to the size of the bandwidth part indicated by the bandwidth part indicator and higher layer parameter rbg-Size, as in Table 11 below, and data is transmitted in the RBG marked as 1 by the bitmap.

[Table 11]

| Bandwidth Part Size | Configuration 1 | Configuration 2 |
|---|---|---|
| 1-36 | 2 | 4 |
| 37-72 | 4 | 8 |
| 73-144 | 8 | 16 |
| 145-275 | 16 | 16 |

The size of the frequency resource of a bandwidth part may be defined as the number of RBs that the bandwidth part includes. More specifically, in case that FDRA Type-0 resource allocation is indicated to a UE, the length of the FDRA field of the DCI received by the UE is equal to the number of RBGs ($N_{RBG}$) within the bandwidth part, and $N_{RBG} = \lceil (N_{BWP}^{size} + (N_{BWP}^{start} \; mod \; P))/P \rceil$. The first RBG in the bandwidth part includes as many RBs as $\mathrm{RBG}_0^{\mathrm{size}} = \mathrm{P} - \mathrm{N}_{\mathrm{BWP}}^{\mathrm{size}} \; mod \; P$, and the last RBG in the bandwidth part includes as many RBs as $\mathrm{RBG}_{last}^{\mathrm{size}} = (\mathrm{N}_{\mathrm{BWP}}^{\mathrm{start}} + \mathrm{N}_{\mathrm{BWP}}^{\mathrm{size}}) mod \; P$ if $(\mathrm{N}_{\mathrm{BWP}}^{\mathrm{start}} + \mathrm{N}_{\mathrm{BWP}}^{\mathrm{size}}) mod \; P > 0$, and includes as many RBs as $\mathrm{RBG}_{last}^{\mathrm{size}} = \mathrm{P}$ otherwise. The other RBGs within the bandwidth part include P RBs. Here, P is the number of nominal RBGs determined according to Table 11 above.

In case that the UE is configured to use only FDRA Type 1 through higher-layer signaling (805), the DCI for allocating a PDSCH or a PUSCH to the UE includes frequency domain resource allocation (FDRA) information configured by as many bits as $\lceil \log_2(N_{RB}^{BWP} * (N_{RB}^{BWP} + 1)/2 \rceil$. Here, $N_{RB}^{BWP}$ refers to the number of RBs included in the bandwidth part. The base station may thereby configure a starting VRB 820 and the length 825 of a frequency domain resource allocated continuously therefrom.

If the UE is not configured with the higher layer signaling vrb-ToPRB-Interleaver, the UE may associate the resources allocated to the VRBs to the PRBs without interleaving. If the UE is configured with the higher layer signaling vrb-ToPRB-Interleaver, the higher layer signaling has a value of 2 or 4, which may be multiple RB units for performing interleaving. That is, RB bundles of 2 or 4 units may be used for interleaving.

If the $i^{th}$ BWP starting from position $N_{BWP,i}^{start}$ and having a length corresponding to as many RBs as $N_{BWP,i}^{size}$ is configured for the UE and the vrb-ToPRB-Interleaver is configure to be $L_i$, the UE may divide the $i^{th}$ BWP into as many RB bundles as $N_{bundle} = \left\lceil \left( N_{BWP,i}^{size} + \left( N_{BWP,i}^{start} \bmod L_i \right) \right) / L_i \right\rceil$, and each RB bundle may be configured by as many RBs as $L_i$.

- In the $i^{th}$ BWP, the first RB bundle may be configured by as many RBs as $L_i - \left( N_{BWP,i}^{size} \bmod L_i \right)$.
- In the $i^{th}$ BWP, the last RB bundle may be configured by as many RBs as $\left( N_{BWP,i}^{start} + N_{BWP,i}^{size} \right) \bmod L_i$ if the value of $\left( N_{BWP,i}^{start} + N_{BWP,i}^{size} \right) \bmod L_i$ is greater than 0, and may be configured by as many RBs as $L_i$ otherwise.
- In the $i^{th}$ BWP, the other RB bundles may be configured by as many RBs as $L_i$.

Here, the VRBs may be connected to the PRBs according to the following method.

- The last VRB bundle may be connected to the last PRB bundle.
- The $j^{th}$ (j = 0, 1, ..., $N_{bundle}$ - 2) VRB bundle may be connected to the $f(j)^{th}$ PRB bundle, and $f(j)$ may be expressed as given in Equation 2 below.

[Equation 2]

$$f(j) = rC + c$$

$$j = cR + r$$

$$r = 0, 1, \ldots, R - 1$$

$$c = 0, 1, \ldots, C - 1$$

$$R = 2$$

$$C = \lfloor N_{bundle}/R \rfloor$$

FIG. 9 illustrates a VRB-PRB interleaving scheme of a PDSCH during FDRA type-1 resource allocation according to an embodiment of the disclosure. FIG. 9 illustrates a case 910 where the first and last VRB bundles are configured by 1 VRB in a BWP including 10 RBs (indicated by reference numeral 900). Accordingly, the number of VRB bundles, $N_{bundle}$, may be 6, and $C = \lfloor N_{bundle}/R \rfloor = 3$ may be calculated by Equation 2 above. Therefore, since the $j$th VRB bundle may be connected to the $f(j)$th PRB bundle according to Equation 2 above, the connection from the VRB bundle to the PRB bundle may be performed through the result 930 calculated by Equation 2 above as indicated by reference numeral 920. For example, VRB bundle 1 940 may be connected to PRB bundle 3 950.

Referring again to FIG. 8, if the UE is configured to use both FDRA type-0 resource allocation and FDRA type-1 resource allocation through higher layer signaling (810), partial DCI for allocating a PDSCH/PUSCH to the corresponding UE includes frequency domain resource allocation information including as many bits as the larger value 835 among the payload 815 for configuring FDRA type-0 resource allocation and the payload 820 and 825 for configuring FDRA type-1 resource allocation. The conditions for this will be described again later. One bit may be added to the foremost part (MSB) of the frequency domain resource allocation information within the DCI, the bit having a value of "0" may indicate use of FDRA type-0 resource allocationtype-0, and the bit having a value of "1" may indicate use of FDRA type-1 resource allocation.

If an FDRA type-2 resource allocation method is configured for the UE through higher layer signaling, the FDRA type-2 resource allocation method may be indicated to the UE from the base station according to the following method.
The UE may receive indication of M interlace index sets as RB allocation information from the base station.
The interlace index m ∈ {0,1, ..., M - 1} may be configured by common RBs {*m, M* + m, 2M + m, 3M + m, ... }, and *M* may be defined as in Table 12.

[Table 12]

| $\mu$ | M |
|---|---|
| 0 | 10 |
| 1 | 5 |

The relationship of RB $n^{\mu}_{\mathrm{IRB},m} \in \{0,1,\ldots\}$ in interlace *m* and bandwidth part *i* and the common RB $n^{\mu}_{\mathrm{CRB}}$ may be defined as follows.

■ $n^{\mu}_{\mathrm{CRB}} = Mn^{\mu}_{\mathrm{IRB},m} + N^{\mathrm{start},\mu}_{\mathrm{BWP},i} + \left(\left(m - N^{\mathrm{start},\mu}_{\mathrm{BWP},i}\right) \bmod M\right)$

■ where $N^{\mathrm{start},\mu}_{\mathrm{BWP},i}$ is the common resource block where bandwidth part starts relative to common resource block 0. $\mu$ is subcarrier spacing index.

If the subcarrier spacing is 15kHz ($\mu$=0), the base station may notify the UE of the RB allocation information for the interlace set with (m0 + 1) indexes. In addition, the resource assignment field may be configured by a resource indication value (RIV). If the RIV is $0 \le RIV < M(M+1)/2$, $l = 0,1,\cdots L-1$, the same may be configured by the starting interlace $m_0$ and the number $L$( $L \ge 1$ ) of continuous interlaces, and the value is as follows.

$$\text{if } (L-1) \le \lfloor M/2 \rfloor \text{ then}$$

$$RIV = M(L-1) + m_0$$

$$\text{else}$$

$$RIV = M(M-L+1) + (M-1-m_0)$$

If the RIV is $RIV \ge M(M+1)/2$, the RIV is configured by the starting interlace index $m_0$ and *l* values, and may be configured as in Table 13.

[Table 13]

| ***RIV* - *M*(*M* + 1)/2** | m0 | *l* |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

If the subcarrier spacing is 30kHz ($\mu$=1), the base station may notify the UE of the RB allocation information in the form of a bitmap indicating the interlaces allocated to the UE. The size of the bitmap is M, and each 1 bit of the bitmap corresponds to an interlace. The sequence of the interlace bitmap may be such that interlace indexes 0 to M-1 are mapped from an MSB to an LSB.

In addition, with regard to 15kHz and 30kHz, the least significant bit (LSB) $Y = \left\lceil log2 \frac{N_{RB-set}^{BWP}(N_{RB-set}^{BWP}+1)}{2} \right\rceil$ of the FDRA field may refer to consecutive RB sets scheduled by DCI format 0_1. The Y bit may be configured by a resource indication value ($RIV_{RBset}$). In $0 \le RIV_{RBset} < N_{RB-set}^{BWP}(N_{RB-set}^{BWP}+1)/2$ , $l$ = 0,1,··· $L_{RBset}$ - 1, the $RIV_{RBset}$ value may be determined by the starting RB set ($RBset_{START}$) and the number ($L_{RBset}$ ($L_{RBset} \geq 1$)) of consecutive RB sets. The $RIV_{RBset}$ value may be defined as follows.

$$\text{if } (L_{RBset} - 1) \le \lfloor N_{RB-set}^{BWP}/2 \rfloor \text{ then}$$

$$RIV_{RBset} = N_{RB-set}^{BWP}(L_{RBset} - 1) + RBset_{\mathrm{START}}$$

$$\text{else}$$

$$RIV_{RBset} = N_{RB-set}^{BWP}(N_{RB-set}^{BWP} - L_{RBset} + 1) + (N_{RB-set}^{BWP} - 1 - RBset_{\mathrm{START}})$$

$N_{RB-set}^{BWP}$ refers to the number of RB sets included in the bandwidth part, and may be determined by the number of guard gaps (or bands) within the carrier configured by higher-layer signaling (or preconfigured).

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter labeled K2), information regarding the location and length of the start symbol by which a PDSCH or PUSCH is scheduled inside a slot, the mapping type of a PDSCH or PUSCH, and the like. For example, information such as in Table 14 or Table 15 below may be transmitted from the base station to the UE.

[Table 14]

| |
|---|
| ***PDSCH-TimeDomainResourceAllocationList information element*** |
| PDSCH-TimeDomainResourceAllocationList ::= SEQUENCE (SIZE(1..maxNrofDL-Allocations)) OF PDSCH-TimeDomainResourceAllocation |
| PDSCH-TimeDomainResourceAllocation ::= SEQUENCE { |
| k0 INTEGER(0..32) OPTIONAL, -- Need S |
| (PDCCH-to-PDSCH timing, slot unit) |
| mappingType ENUMERATED {typeA, typeB}, |
| (PDSCH mapping type) |
| startSymbolAndLength INTEGER (0..127) |
| (start symbol and length of PDSCH) |
| } |

[Table 15]

| |
|---|
| ***PUSCH-TimeDomainResourceAllocation information element*** |
| PUSCH-TimeDomainResourceAllocationList ::= SEQUENCE (SIZE(1..maxNrofUL-Allocations)) OF PUSCH-TimeDomainResourceAllocation |
| PUSCH-TimeDomainResourceAllocation ::= SEQUENCE { |
| k2 INTEGER(0..32) OPTIONAL, -- Need S |
| (PDCCH-to-PUSCH timing, slot unit) |
| mappingType ENUMERATED {typeA, typeB}, |
| (PUSCH mapping type) |
| startSymbolAndLength INTEGER (0..127) |
| (start symbol and length of PUSCH) |
| } |

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

FIG. 10 illustrates an example of time domain resource allocation with regard to a PDSCH in a wireless communication system according to an embodiment of the disclosure.

Referring to FIG. 10, the base station may indicate the time domain location of a PDSCH resource according to the subcarrier spacing (SCS) ($\mu_{PDSCH}$, $\mu_{PDCCH}$) of a data channel and a control channel configured by using a higher layer, the scheduling offset (K0) value, and the OFDM symbol start location 1000 and length 1005 within one slot dynamically indicated through DCI.

[Regarding SRS]

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange upper signaling information as follows, in order to transfer information regarding the SRS resource set.

- srs-ResourceSetId: An SRS resource set index
- srs-ResourceIdList: A set of SRS resource indices referred to by SRS resource sets
- resourceType: A time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of"beamManagement", "codebook", "nonCodebook", and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive upper layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. In addition, the individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through upper layer signaling including RRC signaling or MAC CE signaling, or L1 signaling (for example, DCI). For example, the base station may activate or deactivate periodic SRS transmission for the UE through upper layer signaling. The base station may indicate activation of an SRS resource set having resource Type configured as "periodic" through upper layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through upper layer signaling.

For example, the base station may activate or deactivate semi-persistent SRS transmission for the UE through upper layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through higher layer signaling.

For example, the base station may trigger aperiodic SRS transmission by the UE through DCI. The base station may indicate one of aperiodic SRS triggers (aperiodic SRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. In addition, the minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in consideration of the place of use of the SRS resource set including the transmitted SRS resource, the minimum time interval may be determined as N2 symbols, and if the place of use of the SRS resource set is configured as "nonCodebook" or "beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 16]

```
SRS-Resource ::=                         SEQUENCE {
    srs-ResourceId                           SRS-ResourceId,
    nrofSRS-Ports                                ENUMERATED {port1,
ports2, ports4},
    ptrs-PortIndex                             ENUMERATED {n0, n1 }
OPTIONAL,     -- Need R
    transmissionComb                          CHOICE {
        n2                                         SEQUENCE {
            combOffset-n2                              INTEGER (0..1),
            cyclicShift-n2                             INTEGER (0..7)
        },
        n4                                         SEQUENCE {
            combOffset-n4                              INTEGER (0..3),
            cyclicShift-n4                             INTEGER (0..11)
        }
    },
    resourceMapping                           SEQUENCE {
```

```
            startPosition                           INTEGER (0..5),
            nrofSymbols                             ENUMERATED {n1, n2, n4},
            repetitionFactor                        ENUMERATED {n1, n2, n4}
        },
        freqDomainPosition                          INTEGER (0..67),
        freqDomainShift                             INTEGER (0..268),
        freqHopping                                 SEQUENCE {
            c-SRS                                   INTEGER (0..63),
            b-SRS                                   INTEGER (0..3),
            b-hop                                   INTEGER (0..3)
        },
        groupOrSequenceHopping                      ENUMERATED { neither, groupHopping, sequenceHopping },
        resourceType                                CHOICE {
            aperiodic                               SEQUENCE {
                ...
            },
            semi-persistent                         SEQUENCE {
                periodicityAndOffset-sp             SRS-PeriodicityAndOffset,
                ...
            },
            periodic                                SEQUENCE {
                periodicityAndOffset-p              SRS-PeriodicityAndOffset,
                ...
            }
        },
        sequenceId                                  INTEGER (0..1023),
        spatialRelationInfo                         SRS-SpatialRelationInfo OPTIONAL,     -- Need R
        ...
}
```

Configuration information spatialRelationInfo in Table 16 above may be applied, with reference to one reference signal, to a beam used for SRS transmission corresponding to beam information of the corresponding reference signal. For example, configuration of spatialRelationInfo may include information as in Table 17 below.

[Table 17]

```
SRS-SpatialRelationInfo ::=         SEQUENCE {
```

```
    servingCellId                                            ServCellIndex
OPTIONAL,     -- Need S
    referenceSignal                          CHOICE {
        ssb-Index                                  SSB-Index,
        csi-RS-Index                               NZP-CSI-RS-ResourceId,
        srs                                        SEQUENCE {
            resourceId                                  SRS-ResourceId,
            uplinkBWP                                     BWP-Id
        }
    }
}
```

Referring to the above-described spatialRelationInfo configuration, an SS/PBCH block index, CSI-RS index, or SRS index may be configured as the index of a reference signal to be referred to in order to use beam information of a specific reference signal. Upper signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If upper signaling referenceSignal has a configured value of "ssb-Index", the UE may apply the reception beam which was used to receive the SS/PBCH block corresponding to ssb-Index as the transmission beam for the corresponding SRS transmission. If upper signaling referenceSignal has a configured value of "csi-RS-Index", the UE may apply the reception beam which was used to receive the CSI-RS corresponding to csi-RS-Index as the transmission beam for the corresponding SRS transmission. If upper signaling referenceSignal has a configured value of "srs", the UE may apply the reception beam which was used to transmit the SRS corresponding to srs as the transmission beam for the corresponding SRS transmission.

The SRS request field (e.g., 2 bits) indicated in DCI formats 0_1, 0_2, 1_1, 1_2, and 2_3 may indicate some of the resources configured in the triggered aperiodic SRS resource(s). For example, when the indication value of the SRS request included in the DCI information transmitted by the base station is 00, the UE may determine that the aperiodic SRS resource set has not been triggered. In addition, when the indication value of the SRS request included in the DCI information transmitted by the base station is 00, the UE may determine that the SRS resource set(s) associated with the aperiodic SRS resource set trigger is configured as 1, or that the aperiodicSRS-ResourceTriggeredList Set is configured as 1. Additionally, when the indication value of the SRS request included in the DCI information transmitted by the base station is 10, the UE may determine that the SRS resource set(s) associated with the aperiodic SRS resource set trigger is configured as 2, or that the aperiodicSRS-ResourceTriggeredList Set is configured as 2. In addition, when the indication value of the SRS request included in the DCI information transmitted by the base station is 11, the UE may determine that the SRS resource set(s) associated with the aperiodic SRS resource set trigger is configured as 3, or that the aperiodicSRS-ResourceTriggeredList Set is configured as 3.

[Regarding SRS Antenna Switching]

Hereinafter, SRSs for antenna switching will be described.

SRSs may be used to acquire downlink (DL) channel state information (CSI) (e.g., DL CSI acquisition). As a specific example, in a single-cell or multi-cell (e.g., carrier aggregation (CA)) scenario based on time division duplex (TDD), after scheduling SRS transmission to a user equipment (UE), a base station (BS) may measure the SRS transmitted from the UE. In this case, assuming DL/UL reciprocity, the base station may perform scheduling of DL signals/channels on the UE, based on the SRS measurement. At this time, in connection with SRS-based DL CSI acquisition, the usage of the SRS resource referenced in the SRS resource set may be configured as antenna switching.

For example, according to the standard (e.g., 3gpp TS38.214), the SRS usage may be configured for the base station and/or UE using higher layer parameters (e.g., the usage of the RRC parameter SRS-ResourceSet). Here, the SRS usage may be configured for beam management, codebook transmission, non-codebook transmission, antenna switching, and the like.

Hereinafter, the case where SRS transmission (i.e., transmission of SRS resources or SRS resource sets) is configured for antenna switching among the above usages will be described in detail.

For example, for a UE with partial reciprocity, SRS transmission based on antenna switching (i.e., transmission antenna switching) may be supported to obtain DLCSI through SRS transmission in situations such as TDD. When antenna switching is applied, the interval between SRS resources (and/or resources between SRS resources and PUSCH/PUCCH) for antenna switching of the UE may typically be approximately 15 μs. Considering this, a (minimum) guard period may be defined as shown in Table 18 below. Table 20 shows the minimum guard period according to numerology.

[Table 18]

| $\mu$ | $\Delta f = 2^{\mu} \cdot 15$ [kHz] | Y [symbol] |
|---|---|---|
| 0 | 15 | 1 |
| 1 | 30 | 1 |
| 2 | 60 | 1 |
| 3 | 120 | 2 |

In Table 18, μrepresents the numerology, Δf represents the subcarrier spacing, and Y represents the number of symbols in the guard period, i.e., the length of the guard period. Referring to Table 20, the guard period may be configured based on the parameter μ, which determines the numerology. In the guard period, the UE is configured not to transmit any other signals, and the guard period may be configured to be entirely used for antenna switching. For example, the guard period may be configured in consideration of SRS resources transmitted in the same slot. In particular, when the UE is configured and/or instructed to transmit an aperiodic SRS configured for intra-slot antenna switching, the UE may transmit the SRS using a different transmit antenna for each designated SRS resource, and the aforementioned guard period may be configured between the respective resources.

In addition, as described above, when the UE configured with an SRS resource and/or an SRS resource set configured for antenna switching via higher layer signaling, the UE may be configured to perform SRS transmission, based on a UE capability (UE capability) related to antenna switching. The UE may report capability information indicating whether it supports SRS antenna switching to the base station. The capability information may include a parameter indicating an SRS transmission port switching pattern supported by the UE. Here, the UE capability related to antenna switching reported by the parameter may be "1T2R," "2T4R," "1T4R," "1T4R/2T4R," "1T1R," "2T2R," "4T4R," etc. Here, "xTyR" may refer to a UE capability indicating that SRS transmission is possible on x antenna ports over y receive antennas.

For example, in the case of a UE that supports 1T2R, up to two SRS resource sets may be configured with different values for the resourceType of the higher layer parameter SRS-ResourceSet. Here, each SRS resource set may have two SRS resources transmitted in different symbols, and each SRS resource in a given SRS resource set may configure a single SRS port. In addition, the SRS port for the second SRS resource in the SRS resource set may be configured to be associated with a different UE antenna port from the SRS port for the first SRS resource in the same SRS resource set.

As another example, in the case of a UE that supports 2T4R, up to two SRS resource sets may be configured with different values for the resourceType of the higher layer parameter SRS-ResourceSet. Here, each SRS resource set may have two SRS resources transmitted in different symbols, and each SRS resource in a given SRS resource set may configure two SRS ports. Additionally, the SRS port pair for the second SRS resource in the SRS resource set may be configured to be associated with a different UE antenna port from the SRS port pair for the first SRS resource in the same SRS resource set.

As another example, in the case of a UE that supports 1T4R, SRS resource sets may be configured in different manners depending on whether SRS transmission is configured to be periodic, semi-persistent, and/or aperiodic. First, if SRS transmission is configured to be periodic or semi-persistent, zero or one SRS resource set, based on the resourceType of the higher layer parameter SRS-ResourceSet, may be configured to contain four SRS resources transmitted in different symbols. Here, each SRS resource in a given SRS resource set may constitute a single SRS port. In addition, the SRS ports for respective SRS resources may be configured to be associated with different UE antenna ports from each other. On the other hand, when the SRS transmission is configured to be aperiodic, zero or two SRS resource sets, configured based on the resourceType of the higher layer parameter SRS-ResourceSet, may include a total of four SRS resources transmitted in different symbols of two different slots. Here, the SRS ports for the respective SRS resources in the two given SRS resource sets may be configured to be associated with different UE antenna ports from each other. Each SRS resource set may include two SRS resources, or one SRS resource set may include one SRS resource and the other SRS resource set may include three SRS resources.

As another example, in the case of a UE that supports 1T1R, 2T2R, or 4T4R, up to two SRS resource sets, each including one SRS resource, may be configured for SRS transmission. The number of SRS ports for each SRS resource may be set to 1, 2, or 4.

When the indicated UE capability is 1T4R/2T4R, the UE may expect that the same number of SRS ports (e.g., 1 or 2) will be configured for all SRS resources in the SRS resource set(s). In addition, when the indicated UE capability is 1T2R, 2T4R, 1T4R, or 1T4R/2T4R, the UE may not expect that one or more SRS resource sets configured for antenna switching will be configured or triggered in the same slot. In addition, even when the indicated UE capability is 1T1R, 2T2R, or 4T4R, the UE may not expect that one or more SRS resource sets configured for antenna switching will be configured or triggered in the same slot.

The various embodiments described above have been described without explicitly configuring panels for at least uplink and downlink transmissions for the UE. That is, UE antenna ports for SRS antenna switching may be configured without explicit consideration of the UE's panel, so that the base station and UE may operate according thereto. When considering at least two or more panels to be explicitly configured, SRS resource set(s) for antenna switching may be configured for each panel. In this case, UE capabilities may exist depending on whether the corresponding SRS resource sets configured for respective panels are able to be simultaneously transmitted by the UE, whether they are able to be configured in the same slot, or whether they are able to be transmitted in the same slot.

[Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE constructs band combinations (BCs) regarding EN-DC and NR standalone (SA). That is, the UE configures a candidate list of BCs regarding EN-DC and NR SA, based on bands received from the base station at a request through FreqBandList. In addition, bands have priority in the order described in FreqBandList.
2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.
3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".
4. The UE selects BCs appropriate for the requested RAT type from the final "candidate BC list" and configures BCs to report. In this step, the UE configures supportedBandCombinationList in a determined order. That is, the UE may configure BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.
5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

Hereinafter, embodiments of the disclosure will be described in detail in conjunction with the accompanying drawings. The contents of the disclosure may be applied to FDD, TDD, and XDD (and/or SBFD, full duplex) systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, when actually applied, a TRP, a beam, or a TCI state may be appropriately replaced with one of the above terms.

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, embodiments of the disclosure will be described in detail in conjunction with the accompanying drawings. In the following description, a base station is an entity that allocates resources to terminals, and may be at least one of a gNode B, a gNB, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description, embodiments of the disclosure will be described in connection with 5G systems by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.
As used herein, the term "slot" may generally refer to a specific time unit corresponding to a transmit time interval (TTI), may specifically refer to a slot used in a 5G NR system, or may refer to a slot or a subframe used in a 4G LTE system.
Hereinafter, the above examples may be described through several embodiments, but they are not independent of each other, and one or more embodiments may be applied simultaneously or in combination.

<First Embodiment: MC-DCI Scheduling Method>

As an embodiment of the disclosure, a scheduling method through multi-cell scheduling DCI (MC-DCI) will be described. This embodiment may operate in combination with other embodiments.
In the disclosure, one DCI may be a single-DCI or a single DCI format, and multiple DCIs may be multi-DCI or multiple DCI formats. In the disclosure, one DCI may be a single PDCCH and/or, may be transmitted and received via one PDCCH, and multiple DCIs may be multiple PDCCHs and/or, may be transmitted and received via multiple PDCCHs.
In general, a UE receives one DCI, and one DCI may include scheduling information for one cell. For example, DCI formats 0_0/0_1/0_2 may schedule one PUSCH for a single uplink cell. In addition, DCI formats 1_0/1_1/1_2 may schedule one PDSCH for a single downlink cell. The scheduled cell may be indicated by the carrier indication field (CIF) of the DCI format.
However, this method requires multiple DCIs to be transmitted and received when scheduling PDSCHs or PUSCHs for multiple cells. Therefore, significant DCI overhead may occur. To reduce DCI overhead, a single DCI may schedule a PDSCH or PUSCH for each of multiple cells. For convenience, this may be referred to as MC-DCI. In the disclosure, MC-DCI may be a single DCI that schedules a PDSCH and/or PUSCH for each of multiple cells. At this time, the DCI format of MC-DCI may be DCI format 1_X or 1_3 for PDSCH scheduling, or may be DCI format 0_X or 0_3 for PUSCH scheduling.
Within a specific cell, the UE may report the number of candidate cell sets capable of being scheduled via MC-DCI to the base station via UE capability (UECapability). At this time, the cell set refers to a set including multiple cells. For example, cell set 1 may include cell 1, cell 2, cell 3, and cell 4, and cell set 2 may include cell 5, cell 6, cell 7, and cell 8. A cell set may include up to four cells, and the cells included in each cell set may not overlap. At this time, the number of candidate cell sets capable of being reported by the UE via UE capability may be one, two, or more.
When the UE reports that the number of candidate cell sets capable of being scheduled via MC-DCI received within a specific cell is 1, the UE may expect that there is no cell set indicator field in the MC-DCI, and when receiving MC-DCI from the base station, the UE may expect scheduling for cells within a single cell set.
When the UE reports that the number of candidate cell sets capable of being scheduled via MC-DCI received within a specific cell is equal to or greater than 2, the UE may expect that there is a cell set indicator field in the MC-DCI, and the UE may receive an indication of a single cell set index through this field from the base station. The UE may receive scheduling information for one or more cells within a single cell set among multiple cell sets via MC-DCI. The following description will be provided on the assumption that the number of candidate cell sets reported by the UE is 1, and may be applied in the same manner to the case where the number of candidate cell sets is equal to or greater than 2.
The cells capable of being scheduled in MC-DCI may be configured as a higher layer. For example, it is assumed that MC-DCI is capable of (simultaneously) scheduling cell 0, cell 1, cell 2, and cell 3. Upon receiving the MC-DCI, the UE may identify scheduling information for cell 0, cell 1, cell 2, and cell 3. That is, the UE may obtain scheduling information for cell 0, cell 1, cell 2, and cell 3 from the MC-DCI. For example, the ability of MC-DCI to schedule cell 0, cell 1, cell 2, and cell 3 may be configured by a higher layer. Here, the scheduling information may include time-domain resource allocation (TDRA) information and/or frequency-domain resource allocation (FDRA) information regarding the transmission and reception of data channels (PDSCH for downlink and PUSCH for uplink) in each cell. Therefore, the UE may obtain scheduling information on each cell through the MC-DCI and transmit and receive data channels to and from each cell.

The base station may not be able to schedule all cells configured for the UE under certain circumstances. There may be cases where scheduling is not possible for at least some of the multiple cells configured by the base station for the UE. For example, although the base station configures, through higher layer signaling for scheduling via MC-DCI to the UE, a list of cells including four cells (e.g., cell 0, cell 1, cell 2, and cell 3), some of these cells may not be schedulable due to various reasons, such as being scheduled to other UEs, poor channel conditions, or other factors. In this case, the base station must be able to indicate to the UE the cells that are actually scheduled via MC-DCI among the cells pre-configured for scheduling through MC-DCI. That is, the base station must be able to indicate to the UE one or more cells that are actually scheduled via MC-DCI among the multiple cells pre-configured for scheduling through MC-DCI.

This indication may be performed based on one of the following two methods. Alternatively, it may be based on a combination of at least one of the following two methods.

In the first method, the UE may obtain, from MC-DCI, information indicating co-scheduled cells among the pre-configured cells (e.g., cell 0, cell 1, cell 2, and cell 3). That is, among the multiple cells configured to be scheduled through MC-DCI, one or more cells that are (actually) co-scheduled through MC-DCI may be identified based on the MC-DCI. More specifically, the base station may configure a table including cells that are co-scheduled for the UE. For example, each row in this table may have a unique index. The index of each row (and/or each row) may include the indices of cells that are co-scheduled. For example, {cell 0, cell 1} may be configured in row 0, {cell 2, cell 3} may be configured in row 1, and {cell 0, cell 1, cell 2, cell 3} may be configured in row 2. An example of a table configured for the UE may be referenced in Table 19.

[Table 19]

| index | Co-scheduled cell |
|---|---|
| 0 | {0, 1} |
| 1 | {2, 3} |
| 2 | {0,1,2,3} |

The UE may obtain a value indicating the row index through the MC-DCI. Therefore, the UE may determine the scheduled cell, based on the value. For example, the MC-DCI may include information regarding the row index, and the UE may identify the scheduled cell, based on the row index and table obtained from the MC-DCI. For example, when row 0 is indicated by the MC-DCI, the UE may identify that cell 0 and cell 1 are scheduled cells. For example, when row 1 is indicated by the MC-DCI, the UE may identify that cell 2 and cell 3 are scheduled cells. For example, when row 2 is indicated by the MC-DCI, the UE may identify that cell 0, cell 1, cell 2, and cell 3 are scheduled cells. Meanwhile, the disclosure describes, by way of example, the table form for information including co-scheduled cells configured by the base station for the UE, but the disclosure is not limited thereto. That is, various methods for indicating co-scheduled cells may be used. For example, a method in which information on co-scheduled cells is organized as a list with each piece of information assigned an identifier to identify the co-scheduled cells may be used. Therefore, the term "table" described below may be replaced with the term "information on co-scheduled cells."

In the disclosure, a table for the mapping relationship between the scheduled cells (or the indices of the scheduled cells) and the indices indicated by the DCI may be established, and the scheduled cell may be identified based on the table and the index indicated by the DCI.

Although an embodiment in which co-scheduled cells are identified based on the indices of the table rows has been described in the disclosure, the disclosure is not limited thereto, and for example, the scheduled cells may also be identified based on the indices of table columns. In this case, rows in the above-described embodiment may be replaced with columns.

In the disclosure, when the number of candidate cell sets capable of being scheduled via MC-DCI received by the UE within a specific cell is equal to or greater than 2, the UE may receive a configuration of the above table for each cell set, and the UE may determine, based on the cell set indicator field in the MC-DCI, which table is to be used for each cell set.

In the second method, the UE may determine the presence or absence of scheduling information for one or more cells, based on the FDRA field of the MC-DCI.

When the UE reports that the number of candidate cell sets capable of being scheduled via MC-DCI within a specific cell is 1, the UE may expect that the MC-DCI includes the same number of FDRA fields as the number of cells included in one cell set. In this case, if the UE fails to receive higher layer signaling configurations, such as the table mentioned in the first method above, the UE may determine whether scheduling information for each cell exists, based on one or more FDRA fields in the MC-DCI.

When the UE reports that the number of candidate cell sets capable of being scheduled via MC-DCI within a specific cell is equal to or greater than 2, the UE may expect that there are as many FDRA fields as the maximum number of cells included in the respective two or more cell sets. For example, when the UE reports the number of candidate cell sets as 2, the first cell set includes 3 cells, and the second cell set includes 4 cells, the UE may expect that the MC-DCI includes four FDRA fields, which is the maximum number of cells among the cells included in the first and second cell sets.

- When the UE fails to receive the higher layer signaling configuration, such as the table mentioned in the first method, for all cell sets, the UE may determine whether scheduling information for each cell exists based on the FDRA fields in the MC-DCI, and when the number of cells in the cell set indicated to the UE through the cell set indicator field is smaller than the number of FDRA fields, the UE may consider the FDRA fields corresponding to the number of cells in the indicated cell set as ascending indices of the FDRA fields, and ignore the FDRA fields corresponding to indices greater than the number of cells.
- When the UE has received the higher layer signaling configuration, such as the table mentioned in the first method, for a specific cell set, but has not received it for the remaining cell sets, the UE may expect that the MC-DCI includes a scheduling cell indicator field capable of indicating the index of a specific row in the table configured with higher layer signaling, such as the first method, and the UE may use a method of interpreting the scheduling cell indicator field or the FDRA field when determining whether the scheduling information exists for one or more cells in relation to which cell set is indicated through the cell set indicator field in the MC-DCI. At this time, the scheduling cell indicator field, which may be included in the MC-DCI, may be a separate field distinct from the carrier indication field (CIF), or the CIF may replace the scheduling cell indicator field in the MC-DCI.

When the UE is indicated, via the cell set indicator field in the MC-DCI, a cell set that has received higher layer signaling such as the above table, the UE may be indicated, via the scheduling cell indicator field, as to whether scheduling information for one or more cells is available. When the UE is indicated, via the cell set indicator field in the MC-DCI, a cell set that has not been configured with higher layer signaling such as the table above, the UE may be indicated, via the FDRA field, as to whether scheduling information for one or more cells is available.

FIG. 11 is a diagram illustrating an example of MC-DCI including multiple FDRA fields according to an embodiment of the disclosure.

Referring to FIG. 11, MC-DCI 1100 may include multiple FDRA fields. In addition, each FDRA field may have a corresponding cell. That is, when the cells capable of being co-scheduled are configured as cell 0 (1120), cell 1 (1121), cell 2 (1122), and cell 3 (1123) in MC-DCI 1100, the MC-DCI 1100 may include an FDRA field 1110 for cell 0, an FDRA field 1111 for cell 1, an FDRA field 1112 for cell 2, and an FDRA field 1113 for cell 3. Therefore, the UE may determine whether the respective cells have been scheduled, based on the values of the FDRA fields. The cells scheduled based on the values of the FDRA fields may be called actually co-scheduled cells.

FIG. 12 is a diagram illustrating an example of MC-DCI including at least one of a cell set indicator field, a scheduling cell indicator field, and multiple FDRA fields according to an embodiment of the disclosure.

Referring to FIG. 12, the MC-DCI 1200 may include at least one of a cell set indicator field 1201, a scheduling cell indicator field 1202, and multiple FDRA fields 1205, 1206, 1207, and 1208. As described above, when the UE reports to the base station that the number of candidate cell sets capable of being scheduled via MC-DCI within a specific cell is equal to or greater than 2, the UE may expect that the cell set indicator field 1201 exists in the MC-DCI. Meanwhile, when the UE reports to the base station that the number of candidate cell sets capable of being scheduled via MC-DCI is 1, the cell set indicator field 1201 may not be present in the MC-DCI. FIG. 12 illustrates a case where the UE reports two candidate cell sets. In this embodiment, for example, cell set 0 (1210) may include three cells of cell 0 (1211), cell 1 (1212), and cell 2 (1213), while cell set 1 (1220) may include cell 3 (1221), cell 4 (1222), cell 5 (1223), and cell 6 (1224). Therefore, the UE may expect that the MC-DCI includes four FDRA fields corresponding to the maximum number of cells among the cells included in cell set 0 (1210) and cell set 1 (1220).

In addition, in FIG. 12, it is assumed that the UE does not receive configuration of higher layer signaling, such as the above table, for cell set 0 (1210). Therefore, as in the second method above, the presence or absence of scheduling information for cells within cell set 0 (1210) may be indicated by the FDRA fields 1205, 1206, 1207, and 1208 in the MC-DCI. In this case, since there are three cells within cell set 0 (1210), the UE may receive scheduling information for cell 0 (1211), cell 1 (1212), and cell 2 (1213) through first, second, and third FDRA fields 1208, 1207, and 1206.

In addition, in FIG. 12, it may be assumed that the UE has received configuration of higher layer signaling, such as the above table, for cell set 1 (1220). Therefore, as in the first method above, the presence or absence of scheduling information for cells within cell set 1 (1220) may be indicated by the scheduling cell indicator field 1202 in the MC-DCI. For example, the UE may receive, the scheduling cell indicator field (1202) in the MC-DCI, an indication of a specific row among all the rows in the table configured via higher layer signaling, and this row may indicate, for example, scheduling information for cell 3 (1221) and cell 5 (1223) within cell set 1 (1220).

The FDRA field may be classified into valid and invalid values. A valid value may correspond to a case where a frequency domain allocation corresponding to the value of the FDRA field exists. On the other hand, an invalid value may correspond to a case where a frequency domain allocation corresponding to the value of the FDRA field does not exist.

For example, valid and invalid values will be described based on FDRA type-0. FDRA type-0 is a method for indicating RBs (or RBGs) scheduled based on a bitmap. Here, each bit may have a corresponding RB (or RBG). When the bit is "1," the corresponding RB (or RBG) is scheduled, and when the bit is "0," the corresponding RB (or RBG) may not be scheduled. Therefore, when at least one bit is "1," the value may be determined to be valid, and when all bits are "0," the value may be determined to be invalid.

For example, valid and invalid values will be described based on FDRA type-1. FDRA type-1 is a method for indicating RBs scheduled based on a resource indication value (RIV). FDRA type-1 may schedule consecutive RBs in the frequency domain. FDRA type-1 may indicate the index of a starting RB and the number of consecutive RBs. The RIV value may be one of 0, 1,..., N*(N+1)/2-1. Where N is the number of RBs included in the frequency domain. Accordingly, when the RIV value is one of 0, 1,..., N*(N+1)/2-1, it may be considered valid, while a value equal to or greater than N*(N+1)/2 may be considered invalid.

Some of the cells scheduled by MC-DCI may be licensed-band cells, while others may be in unlicensed-band (or shared spectrum) cells. For example, in the case of unlicensed-band cells, FDRA type-2 may be used for uplink scheduling. Specific information about FDRA type-2 and an embodiment in which FDRA type-2 is used will be described later.

The disclosure discloses a method for determining a scheduled cell from a single DCI when the UE supports multi-cell scheduling with a single DCI.

The UE may receive multiple frequency domain resource allocation (FDRA) fields in a single DCI and determine the cells corresponding to the respective FDRA fields. The UE may determine whether the cell is to be scheduled based on the FDRA type of the cell and the value of the FDRA field. The UE may identify whether the cell is scheduled, a scheduled cell, and/or an unscheduled cell, based on one or more of the FDRA type or the FDRA field. For example, the interpretation of the FDRA field may vary depending on the subcarrier spacing of the corresponding cell.

When the UE is configured with FDRA type-2 for a cell, whether the cell is scheduled may be determined based on at least one or a combination of the following.

When the cell has a 15 kHz subcarrier spacing (when the subcarrier spacing configured for the cell is 15 kHz), the UE may determine that the cell has not been scheduled if the value of the FDRA field is as follows.

Case 1 in which all bits in the FDRA field are "1."

Case 2 in which all leading 6 bits in the FDRA field are "1." That is, all 6 most significant bits (MSBs) in the FDRA field are "1."

Case 3 in which all Y trailing bits in the FDRA field are "1." That is, all Y least significant bits (LSBs) in the FDRA field are "1."

When the cell has a 30 kHz subcarrier spacing (when the subcarrier spacing configured for a cell is 30 kHz), the UE may determine that the cell has not been scheduled if the value of the FDRA field is as follows.

Case 1 in which all leading 5 bits in the FDRA field are "0," and all Y trailing bits in the FDRA field are "1." That is, the 5 MSBs in the FDRA field are all "0" and the Y LSBs are all "1."

Case 2 in which all bits in the FDRA field are "0."

Case 3 in which all leading 5 bits in the FDRA field are "0." That is, all 5 MSBs among the bits in the FDRA field are all "0."

Case 4 in which all Y trailing bits in the FDRA field are "1." That is, all Y LSBs in the FDRA field are "1."

Each situation will be described in more detail below.

Situation 1. When a cell has a 15 kHz subcarrier spacing

The UE may identify the subcarrier spacing and information about the FDRA type for each cell included in the set of candidate cells scheduled by MC-DCI. When one of the cells included in the set of candidate cells scheduled by MC-DCI is configured with FDRA type-2, the UE may identify whether the subcarrier spacing of the cell is 15 kHz ($\mu$=0) or 30 kHz ($\mu$=1). This embodiment may be the case where the UE identified that the subcarrier spacing of the cell is 15 kHz ($\mu$=0).

FIG. 13 is a diagram illustrating an example of a field indicating frequency domain resource allocation information depending on the subcarrier spacing of a cell according to an embodiment of the disclosure.

FIG. 13A illustrates an example of a field indicating frequency domain resource allocation information in the case where the subcarrier spacing of the cell is 15 kHz. The size of the frequency resource in the bandwidth part may be defined as the number of RBs included in the bandwidth part. More specifically, when the UE is instructed to allocate FDRA type-0 resources, the length of the FDRA field of the DCI received by the UE is equal to the number of RBGs (NRBGs) in the bandwidth part, $N_{RBG} = \lceil (N_{BWP}^{size} + (N_{BWP}^{start}\ mod\ P))/P \rceil$. Here, the first RBG in the bandwidth part includes $\mathrm{RBG}_0^{\mathrm{size}} = \mathrm{P} - \mathrm{N}_{\mathrm{BWP}}^{\mathrm{size}}\ mod\ P$ RBs, and the last RBG in the bandwidth part includes

$\mathrm{RBG}_{\mathrm{last}}^{\mathrm{size}} = (\mathrm{N}_{\mathrm{BWP}}^{\mathrm{start}} + \mathrm{N}_{\mathrm{BWP}}^{\mathrm{size}}) mod\ P$ RBs, when $(\mathrm{N}_{\mathrm{BWP}}^{\mathrm{start}} + \mathrm{N}_{\mathrm{BWP}}^{\mathrm{size}}) mod\ P > 0$, otherwise, it includes $\mathrm{RBG}_{\mathrm{last}}^{\mathrm{size}} = \mathrm{P}$ RBs. The remaining RBGs in the bandwidth part include P RBs. Here, P may be configured by higher layer signaling and may have a value of 2 or 4, but may not exclude other values.

Referring to FIG. 13A, when the subcarrier spacing of a cell is 15 kHz, the length of the field indicating frequency domain allocation information of the cell within MC-DCI may be 6+Y bits. Here, 6 bits may indicate a starting index ($m_0$) and length (L) of M=10 interlaces included in one RB-set, and Y bits may indicate a scheduled RB-set, and $\mathrm{Y} = \left\lceil \log_2 \frac{N_{\text{RB-set,UL}}^{\text{BWP}}(N_{\text{RB-set,UL}}^{\text{BWP}}+1)}{2} \right\rceil$. Here, Y bits may indicate the index and length of a starting RB set among the RB sets included in the UL BWP. In the disclosure, $N_{\text{RB-set,UL}}^{\text{BWP}}$ may be the number of RB-sets configured for the indicated active UL BWP. In the disclosure, for convenience, the 6 bits and Y bits may be referred to as an RIV method (or RIV-like).

More specifically, the 6 bits are as follows.

When μ=0, the X=6 most significant bits (MSBs) of the resource block allocation information (or frequency domain resource allocation information) may indicate the set of interlace indices $m_0$+1 allocated to the UE. Here, the indication for the interlace index set consists of a resource indication value (RIV). When 0≤RIV<M(M+1)/2 and l=0,1,...,L-1, the resource indication value corresponds to the starting interlace index $m_0$ and the number of consecutive interlace indices. The resource indication value is defined as follows.

[RIV equation]

if $(L-1) \leq \lfloor M/2 \rfloor$ then

$RIV = M(L-1) + m_0$

else

$RIV = M(M-L+1) + (M-1-m_0)$

For $RIV \geq M(M+1)/2$, the RIV value corresponds to the starting interlace index $m_0$ and the value l in Table 20 below.

[Table 20] $m_0$ and *l* for $RIV \geq M(M+1)/2$.

| *RIV - M(M + 1)/2* | $m_0$ | *l* |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

Referring to the RIV equation and Table 20 above, among the RIV values, 0, 1, ..., M*(M+1)/2-1=54 may be indicated by the starting interlace index and the number of consecutive interlace indices according to the RIV equation. Subsequently, RIV = M*(M+1)/2=55, M*(M+1)/2+1=56, ..., M*(M+1)/2+7=62 may be indicated by the start interlace index ($m_0$) and the value *l* according to Table 20. The 6-bits of the RIV value may represent one of 0, 1,..., 63, and 0, 1,..., 62 are the values used to schedule the interlace. However, RIV=63 (6 bits in binary are "111111") may be an unused value. In other words, there may not be a scheduled interlace corresponding to the above value (RIV=63). Therefore, an unscheduled cell may be indicated using the above value (RIV=63 (6 bits in binary are "111111")).

More specifically, the Y bits are as follows.

When μ=0 or μ=1, $Y = \left\lceil log_2 \frac{N_{\text{RB-set,UL}}^{\text{BWP}}(N_{\text{RB-set,UL}}^{\text{BWP}}+1)}{2} \right\rceil$ least significant bits (LSBs) of the resource block allocation information (or frequency domain resource allocation information) indicates consecutive RB sets to the UE. For example, the Y bits may be present in DCI format 0_1. The resource allocation field consists of a resource indication value ($RIV_{\text{RB-set}}$). For $0 \le RIV_{\text{RB-set}} < N_{\text{RB-set,UL}}^{\text{BWP}}(N_{\text{RB-set,UL}}^{\text{BWP}}+1)/2$, and l=0,1,..., $L_{\text{RBset}}$-1, the resource indication value indicates the starting RB set index ( $N_{\text{RB-set,UL}}^{\text{start}}$ ) and the number of consecutive RB sets ($L_{\text{RB-set}}$). The resource indication value is defined as follows.

$$[RIV_{\text{RB-set}} \text{ equation}]$$

$$\text{if } (L_{\text{RB-set}} - 1) \le \lfloor N_{\text{RB-set,UL}}^{\text{BWP}}/2 \rfloor \text{ then}$$

$$RIV_{\text{RB-set}} = N_{\text{RB-set,UL}}^{\text{BWP}}(L_{\text{RB-set}} - 1) + N_{\text{RB-set,UL}}^{\text{start}}$$

$$\text{else}$$

$$RIV_{\text{RB-set}} = N_{\text{RB-set,UL}}^{\text{BWP}}(N_{\text{RB-set,UL}}^{\text{BWP}} - L_{\text{RB-set}} + 1) + (N_{\text{RB-set,UL}}^{\text{BWP}} - 1 - N_{\text{RB-set,UL}}^{\text{start}})$$

$$\text{where } N_{\text{RB-set,UL}}^{\text{start}} = 0,1,\cdots N_{\text{RB-set,UL}}^{\text{BWP}} - 1,\ L_{\text{RB-set}} \ge 1 \text{ and shall not exceed } N_{\text{RB-set,UL}}^{\text{BWP}} - N_{\text{RB-set,UL}}^{\text{start}}$$

Referring to the above equation, the following may be observed.

- When one RB-set is included in the UL BWP ( $N_{\text{RB-set,UL}}^{\text{BWP}} = 1$ ), Y=0 bits (Y=0). Accordingly, when Y=0 bits, unscheduled cells may not be indicated by the Y bits.
- When two RB-sets are included in the UL BWP ( $N_{\text{RB-set,UL}}^{\text{BWP}} = 2$ ), Y=2 bits (Y=2). Here, $RIV_{\text{RB-set}}$=0,1,2 may be used to indicate the starting RB set index and the number of consecutive RB sets. Y bits may have values of 0,1,...,3. Accordingly, there may not be a scheduled RB-set corresponding to Y bits of 3 (2 bits are all "11." 2 bits are "11" in binary). Therefore, an unscheduled cell may be indicated using the above value (3 (2 bits are "11" in binary)).
- When 3 RB-sets are included in the UL BWP ( $N_{\text{RB-set,UL}}^{\text{BWP}} = 3$ ), Y=3 bits (Y=3). Here, $RIV_{\text{RB-set}}$=0,1,2,3,4,5 may be used to indicate the starting RB set index and the number of consecutive RB sets. Y bits may have values of 0,1,...,7. Accordingly, there may not be a scheduled RB-set corresponding to Y bits of 7 (3 bits are all "111." 3 bits are "111" in binary). Therefore, an unscheduled cell may be indicated using the above value (7 (3 bits are "111" in binary)).
- When 4 RB-sets are included in the UL BWP ( $N_{\text{RB-set,UL}}^{\text{BWP}} = 4$ ), Y=4 bits (Y=4). Here, $RIV_{\text{RB-set}}$=0,1,...,9 is used to indicate the starting RB set index and the number of consecutive RB sets. Y bits may have values of 0,1,...,15. Accordingly, there may not be a scheduled RB-set corresponding to Y bits of 15 (4 bits are all "1111." 4 bits are "1111" in binary). Therefore, an unscheduled cell may be indicated using the above value (15 (4 bits are "1111" in binary)).
- When 5 RB-sets are included in the UL BWP ( $N_{\text{RB-set,UL}}^{\text{BWP}} = 5$ ), Y=4 bits (Y=4). Here, $RIV_{\text{RB-set}}$=0,1,...,14 is used to indicate the starting RB set index and the number of consecutive RB sets. Y bits may have values of 0,1,...,15. Accordingly, there may not be a scheduled RB-set corresponding to Y bits of 15 (4 bits are all "1111." 4 bits are "1111" in binary). Therefore, an unscheduled cell may be indicated using the above value (15 (4 bits are "1111" in binary)).

In summary, in the remaining cases, excluding the case where Y=0 among the Y bits, an unscheduled cell may be indicated when Y bits are all "1." That is, when all bits included in the Y LSBs of the FDRA are "1," an unscheduled cell may be indicated.

In the disclosure, the method for indicating that a cell having a 15 kHz subcarrier spacing is unscheduled may be one or a combination of the following. In the description of this method, the FDRA field is a field corresponding to a cell with a 15 kHz subcarrier spacing. In addition, the FDRA type may be FDRA type-2.

- As a first method, the UE may determine whether a cell is scheduled, based on all bits (6+Y bits) of the FDRA field. For example, when all bits of the FDRA field are "1," the UE may determine that the cell is not scheduled. Here, the FDRA field may include MSB 6 bits and LSB Y bits. Therefore, when all 6+Y bits are "1" (if bit values of the bits included in 6+Y bits are all 1), the UE may determine that the cell with a 15 kHz subcarrier spacing corresponding to the FDRA field is not scheduled. For example, when the MSB 6 bits are all "1" and all of the remaining LSB Y bits are not "1" (when all bit values of the bits included in the 6 MSBs are 1 and at least some bit values of the bits included in the Y LSBs are 0, or when all bit values of the bits included in the 6 MSBs are 1 and all bit values of the bits included in the Y LSBs are 0), the UE may determine that the DCI format including the above information is an error case. Alternatively, when all the LSB Y bits are "1" and all of the remaining MSB 6 bits are not "1" (when all bit values of the bits included in the Y LSBs are 1 and at least some bit values of the bits included in the 6 MSBs are 0, or when all bit values of the bits included in the Y LSBs are 1 and all bit values of the bits included in the 6 MSBs are 0), the UE may determine that the DCI format including the above information is an error case. When it is determined to be an error case, the UE may discard (or ignore) the information indicated by the DCI format without applying it. Alternatively, when it is determined to be an error case, the UE may discard the information about the cell (the cell corresponding to the FDRA field determined as an error case), among the information indicated by the DCI format, without applying it, and apply the information about the remaining cells (the remaining cells excluding the cell corresponding to the FDRA field determined as an error case).
- As a second method, the UE may determine whether a cell is scheduled, based only on the 6-bit MSBs of the FDRA field. The UE may identify whether a cell is scheduled, based on the 6 MSBs of the FDRA field. For example, when all bits of the MSB 6 bits of the FDRA field are "1" (when the bit values of all bits included in the 6 MSBs are 1), the UE may determine that the cell (the cell corresponding to the FDRA field) is an unscheduled cell. Therefore, when the MSB 6 bits are all "1," the UE may determine that the cell with a 15 kHz subcarrier spacing corresponding to the FDRA field is not scheduled. For example, in this case, the LSB Y bits may not provide information. That is, regardless of the values of the LSB Y bits, whether the cell is scheduled may be determined based on the MSB 6 bits. For example, the LSB Y bits may be discarded or ignored, or may not be included in the FDRA field (e.g., Y=0).
- As a third method, the UE may determine whether a cell is scheduled, based only on the LSB Y bits of the FDRA field. The UE may identify whether a cell is scheduled, based on the Y LSBs of the FDRA field. For example, when all bits of the LSB Y bits of the FDRA field are "1" (when bit values of all bits included in the Y LSBs are 1), the UE may determine that the cell (the cell corresponding to the FDRA field) is not scheduled. Therefore, when the LSB Y bits are all "1," the UE may determine that the cell with a 15 kHz subcarrier spacing corresponding to the FDRA field is not scheduled. For example, in this case, the MSB 6 bits may not provide information. That is, regardless of the values of the MSB 6 bits, whether the cell is scheduled may be determined based on the LSB Y bits. For example, the MSB 6 bits may be discarded or ignored, or may not be included in the FDRA field.

According to an embodiment, the third method may be used when Y>0. When Y=0, the second method may be used. That is, based on the value of Y, the second or third method may be selectively used. That is, the method to be used by the UE may be determined based on the value of Y (the bit size of the Y LSBs of the FDRA field).

Situation 2: When a cell has a 30kHz subcarrier spacing

The UE may identify the subcarrier spacing and information about the FDRA type for each cell included in the set of candidate cells scheduled by MC-DCI. When one of the cells included in the set of candidate cells scheduled by MC-DCI is configured with FDRA type-2, the UE may identify whether the subcarrier spacing of the cell is 15 kHz ($\mu$=0) or 30 kHz ($\mu$=1). This embodiment may be the case where the UE identified that the subcarrier spacing of the cell is 30 kHz ($\mu$=1).

FIG. 13B illustrates an example of a field indicating frequency domain resource allocation information in the case where the subcarrier spacing of the cell is 30 kHz.

Referring to FIG. 13B, when the subcarrier spacing of a cell is 30 kHz, the length of the field indicating frequency domain allocation information of the cell within MC-DCI may be 5+Y bits. Here, the 5 bits may indicate whether M=5 interlaces within a single RB-set are scheduled using a bitmap. That is, each bit within the 5 bits may be used to indicate whether each interlace is scheduled. Here, the interlace corresponding to a bit "1" among the 5 bits may be determined to be scheduled. The interlace corresponding to a bit "0" among the 5 bits may be determined not to be scheduled. Y bits may indicate a scheduled RB-set, and $\mathrm{Y} = \left\lceil \log_2 \frac{N_{\text{RB-set,UL}}^{\text{BWP}}\left(N_{\text{RB-set,UL}}^{\text{BWP}}+1\right)}{2} \right\rceil$. Here, Y bits may indicate the index and length of a starting RB set among the RB sets included in the UL BWP. In the disclosure, $N_{\text{RB-set,UL}}^{\text{BWP}}$ may be the number of RB-sets configured for the indicated active UL BWP. In the disclosure, for convenience, the 5 bits will be referred to as a bitmap method, and the Y bits will be referred to as an RIV method (or RIV-like).

The 5 bits may indicate an interlace to be scheduled based on the bitmap. When each bit of the 5 bits is "1," the UE may determine that the interlace corresponding to "1" is scheduled. That is, it may determine that the interlace corresponding to a bit "1" among the 5 bits is scheduled. When the 5 bits are all "0," no interlace may be scheduled. Therefore, when the 5 bits are all "0," the UE may determine that the cell has not been scheduled.

The Y bits in Situation 2 are the same as those in Embodiment 1, so their description will be omitted, and may be referred to with the description of the Y bits in Situation 1.

The FDRA field of a cell with a 30 kHz subcarrier spacing includes 5+Y bits. The 5-bit MSBs indicate the interlace to be scheduled within the RB set in the bitmap method, and the Y-bit LSBs indicate the RB sets scheduled in the RIV method. Therefore, whether a cell is scheduled may be determined based on the values of the 5-bit MSBs and Y-bit LSBs.

In the disclosure, the method for indicating that a cell having a 30 kHz subcarrier spacing is unscheduled may be one or a combination of the following. In the description of this method, the FDRA field is a field corresponding to a cell with a 30 kHz subcarrier spacing. In addition, the FDRA type may be FDRA type-2.

- As a first method, the UE may determine whether a cell is scheduled, based on all bits (5+Y bits) of the FDRA field. For example, when all bits of the FDRA field are "0," the UE may determine that the cell with a 30 kHz subcarrier spacing is not scheduled. Here, the FDRA field may include 5-bit MSBs and Y-bit LSBs. Therefore, when all 5+Y bits are "0" (if bit values of the bits included in 5+Y bits are all 0), the UE may determine that the cell with a 30 kHz subcarrier spacing corresponding to the FDRA field is not scheduled. For example, when the Y-bit LSBs are all "0," a corresponding value may exist according to the $RIV_{\text{RB-set}}$ equation. However, since all 5-bit MSBs are "0," the RB set indicated by the Y-bit LSBs may not be used as information for scheduling. That is, when all 5-bit MSBs are "0," it is determined that there is no scheduled interlace, so the RB set corresponding to the Y-bit LSBs may be ignored.
- As a second method, the UE may determine whether a cell is scheduled, based only on the 5-bit MSBs of the FDRA field. The UE may identify whether a cell is scheduled, based on the 5 MSBs of the FDRA field. For example, when all bits of the 5-bit MSBs of the FDRA field are "0" (when the bit values of all bits included in the 5 MSBs are 1), the UE may determine that the cell (the cell corresponding to the FDRA field) is an unscheduled cell. Therefore, when 5-bit MSBs are all "0," the UE may determine that the cell with a 30 kHz subcarrier spacing corresponding to the FDRA field is not scheduled. For example, in this case, the Y-bit LSBs may not provide information. That is, regardless of the values of the Y-bit LSBs, whether the cell is scheduled may be determined based on the 5-bit MSBs. For example, the Y-bit LSBs may be discarded or ignored, or may not be included in the FDRA field (e.g., Y=0).
- As a third method, the UE may determine whether a cell is scheduled, based only on the Y-bit LSBs of the FDRA field. The UE may identify whether a cell is scheduled, based on the Y LSBs of the FDRA field. For example, when all bits of the Y-bit LSBs of the FDRA field are "1" (when bit values of all bits included in the Y LSBs are 1), the UE may determine that the cell (the cell corresponding to the FDRA field) is not scheduled. Therefore, when Y-bit LSBs are all "1," the UE may determine that the cell with a 30 kHz subcarrier spacing corresponding to the FDRA field is not scheduled. For example, in this case, the 5-bit MSBs may not provide information. That is, regardless of the values of the 5-bit MSBs, whether the cell is scheduled may be determined based on the Y-bit LSBs. For example, the 5-bit MSBs may be discarded or ignored, or may not be included in the FDRA field.

According to an embodiment, the third method may be used when Y>0. When Y=0, the second method may be used. That is, based on the value of Y, the second or third method may be selectively used. That is, the method to be used by the UE may be determined based on the value of Y (the bit size of the Y LSBs of the FDRA field).

<Second Embodiment: SRS Configuration and Indication Method for MC-DCI>

In addition to the basic self-carrier or cross-carrier SRS configuration operation described above, a co-scheduled cell configuration operation associated with an SRS for multi-carriers according to an embodiment of the disclosure will be described below. This embodiment may be operated independently or in combination with other embodiments. One or more of the following methods and/or a combination of one or more of the following methods may be used.

First, at least one carrier (band) among the multi-carriers performing SRS transmission may commonly utilize the configuration and indication of co-scheduled cells determined for transmission of at least one channel or reference signal among PDSCH, PUSCH, and CSI-RS. That is, at least one carrier (band) among the multi-carriers performing SRS transmission may follow the configuration and indication of co-scheduled cells determined for transmission of at least one channel or reference signal among PDSCH, PUSCH, and CSI-RS.

Second, at least one carrier (band) among the multi-carriers performing SRS transmission may be configured independently of the configuration of co-scheduled cells determined for transmission of channels or reference signals such as PDSCH, PUSCH, and CSI-RS. The base station and UE may configure an SRS resource set or SRS resources for configuring separate co-scheduled cells solely for SRS by linking at least one cell id.

Third, the maximum number of carriers of a multi-carrier performing SRS transmission in DCI format 0_3/1_3 may be determined or configured as at least one of {3, 4, 8}. As described above, when the base station configures the maximum number of carriers for a specific UE as one of the above values, the UE may determine that the number of SRS transmissions indicated in DCI format 0_3 is less than or equal to the determined/configured value.

Fourth, the bit-width of the field indicating co-scheduled cells, which the base station indicates for SRS transmission of the UE in DCI format 0_3/1_3, may be configured to be at least 4 bits or fewer. For co-scheduled cell indicators, the table described above may be configured by {2^max_num_bits_DCI_field, number of cells}. In particular, to indicate the configured table, DCI format 0_3/1_3 may allow each entry of the configured table to indicate all combinations of cells. Table 21 shows an example of a table according to an embodiment of the disclosure.

[Table 21]

| DCI index (4 bits-type A) | Co-scheduled cells | DCI index (4 bits-type B) | Co-scheduled cells |
|---|---|---|---|
| 0000 | {cell 0, cell 1} | 0000 | {cell 0} |
| 0001 | {cell 0, cell 2} | 0001 | {cell 1} |
| 0010 | {cell 0, cell 3} | 0010 | {cell 2} |
| 0011 | {cell 1, cell 2} | 0011 | {cell 3} |
| 0100 | {cell 1, cell 3} | 0100 | {cell 0, cell 1} |
| 0101 | {cell 2, cell 3} | 0101 | {cell 0, cell 2} |
| 0110 | {cell 0, cell1, cell2} | 0110 | {cell 0, cell 3} |
| 0111 | {cell 0, cell1, cell3} | 0111 | {cell 1, cell 2} |
| 1000 | {cell 0, cell2, cell3} | 1000 | {cell 1, cell 3} |
| 1001 | {cell 1, cell2, cell3} | 1001 | {cell 2, cell 3} |
| 1010 | {cell 0, cell1, cell2, cell 3} | 1010 | {cell 0, cell 1, cell 2} |
| 1011 | reserved | 1011 | {cell 0, cell 1, cell 3} |
| 1100 | reserved | 1100 | {cell 0, cell 2, cell 3} |
| 1101 | reserved | 1101 | {cell 1, cell 2, cell 3} |
| 1110 | reserved | 1110 | {cell 0, cell 1, cell 2, cell 3} |
| 1111 | reserved | 1111 | reserved |

For example, in Table 21, indicating a single-cell may be excluded from the 4 bits of type A as described above. That is, the indices 0000 to 1111 may be mapped to the following cell combinations so as to indicate at least two or more cells. That is, type A, may indicate at least two or more cells. In this case, the mapping between the cell combinations and indices may be sequentially associated, and the mapping may be performed using cell IDs in ascending or descending order.

2-cell designation: {cell 0, cell 1}, {cell 0, cell 2}, {cell 0, cell 3}, {cell 1, cell 2}, {cell 1, cell 3}, and {cell 2, cell 3}
3-cell indication: {cell 0, cell 1, cell 2}, {cell 0, cell 1, cell 3}, {cell 0, cell 2, cell 3}, and {cell 1, cell 2, cell 3}
4-cell indication: {cell 0, cell 1, cell 2, cell 3}

As another example, the 4 bits of type B in Table 21 may include a single-cell indication. That is, the indices 0000 to 1111 may be mapped to the following cell combinations so as to indicate at least one cell. That is, type B may indicate one or more cells. In this case, the mapping between the cell combinations and indices may be sequentially associated, and the mapping may be performed using cell IDs in ascending or descending order.

Type A or type B described above may be determined as a single type by the configuration of the base station and UE. For example, the base station may configure either type A or type B for the UE. Alternatively, the determination of type A or type B may vary depending on the DCI format index. That is, type A or type B may be determined based on the DCI format. For example, type A may be applied to DCI formats 0_3 and/or 1_3, while type B may be applied to a different DCI format. For example, type B may be applied to a DCI format other than DCI formats 0_3 and/or 1_3.

When the field indicating co-scheduled cells has a size of 4 bits, the base station and the UE may assume that the co-scheduled cells may be sequentially associated and indicated by combinations of the 11 cells, and that the remaining five indicators are reserved, unused, or used for separate purposes.

In addition to the basic self-carrier or cross-carrier SRS configuration operation described above, a multi-carrier SRS configuration operation according to an embodiment of the disclosure will be described below. This embodiment may be operated independently or in combination with other embodiments. One or more of the following methods and/or a combination of one or more of the following methods may be used.

First, the base station may configure an SRS resource set or SRS resources at a higher layer for self-carrier or cross-carrier SRS transmission, and may commonly configure an SRS resource set or SRS resources at a higher layer, for multi-carrier SRS transmission. That is, the UE may apply SRS resource configuration based on the common base station configuration. The base station may configure an SRS resource set and/or SRS resources through higher layer signaling, and the UE may apply the configured SRS resource set and/or SRS resource commonly to self-carrier or cross-carrier SRS transmission, and SRS transmission for a multi-carrier (or multi-carrier SRS transmission).

Second, the base station may configure an SRS resource set or SRS resources at a higher layer for self-carrier or cross-carrier SRS transmission, and separately configure an SRS resource set or SRS resources at a higher layer for multi-carrier SRS transmission. The base station may configure an SRS resource set and/or SRS resources for a self-carrier or cross-carrier SRS through higher layer signaling, and may also configure an SRS resource set and/or SRS resources for a multi-carrier SRS. The UE may apply the configured SRS resource set and/or SRS resources for a self-carrier or cross-carrier SRS to self-carrier or cross-carrier SRS transmission. The UE may apply the configured SRS resource set and/or SRS resources for a multi-carrier SRS transmission to multi-carrier SRS transmission.

Third, when the base station configures, for the UE, two SRS resource sets for codebook- or non-codebook-based SRS transmission, the UE may determine that a PUSCH scheduled in DCI format 0_3 is always associated with a codebook- or non-codebook-based first SRS resource set.

Fourth, the bit-width of a field indicating an SRS request or an SRS offset indicator, which is indicated by the base station in DCI format 0_3 for SRS transmission of the UE, may be configured to be at least 4 bits or fewer. For example, the SRS request fields may indicate SRS request information corresponding to at least two or more co-scheduled cells.

Hereinafter, SRS request field information corresponding to co-scheduled cells indicated in DCI format 0_3 will be described. This embodiment may be operated independently or in combination with other embodiments. One or more of the following methods and/or a combination of one or more of the following methods may be used.

In an embodiment, a single field for an SRS request may indicate a common SRS request for co-scheduled cells, which are scheduled in the same slot or on the same PDCCH. Specifically, when the base station indicates to the UE a co-scheduled cell information indicator 0000, which is a 4-bit value and of type A, and an SRS request field 0000, the UE may determine that SRS transmission is to be performed, based on the SRS resource information commonly indicated by 0000 in the SRS request fields of {cell 0, cell 1} corresponding to the co-scheduled cell information indicator 0000. Here, it may be assumed that the commonly applicable SRS information includes specific configuration information such as the SRS resource set, the location of the SRS resource configured in the SRS resource, the resource period, comb type, and offset, which are identical or configured similarly to correspond to the band information of the corresponding cell.

As another embodiment, a single field for the SRS request may be applied to only one of the co-scheduled cells scheduled in the same slot or on the same PDCCH. For example, a specific carrier may be temporarily released or excluded during a carrier update from the multiple carriers.

As another embodiment, a single field for an SRS request may indicate an SRS request corresponding to each of the co-scheduled cells scheduled in the same slot or on the same PDCCH using a joint indication method. Here, the information of the SRS request field indicates that it corresponds to the configured values in the SRS resource set and Triggered AP-SRS-resource(s) configured by the base station for the UE during the RRC configuration process. In addition, the base station may configure up to four Triggered AP-SRS-resources for each BWP in consideration of co-scheduled cells in the RRC configuration.

Table 22 shows an example of RRC configuration according to an embodiment of the disclosure. The names of respective IEs (information elements) are examples and the disclosure is not limited thereto.

[Table 22]

| | |
|---|---|
| SRS-Config ::= | SEQUENCE { |

```
    srs-ResourceSetToReleaseList              SEQUENCE (SIZE(1..maxNrofSRS-
ResourceSets)) OF SRS-ResourceSetId
    srs-ResourceSetToAddModList                                  SEQUENCE
(SIZE(1..maxNrofSRS-ResourceSets)) OF SRS-ResourceSet
    srs-ResourceToReleaseList                                    SEQUENCE
(SIZE(1..maxNrofSRS-Resources)) OF SRS-ResourceId
    srs-ResourceToAddModList                                     SEQUENCE
(SIZE(1..maxNrofSRS-Resources)) OF SRS-Resource
    tpc-Accumulation                          ENUMERATED {disabled}
    ...,
    [[
    srs-RequestDCI-1-2-r16                    INTEGER (1..2)
    srs-RequestDCI-0-2-r16                    INTEGER (1..2)
    srs-RequestDCI-1-3-r18                    INTEGER (1..4)
    srs-RequestDCI-0-3-r18                    INTEGER (1..4)
    srs-ResourceSetToAddModListDCI-0-2-r16                       SEQUENCE
(SIZE(1..maxNrofSRS-ResourceSets)) OF SRS-ResourceSet
    srs-ResourceSetToReleaseListDCI-0-2-r16                      SEQUENCE
(SIZE(1..maxNrofSRS-ResourceSets)) OF SRS-ResourceSetId

...
    ]]
}
```

In Table 22, SRS-RequestDCI-1-3 may be an IE that configures the number of bits of the SRS request field included in DCI format 1_3, and SRS-RequestDCI-0-3 may be an IE that configures the number of bits of the SRS request field included in DCI format 0_3. The number of bits of the SRS request field may be set to 1 or 4 bits, but this is merely an example, and the disclosure is not limited thereto.

Alternatively, considering that the maximum number of co-scheduled cells capable of being scheduled in DCI formats 0_3/1_3 is 4, the number of bits of the SRS request field may be 4. For example, it may be set to 4 by SRS-RequestDCI-0-3/SRS-RequestDCI-1-3 or may be predefined as 4 bits.

After the RRC configuration, the base station may use the SRS request information in the DCI included in the PDCCH to associate and indicate co-scheduled cells and triggered AP-SRS-resource(s). After the RRC configuration, the base station may transmit a MAC-CE message to further remap or update the association between the configured triggered AP-SRS-resource(s) and co-scheduled cells. After transmitting the MAC CE, the base station may transmit a PDCCH including the SRS request information in the DCI to the UE, finally associating and indicating co-scheduled cells and triggered AP-SRS-resource(s). This will be described in detail in the description of an embodiment of the disclosure with reference to FIGS. 14 to 16.

Hereinafter, a method for indicating up to 4-bit SRS request information on the assumption that the base station indicates co-scheduled cell information having a 4-bit value and of type A/B to the UE. An example of the 4-bit type A/B co-scheduled cell information may also be found in Table 21.

In an embodiment, the value range of the table indicated in the SRS request field in DCI format 0_3/1_3 for a multi-carrier may be indicated to match the value range of the SRS request field in DCI format 0_1/1_1. In this case, the value range itself in the table may be configured as and correspond to {00, 01, 10, 11}. In this case, since the range is determined by only 2 bits of the entire 4-bit field, up to 2 table values may be indicated.

FIG. 14 is a diagram illustrating an example of a field indicating multiple cells and an SRS request in MC-DCI according to an embodiment of the disclosure. FIG. 14A illustrates an example 1400 where the number of co-scheduled cells scheduled by MC-DCI is 2, and FIG. 14B illustrates an example 1450 where the number of co-scheduled cells scheduled by MC-DCI is 3.

With reference to FIG. 14A, an embodiment 1400 of the correspondence between information configuration of MC-DCI transmitted by a base station and SRS request information associated therewith will be described. The MC-DCI may include information about co-scheduled cells, FDRA information for co-scheduled cells, and an SRS request field. For more specific details on FDRA information for co-scheduled cells, please refer to the description of the first embodiment.

For example, the base station may indicate to the UE information about two co-scheduled cells in DCI format 0_3 and/or DCI format 1_3 for MC-DCI. DCI format 0_3/1_3 may include information about co-scheduled cells. DCI format 0_3/1_3 including information about co-scheduled cells may be understood as an example of MC-DCI. For example, when the UE receives a value of 0010 as shown in Table 21, the UE may determine that the indicated cell 0 and cell 3 are indicated as co-scheduled cells. That is, when the UE identifies 0010 as co-scheduled cell information from the DCI, the UE may determine that cell 0 and cell 3 are indicated as co-scheduled cells. When two cells are indicated in this way, the base station may allocate, to the UE, first 2 bits for cell 0, which corresponds to the first of the two cells, and the remaining 2 bits for cell 3, which corresponds to the second. 2 MSBs of the 4-bit SRS request field may correspond to/be mapped to the first cell (cell 0) among the co-scheduled cells. 2 LSBs of the 4-bit SRS request field may correspond to/be mapped to the second cell (cell 3) among the co-scheduled cells.

For example, when the SRS request information received by the UE is 0010, the UE may determine that the SRS is transmitted using the SRS resources configured in Triggered AP-SRS-resource(s) set 0 associated with the first cell (e.g., cell 0) and the SRS resources configured in Triggered AP-SRS-resource(s) set 2 associated with the second cell (e.g., cell 3). Here, the UE may not expect the associated Triggered AP-SRS-resource(s) set index to be unconfigured.

For example, when the value of the 2 MSBs of the 4-bit SRS request field is 00, this may indicate Triggered AP-SRS-resource(s) set 0 for the first cell among the co-scheduled cells. That is, the UE may transmit an SRS for the first cell using the SRS resources configured in Triggered AP-SRS-resource(s) set 0.

For example, when the value of the 2 MSBs of the 4-bit SRS request field is 01, this may indicate Triggered AP-SRS-resource(s) set 1 for the first cell among the co-scheduled cells. That is, the UE may transmit an SRS to the first cell using the SRS resources configured in Triggered AP-SRS-resource(s) set 1.

For example, when the value of the 2 MSBs of the 4-bit SRS request field is 10, this may indicate Triggered AP-SRS-resource(s) set 2 for the first cell among the co-scheduled cells. That is, the UE may transmit an SRS for the first cell using the SRS resources configured in Triggered AP-SRS-resource(s) set 2.

For example, when the value of the 2 MSBs of the 4-bit SRS request field is 11, this may indicate Triggered AP-SRS-resource(s) set 3 for the first cell among the co-scheduled cells. That is, the UE may transmit an SRS for the first cell using the SRS resources configured in Triggered AP-SRS-resource(s) set 3.

For example, when the value of the 2 LSBs of the 4-bit SRS request field is 00, this may indicate Triggered AP-SRS-resource(s) set 0 for the second cell among the co-scheduled cells. That is, the UE may transmit an SRS for the second cell using the SRS resources configured in Triggered AP-SRS-resource(s) set 0.

For example, when the value of the 2 LSBs of the 4-bit SRS request field is 01, this may indicate Triggered AP-SRS-resource(s) set 1 for the second cell among the co-scheduled cells. That is, the UE may transmit an SRS for the second cell using the SRS resources configured in Triggered AP-SRS-resource(s) set 1.

For example, when the value of the 2 LSBs of the 4-bit SRS request field is 10, this may indicate Triggered AP-SRS-resource(s) set 2 for the second cell among the co-scheduled cells. That is, the UE may transmit an SRS for the second cell using the SRS resources configured in Triggered AP-SRS-resource(s) set 2.

For example, when the value of the 2 LSBs of the 4-bit SRS request field is 11, this may indicate Triggered AP-SRS-resource(s) set 3 for the second cell among the co-scheduled cells. That is, the UE may transmit an SRS for the second cell using the SRS resources configured in Triggered AP-SRS-resource(s) set 3.

An example of the SRS request field may be found in Table 23. The SRS-Request-IndicatorList may be a configuration IE that allows RRC to request multiple SRS resources for indication at the multi-carrier/multi-scheduled DCI/MAC CE level.

[Table 23]

| |
|---|
| - SRS request field (e.g. 4bits) for DCI format 0_3 or 1_3 |
| [0000] 1st entry in SRS-Request-IndicatorList-DCI-0-3 or SRS-Request-IndicatorList-DCI-1-3 |
| [0001] 2nd entry in SRS-Request-IndicatorList-DCI-0-3 or SRS-Request-IndicatorList-DCI-1-3 |
| … |
| [1110] 15th entry in SRS-Request-IndicatorList-DCI-0-3 or SRS-Request-IndicatorList-DCI-1-3 |
| [1111] 16th entry in SRS-Request-IndicatorList-DCI-0-3 or SRS-Request-IndicatorList-DCI-1-3 |

For example, when the format of the received DCI is 0_3, the SRS request field may be interpreted as above based on SRS-Request-IndicatorList-DCI-0-3, and when the format of the received DCI is 1_3, the SRS request field may be interpreted as above based on SRS-Request-IndicatorList-DCI-1-3.

An embodiment 1450 of the correspondence between the information configuration of MC-DCI transmitted by the base station and the SRS request information associated therewith will be described with reference to FIG. 14B. The MC-DCI may include information about co-scheduled cells, FDRA information for co-scheduled cells, and an SRS request field. For more specific details on FDRA information for co-scheduled cells, please refer to the description of the first embodiment.

Extending the embodiment 1400 in FIG. 14A, for example, the base station may indicate to the UE information about three co-scheduled cells in DCI format 0_3 and/or DCI format 1_3 for MC-DCI. DCI format 0_3/1_3 may include information about co-scheduled cells. DCI format 0_3/1_3 including information about co-scheduled cells may be understood as an example of MC-DCI. For example, when the UE receives a value of 0111 as shown in Table 21, the UE may determine that the indicated cell 0, cell 1, and cell 3 are indicated as co-scheduled cells. That is, when the UE identifies 0111 as co-scheduled cell information from the DCI, the UE may determine that cell 0, cell 1, and cell 3 are indicated as co-scheduled cells. When three cells are indicated in this way, the base station may allocate, to the UE, first 2 bits for cell 0 and/or cell 1, which correspond to the first of the three cells, and the remaining 2 bits for cell 3, which corresponds to the second. 2 MSBs of the 4-bit SRS request field may correspond to/be mapped to the first cell (cell 0) and the second cell (cell 1) among the co-scheduled cells. 2 LSBs of the 4-bit SRS request field may correspond to/be mapped to the third cell (cell 3) among the co-scheduled cells. For example, when the SRS request information received by the UE is 1110, the UE may determine that the SRS is transmitted using the SRS resources configured in Triggered AP-SRS-resource(s) set 3 associated with the cell (e.g., cell 0 and/or cell 1) for the first 2 bits, and using the SRS resources configured in Triggered AP-SRS-resource(s) set 2 associated with the cell (e.g., cell 3) for the second 2 bits.

For example, when the value of the 2 MSBs of the 4-bit SRS request field is 00, this may indicate Triggered AP-SRS-resource(s) set 0 for the first and second cells among the co-scheduled cells. That is, the UE may transmit an SRS for the first and second cells using the SRS resources configured in Triggered AP-SRS-resource(s) set 0.

For example, when the value of the 2 MSBs of the 4-bit SRS request field is 01, this may indicate Triggered AP-SRS-resource(s) set 1 for the first and second cells among the co-scheduled cells. That is, the UE may transmit an SRS for the first and second cells using the SRS resources configured in Triggered AP-SRS-resource(s) set 1.

For example, when the value of the 2 MSBs of the 4-bit SRS request field is 10, this may indicate Triggered AP-SRS-resource(s) set 2 for the first and second cells among the co-scheduled cells. That is, the UE may transmit an SRS for the first and second cells using the SRS resources configured in Triggered AP-SRS-resource(s) set 2.

For example, when the value of the 2 MSBs of the 4-bit SRS request field is 11, this may indicate Triggered AP-SRS-resource(s) set 3 for the first and second cells among the co-scheduled cells. That is, the UE may transmit an SRS for the first and second cells using the SRS resources configured in Triggered AP-SRS-resource(s) set 3.

For example, when the value of the 2 LSBs of the 4-bit SRS request field is 00, this may indicate Triggered AP-SRS-resource(s) set 0 for the third cell among the co-scheduled cells. That is, the UE may transmit an SRS for the third cell using the SRS resources configured in Triggered AP-SRS-resource(s) set 0.

For example, when the value of the 2 LSBs of the 4-bit SRS request field is 01, this may indicate Triggered AP-SRS-resource(s) set 1 for the third cell among the co-scheduled cells. That is, the UE may transmit an SRS for the third cell using the SRS resources configured in Triggered AP-SRS-resource(s) set 1.

For example, when the value of the 2 LSBs of the 4-bit SRS request field is 10, this may indicate Triggered AP-SRS-resource(s) set 2 for the third cell among the co-scheduled cells. That is, the UE may transmit an SRS for the third cell using the SRS resources configured in Triggered AP-SRS-resource(s) set 2.

For example, when the value of the 2 LSBs of the 4-bit SRS request field is 11, this may indicate Triggered AP-SRS-resource(s) set 3 for the third cell among the co-scheduled cells. That is, the UE may transmit an SRS for the third cell using the SRS resources configured in Triggered AP-SRS-resource(s) set 3.

Alternatively, the base station may allocate, to the UE, first 2 bits for cell 0 corresponding to the first of the three cells, and the remaining 2 bits for cell 1 and/or cell 3 corresponding to the second. The 2 MSBs of the 4-bit SRS request field may correspond to/be mapped to the first cell (cell 0) among the co-scheduled cells, and the 2 LSBs of the 4-bit SRS request field may correspond to/be mapped to the second cell (cell 1) and third cell (cell 3) among the co-scheduled cells. For example, when the SRS request information received by the UE is 1110, the UE may determine that the SRS is transmitted using the SRS resources configured in Triggered AP-SRS-resource(s) set 3 associated with the first cell (e.g., cell 0) and the SRS resources configured in Triggered AP-SRS-resource(s) set 2 associated with the second cell (e.g., cell 1 and/or cell 3).

For example, when the value of the 2 MSBs of the 4-bit SRS request field is 00, this may indicate Triggered AP-SRS-resource(s) set 0 for the first cell among the co-scheduled cells. That is, the UE may transmit an SRS for the first cell using the SRS resources configured in Triggered AP-SRS-resource(s) set 0.

For example, when the value of the 2 MSBs of the 4-bit SRS request field is 01, this may indicate Triggered AP-SRS-resource(s) set 1 for the first cell among the co-scheduled cells. That is, the UE may transmit an SRS for the first cell using the SRS resources configured in Triggered AP-SRS-resource(s) set 1.

For example, when the value of the 2 MSBs of the 4-bit SRS request field is 10, this may indicate Triggered AP-SRS-resource(s) set 2 for the first cell among the co-scheduled cells. That is, the UE may transmit an SRS for the first cell using the SRS resources configured in Triggered AP-SRS-resource(s) set 2.

For example, when the value of the 2 MSBs of the 4-bit SRS request field is 11, this may indicate Triggered AP-SRS-resource(s) set 3 for the first cell among the co-scheduled cells. That is, the UE may transmit an SRS for the first cell using the SRS resources configured in Triggered AP-SRS-resource(s) set 3.

For example, when the value of the 2 LSBs of the 4-bit SRS request field is 00, this may indicate Triggered AP-SRS-resource(s) set 0 for the second and third cells among the co-scheduled cells. That is, the UE may transmit an SRS for the second and third cells using the SRS resources configured in Triggered AP-SRS-resource(s) set 0.

For example, when the value of the 2 LSBs of the 4-bit SRS request field is 01, this may indicate Triggered AP-SRS-resource(s) set 1 for the second and third cells among the co-scheduled cells. That is, the UE may transmit an SRS for the second and third cells using the SRS resources configured in Triggered AP-SRS-resource(s) set 1.

For example, when the value of the 2 LSBs of the 4-bit SRS request field is 10, this may indicate Triggered AP-SRS-resource(s) set 2 for the second and third cells among the co-scheduled cells. That is, the UE may transmit an SRS for the second and third cells using the SRS resources configured in Triggered AP-SRS-resource(s) set 2.

For example, when the value of the 2 LSBs of the 4-bit SRS request field is 11, this may indicate Triggered AP-SRS-resource(s) set 3 for the second and third cells among the co-scheduled cells. That is, the UE may transmit an SRS for the second and third cells using the SRS resources configured in Triggered AP-SRS-resource(s) set 3.

In the embodiment described above, the UE may not expect the associated Triggered AP-SRS-resource(s) set index to be unconfigured. In addition, whether the first two cells of the three co-scheduled cells are associated with the first 2 bits or the remaining 2 bits may be predetermined between the base station and the UE, or configured according to parameters (e.g., follow_first or follow_second) during the RRC configuration process. Alternatively, whether the first two cells of the three co-scheduled cells are associated with the first 2 bits and the remaining one cell is associated with the remaining 2 bits, or whether the first one cell of the three co-scheduled cells is associated with the first 2 bits and the remaining two cells are associated with the remaining 2 bits may be predetermined between the base station and the UE, or configured according to parameters during the RRC configuration process.

FIG. 15 illustrates other embodiments of the correspondence between the information configuration of MC-DCI transmitted by the base station and the SRS request information associated therewith. FIG. 15 illustrates examples 1500 and 1550 where the number of co-scheduled cells scheduled by MC-DCI is 4. The MC-DCI may include information about co-scheduled cells, FDRA information for co-scheduled cells, and an SRS request field. For more specific details on FDRA information for co-scheduled cells, please refer to the description of the first embodiment.

Referring to FIG. 15A, for example, the base station may indicate to the UE information about four co-scheduled cells in DCI format 0_3 and/or DCI format 1_3 for MC-DCI. DCI format 0_3/1_3 may include information about co-scheduled cells. DCI format 0_3/1_3 including information about co-scheduled cells may be understood as an example of MC-DCI. Here, when the UE receives a value of 1010 as shown in Table 21, the UE may determine that the indicated cell 0, cell 1, cell 2, and cell 3 are indicated as co-scheduled cells. That is, when the UE identifies 1010 as co-scheduled cell information from the DCI, the UE may determine that cell 0, cell 1, cell 2, and cell 3 are indicated as co-scheduled cells. When four cells are indicated in this way, the base station may allocate, to the UE, first 2 bits for cell 0 and/or cell 1, which correspond to the first of the four cells, and the remaining 2 bits for cell 2 and/or cell 3, which correspond to the second. 2 MSBs of the 4-bit SRS request field may correspond to/be mapped to the first cell (cell 0) and the second cell (cell 1) among the co-scheduled cells. 2 LSBs of the 4-bit SRS request field may correspond to/be mapped to the third cell (cell 3) and the fourth cell (cell 4) among the co-scheduled cells.

For example, when the SRS request information received by the UE is 0010, the UE may determine that the SRS is transmitted using the SRS resources configured in Triggered AP-SRS-resource(s) set 0 associated with the cell (e.g., cell 0 and/or cell 1) for the first 2 bits, and using the SRS resources configured in Triggered AP-SRS-resource(s) set 2 associated with the cell (e.g., cell 2 and/or cell 3) for the second 2 bits.

For example, when the value of the 2 MSBs of the 4-bit SRS request field is 00, this may indicate Triggered AP-SRS-resource(s) set 0 for the first and second cells among the co-scheduled cells. That is, the UE may transmit an SRS for the first and second cells using the SRS resources configured in Triggered AP-SRS-resource(s) set 0.

For example, when the value of the 2 MSBs of the 4-bit SRS request field is 01, this may indicate Triggered AP-SRS-resource(s) set 1 for the first and second cells among the co-scheduled cells. That is, the UE may transmit an SRS for the first and second cells using the SRS resources configured in Triggered AP-SRS-resource(s) set 1.

For example, when the value of the 2 MSBs of the 4-bit SRS request field is 10, this may indicate Triggered AP-SRS-resource(s) set 2 for the first and second cells among the co-scheduled cells. That is, the UE may transmit an SRS for the first and second cells using the SRS resources configured in Triggered AP-SRS-resource(s) set 2.

For example, when the value of the 2 MSBs of the 4-bit SRS request field is 11, this may indicate Triggered AP-SRS-resource(s) set 3 for the first and second cells among the co-scheduled cells. That is, the UE may transmit an SRS for the first and second cells using the SRS resources configured in Triggered AP-SRS-resource(s) set 3.

For example, when the value of the 2 LSBs of the 4-bit SRS request field is 00, this may indicate Triggered AP-SRS-resource(s) set 0 for the third and fourth cells among the co-scheduled cells. That is, the UE may transmit an SRS for the third and fourth cells using the SRS resources configured in Triggered AP-SRS-resource(s) set 0.

For example, when the value of the 2 LSBs of the 4-bit SRS request field is 01, this may indicate Triggered AP-SRS-resource(s) set 1 for the third and fourth cells among the co-scheduled cells. That is, the UE may transmit an SRS for the third and fourth cells using the SRS resources configured in Triggered AP-SRS-resource(s) set 1.

For example, when the value of the 2 LSBs of the 4-bit SRS request field is 10, this may indicate Triggered AP-SRS-resource(s) set 2 for the third and fourth cells among the co-scheduled cells. That is, the UE may transmit an SRS for the third and fourth cells using the SRS resources configured in Triggered AP-SRS-resource(s) set 2.

For example, when the value of the 2 LSBs of the 4-bit SRS request field is 11, this may indicate Triggered AP-SRS-resource(s) set 3 for the third and fourth cells among the co-scheduled cells. That is, the UE may transmit an SRS for the third and fourth cells using the SRS resources configured in Triggered AP-SRS-resource(s) set 3.

According to the various embodiments described above, up to two SRS resource set ids, among the SRS resource set ids configured in RRC, may be indicated in MC-DCI to correspond to SRS request information. According to this, up to four co-scheduled cells may be paired and each pair may be assigned an SRS resource set ID.

Hereinafter, a method of supporting flexible indication according to additional RRC configurations and/or determined rules between the base station and the UE to supplement the flexibility of the base station instructing the UE to transmit an SRS will be described.

As an embodiment, the range of values in the table indicated in the SRS request field in DCI format 0_3/1_3 for a multi-carrier may be indicated to match the range of values in the SRS request field in DCI format 0_1/1_1. The values {00, 01, 10, 11} in the field may correspond to SRS resource set LIST IDs or SRS resource set LIST pattern/rule IDs. Here, the SRS resource set LIST IDs may be configured to correspond to 0 to 3. In addition, the SRS resource set LIST pattern/rule IDs may be configured as a preconfigured pattern (e.g., 2/3/0/1), an incremental pattern (e.g., 0/1/2/3), a rule-based pattern (e.g., 0/0/1/1, 2/2/3/3), or the like, and each pattern may correspond to a configured value 00 to 11.

Specifically, referring to FIG. 15B, the base station may indicate to the UE information about four co-scheduled cells in DCI format 0_3 and/or DCI format 1_3 for MC-DCI. DCI format 0_3/1_3 may include information about co-scheduled cells. DCI format 0_3/1_3 including information about co-scheduled cells may be understood as an example of MC-DCI. Here, when the UE receives a value of 1010 as shown in Table 21, the UE may determine that the indicated cell 0, cell 1, cell 2, and cell 3 are indicated as co-scheduled cells. That is, when the UE identifies 1010 as co-scheduled cell information from the DCI, the UE may determine that cell 0, cell 1, cell 2, and cell 3 are indicated as co-scheduled cells. When four cells are indicated in this way, and an incremental pattern (e.g., 0/1/2/3) is determined or configured, the base station may allocate first 2 bits, as a reference, for cell 0 and/or cell 1 corresponding to the first of the four cells, and allocate the remaining 2 bits, as a reference, for cell 2 and/or cell 3 corresponding to the second.

That is, when the SRS request information received by the UE is 0010, the UE may determine that the SRS is transmitted using the SRS resources configured in Triggered AP-SRS-resource(s) set 0 in the first cell (cell 0) associated with the cell (e.g., cell 0 and/or cell 1) for the first 2 bits, using the SRS resources configured in Triggered AP-SRS-resource(s) set 1 in the second cell (cell 1) associated with the cell (e.g., cell 0 and/or cell 1) for the first 2 bits, using the SRS resources configured in Triggered AP-SRS-resource(s) set 2 in the first cell (cell 2) associated with the cell (e.g., cell 2 and/or cell 3) for the second 2 bits, and using the SRS resources configured in Triggered AP-SRS-resource(s) set 3 in the second cell (cell 3) associated with the cell (e.g., cell 2 and/or cell 3) for the second 2 bits.

For the 4-bit SRS request information, when the 2-bit MSBs and the 2-bit LSBs are distinguished, each of the 2 bits may indicate as follows.

When the MSBs are 00, AP-SRS resource set 0 for the first cell and AP-SRS resource set 1 for the second cell.

When the MSBs are 01, AP-SRS resource set 1 for the first cell and AP-SRS resource set 2 for the second cell.

When the MSBs are 10, AP-SRS resource set 2 for the first cell and AP-SRS resource set 3 for the second cell.

When the MSBs are 11, AP-SRS resource set 3 for the first cell and AP-SRS resource set 0 for the second cell.

When the LSBs are 00, AP-SRS resource set 0 for the third cell and AP-SRS resource set 1 for the fourth cell.

When the LSBs are 01, AP-SRS resource set 1 for the third cell and AP-SRS resource set 2 for the fourth cell.

When the LSBs are 10, AP-SRS resource set 2 for the third cell and AP-SRS resource set 3 for the fourth cell

When the LSBs are 11, then AP-SRS resource set 3 for the third cell and AP-SRS resource set 0 for the fourth cell.

As another example, when 4 bits of SRS request information are interpreted at once, for example, in the case of 0000, they may be interpreted as AP-SRS resource set 0 for the first cell, AP-SRS resource set 1 for the second cell, AP-SRS resource set 2 for the third cell, and AP-SRS resource set 3 for the fourth cell, and in the case of 0001, they may be interpreted as AP-SRS resource set 1 for the first cell, AP-SRS resource set 2 for the second cell, AP-SRS resource set 3 for the third cell, and AP-SRS resource set 0 for the fourth cell. Specifically, the base station may indicate to the UE information about three co-scheduled cells in DCI format 0_3 and/or DCI format 1_3 for MC-DCI. Here, when the UE receives a value of 0111 as shown in Table 21, the UE may determine that the indicated cell 0, cell 1, and cell 3 are indicated as co-scheduled cells. That is, when the UE identifies 0111 as co-scheduled cell information from the DCI, the UE may determine that cell 0, cell 1, and cell 3 are indicated as co-scheduled cells. When three cells are indicated in this way, and an incremental pattern (e.g., 0/1/2/3) is determined or configured, the base station may allocate first 2 bits, as a reference, for cell 0 and/or cell 1 corresponding to the first of the three cells, and allocate the remaining 2 bits, as a reference, for cell 2 and/or cell 3 corresponding to the second. For example, the first 2 bits may be allocated to cell 0, and the remaining 2 bits may be allocated to cell 1 and cell 2. Alternatively, the first 2 bits may be allocated to cell 0 and cell 1, and the remaining 2 bits may be allocated to cell 2.

That is, when the SRS request information received by the UE is 0010, the UE may determine that the SRS is transmitted using the SRS resources configured in Triggered AP-SRS-resource(s) set 0 in the first cell (cell 0) associated with the cell (e.g., cell 0 and/or cell 1) for the first 2 bits, using the SRS resources configured in Triggered AP-SRS-resource(s) set 1 in the second cell (cell 1) associated with the cell (e.g., cell 0 and/or cell 1) for the first 2 bits, and using the SRS resources configured in Triggered AP-SRS-resource(s) set 2 in the cell (e.g., cell 3) for the second 2 bits.

For the 4-bit SRS request information, when the 2-bit MSBs and the 2-bit LSBs are distinguished, each of the 2 bits may indicate as follows. For example, they are assumed to be configured in ascending order.

When the MSBs are 00, AP-SRS resource set 0 for the first cell and AP-SRS resource set 1 for the second cell.

When the MSBs are 01, AP-SRS resource set 1 for the first cell and AP-SRS resource set 2 for the second cell.

When the MSBs are 10, AP-SRS resource set 2 for the first cell and AP-SRS resource set 3 for the second cell.

When the MSBs are 11, AP-SRS resource set 3 for the first cell and AP-SRS resource set 0 for the second cell.

When the LSBs are 00, AP-SRS resource set 0 for the third cell.

When the LSBs are 01, AP-SRS resource set 1 for the third cell.

When the LSBs are 10, AP-SRS resource set 2 for the third cell.

When the LSBs are 11, AP-SRS resource set 3 for the third cell.

The above-described embodiment describes an embodiment based on a single incremental pattern or rule, and may be extended and applied to various other patterns or rules.

As another embodiment, the range of values in the table indicated by the SRS request field in DCI format 0_3/1_3 for a multi-carrier may be indicated not to match the range of values of the SRS request field in DCI format 0_1/1_1. For example, each bit in the 4-bit field may be indicated to correspond to an SRS resource set LIST ID. For example, when there are four co-scheduled cells and 4 bits are 0000, each of the 4 bits may correspond to/be mapped to the co-scheduled cells in ascending order. For example, when each value of the field is 0, it may be determined to be mapped to an even-numbered ID, such as SRS resource set LIST ID 0 or SRS resource set LIST IDs 0 and 2. On the other hand, when each value of the field is 1, it may be determined to be mapped to an odd-numbered ID, such as SRS resource set LIST ID 1 or SRS resource set LIST IDs 1 and 3. Whether a single ID or tow IDs are indicated above may be determined based on whether the number of co-scheduled cells is two or fewer or three or more.

According to the various embodiments described above, up to two SRS resource set ids, among the SRS resource set ids configured in RRC, may be indicated in MC-DCI to correspond to SRS request information. According to this, up to four co-scheduled cells may be paired and each pair may be assigned an SRS resource set id.

Hereinafter, a method of further utilizing a MAC-CE message to supplement the flexibility of the base station instructing the UE to transmit an SRS will be described. That is, the MAC CE message may be utilized to enhance scalability between the base station and the UE. According to an embodiment of the disclosure, SRS resources may be indicated based on RRC and DCI (RRC and DCI-based joint indication) and/or based on RRC, MAC CE, and DCI (RRC, MAC CE, and DCI-based joint indication). The above description of an embodiment of the disclosure is intended for an embodiment in which SRS resources are indicated based on DCI, and an embodiment in which SRS resources are indicated based on RRC, MAC CE, and DCI will be described below. The following embodiment may be applied in combination with an embodiment of the disclosure described above.

FIG. 16 is a diagram illustrating an example of a MAC-CE message for indicating multiple cells and an SRS request in MC-DCI according to an embodiment of the disclosure.

Examples 1600, 1620, and 1640 of the MAC CE structure/format according to an embodiment of the disclosure will be described with reference to FIG. 16. According to an embodiment of the disclosure, MAC CE message formats 1600, 1620, and 1640 capable of updating an SRS resource set while appropriately matching the number of co-scheduled cells for SRS resource set resources configured in RRC may be provided.

To indicate an SRS request of MC-DCI, the MAC CE message transmitted by the base station may include at least one piece of the following information.

First, the MAC CE message may include a BWP ID for uplink to configure the SRS resource set. Here, four BWP IDs are basically configured, and 2 bits may be allocated for this. A 2-bit field for indicating one of the four BWP IDs may be included/allocated in the MAC CE. The BWP ID may be a UL BWP for SRS transmission.

Second, the MAC CE message may include IDs corresponding to the configuration of co-scheduled cells configured by RRC configuration. Example of IDs corresponding to the co-scheduled cell configuration may be found in Table 21, and the ID included in the MAC CE message may be interpreted according to the table.

Third, the MAC CE message may include the number of co-scheduled cells. Information about the number of co-scheduled cells may be used to identify the configuration or setting of information within the MAC CE. For example, the location (e.g., the start and end of the field) of a field for resource mapping within the MAC CE may be identified based on the number of co-scheduled cells. For example, a 2-bit field for indicating the number of updated cells may be included/allocated to the MAC CE. For example, the case where 2 cells are updated in MAC-CE, the case where 3 cells are updated in MAC-CE, and the case when 4 cells are updated in MAC-CE may be mapped to 00, 01, 10, and 11, respectively, and the remaining cases may be left blank in the reserved format or omitted when unnecessary.

Fourth, the MAC-CE message may include at least some resource ids among the Triggered AP-SRS-resource(s) configured in the RRC configuration, and/or may include at least some set ids among the Triggered AP-SRS-resources.

For example, referring to FIGS. 16A to 16D, when the UE receives a MAC-CE message after identifying the number of specific BWP IDs, co-scheduled cell IDs, and the number of co-scheduled cells in the RRC configuration, the UE may identify the set of co-scheduled cells according to the co-scheduled cell IDs and configure SRS resource set IDs corresponding to the respective cells.

For example, referring to FIGS. 16A and 16D, when the co-scheduled cell ID is 0010, the MAC CE message may include up to 16 SRS resource set IDs (SRS request fields: 0000 to 1111) that commonly correspond to cell 0 and cell 3. After receiving the MAC-CE, the UE may identify the MC-DCI information including the SRS request field described above and transmit an SRS, based on the resources corresponding to the common SRS resource set ID indicated by the SRS request information. For example, referring back to the description of FIG. 14A, in the case of RRC and DCI-based indications, for example, when the SRS request field in the DCI is 0000, it may be understood that Triggered AP-SRS-resource set 0 is indicated for the first cell, and that Triggered AP-SRS-resource set 0 is indicated for the second cell. On the other hand, in the case of RRC, MAC CE, and DCI-based indications, i.e., when MAC CE for updating the SRS resource set is received, the SRS request field in the DCI may be interpreted as the information updated by the MAC CE, rather than as interpreted as in FIG. 14A. For example, when the SRS resource set ID for the SRS request field value 0000 is indicated for cell 0 and cell 3 in the MAC CE, and then an SRS request field, indicating cell 0 and cell 3, as co-scheduled cells, and indicating 0000, is received in the DCI, the SRS request field may be interpreted as the SRS resource set IDs indicated in the MAC CE.

As another example, referring to FIGS. 16B and 16D, when the co-scheduled cell ID is 0010 (e.g., number of scheduled cells = 2), the MAC CE message may include up to 16 SRS resource Set IDs corresponding to cell 0 and up to 16 SRS resource set IDs (SRS request fields: 0000 to 1111) correspond to cell 3. After receiving the MAC-CE, the UE may identify the MC-DCI information including the SRS request field described above and transmit an SRS, based on the first SRS resource set ID and the second SRS resource set ID in the MAC-CE message configuration information, corresponding to the values indicated by the SRS request information. For example, referring back to the description of FIG. 14B, in the case of RRC and DCI-based indications, for example, when the SRS request field in the DCI is 0000, it may be understood that Triggered AP-SRS-resource set 0 is indicated for the first cell and second cell, and that Triggered AP-SRS-resource set 0 is indicated for the third cell. On the other hand, in the case of RRC, MAC CE, and DCI-based indications, i.e., when MAC CE for updating the SRS resource set is received, the SRS request field in the DCI may be interpreted as the information updated by the MAC CE, rather than as interpreted as in FIG. 14B. For example, when the SRS resource set ID for the SRS request field value 0000 is indicated for cell 0 and cell 1 and the SRS resource set ID for the SRS request field value 0000 is indicated for cell 3 in the MAC CE, and then an SRS request field, indicating cell 0, cell 1, and cell 3, as co-scheduled cells, and indicating 0000, is received in the DCI, the SRS request field may be interpreted as the SRS resource set IDs indicated in the MAC CE.

As another example, referring to FIGS. 16C and 16D, when the co-scheduled cell ID is 1010 (e.g., number of scheduled cells = 4), the MAC CE message may include up to 16 SRS resource Set IDs corresponding to each of cell 0, cell 1, cell 2, and cell 3, that is, a total of up to 64 SRS resource Set IDs. After receiving the MAC-CE, the UE may identify the information of the MC-DCI including the SRS request field described above, and transmit an SRS, based on the first to fourth SRS resource set IDs corresponding to the values indicated by the SRS request information in the MAC-CE message configuration information. For example, referring back to the description of FIG. 15A, in the case of RRC and DCI-based indications, for example, when the SRS request field in the DCI is 0000, it may be understood that Triggered AP-SRS-resource set 0 is indicated for the first and second cells, and that Triggered AP-SRS-resource set 0 is indicated for the third and fourth cells. On the other hand, in the case of RRC, MAC CE, and DCI-based indications, i.e., when MAC CE for updating the SRS resource set is received, the SRS request field in the DCI may be interpreted as the information updated by the MAC CE, rather than as interpreted as in FIG. 15A. For example, when the SRS resource set ID for the SRS request field value 0000 is indicated for cell 0 and cell 1, and the SRS resource set ID for the SRS request field value 0000 is indicated for cell 2 and cell 3 in the MAC CE, and then an SRS request field, indicating cell 0, cell 1, cell 2, and cell 3, as co-scheduled cells, and indicating 0000, is received in the DCI, the SRS request field may be interpreted as the SRS resource set IDs indicated in the MAC CE.

FIG. 17 is a diagram illustrating the operation of a UE according to an embodiment of the disclosure. Various modifications may be made to the method shown in the flowchart of FIG. 17. For example, although a series of operations are illustrated, various operations in each drawing may overlap, occur in parallel, occur in a different order, or occur multiple times. In other examples, operations may be omitted or replaced with other operations.

In operation 1700, the UE may report UE capability to the base station. At this time, the UE capability reported by the UE to the base station may include information about at least one of whether to support at least one of the number of cell sets capable of being scheduled via MC-DCI, the maximum number of cells for each cell set, and the maximum number of SRS resources (sets), and whether to support at least one in the MAC-CE described in FIG. 16. In addition, when the UE has previously reported the UE capability to the base station or UE capability reporting is not required, operation 1700 may be omitted.

In operation 1705, the UE may receive higher layer signaling from the base station. The information transmitted through the higher layer signaling may include at least one of information about at least one of one or more cell indices within a cell set and a table including cell scheduling information within each cell set capable of being scheduled via MC-DCI and/or SRS resource (set) information, and information about whether to support at least one in the MAC-CE illustrated in FIG. 16.

In operation 1710, the UE may receive a MAC-CE from the base station. At this time, the MAC-CE that the UE may receive from the base station may be a MAC-CE that associates and activates information in the SRS request field included in DCI formats 0_3 and 1_3 within each BWP in each cell capable of being scheduled for the UE via MC-DCI. For example, it may be at least one piece of information that constitutes the MAC-CE in FIG. 16. For the embodiments of FIGS. 14 and 15 in which a MAC-CE is not required, this operation may be omitted.

In operation 1715, the UE may configure each code point of the co-scheduled cells and/or SRS request field in the MC-DCI, based on the information received from the base station. In addition, the UE may assume that the base station will also configure each codepoint of the co-scheduled cells and/or SRS request field within the MC-DCI in the same manner.

In operation 1720, the UE may receive MC-DCI from the base station. At this time, the MC-DCI may include scheduling information and an SRS request field for one or more cells.

In operation 1725, the UE may transmit SRS signals for multiple cells, based on the scheduling information in the MC-DCI received from the base station.

FIG. 18 is a diagram illustrating the operation of a base station according to an embodiment of the disclosure. Various modifications may be made to the method shown in the flowchart of FIG. 18. For example, although a series of operations are illustrated, various operations in each drawing may overlap, occur in parallel, occur in a different order, or occur multiple times. In other examples, operations may be omitted or replaced with other operations.

In operation 1800, the base station may receive UE capability from the UE. At this time, the UE capability reported by the UE to the base station may include information about at least one of whether to support at least one of the number of cell sets capable of being scheduled via MC-DCI, the maximum number of cells for each cell set, and the maximum number of SRS resources (sets), and whether to support at least one in the MAC-CE described in FIG. 16. In addition, when the base station has previously received the UE capability or UE capability reporting is not required, operation 1800 may be omitted.

In operation 1805, the base station may transmit higher layer signaling to the UE. The information transmitted through the higher layer signaling may include at least one of information about at least one of one or more cell indices within a cell set and a table including cell scheduling information within each cell set capable of being scheduled via MC-DCI and/or SRS resource (set) information, and information about whether to support at least one in the MAC-CE illustrated in FIG. 16.

In operation 1810, the base station may transmit a MAC-CE to the UE. At this time, the MAC-CE that the UE may receive from the base station may be a MAC-CE that associates and activates information in the SRS request field included in DCI formats 0_3 and 1_3 within each BWP in each cell capable of being scheduled for the UE via MC-DCI. For example, it may be at least one piece of information that constitutes the MAC-CE in FIG. 16. For the embodiments of FIGS. 14 and 15 in which a MAC-CE is not required, this operation may be omitted.

In operation 1815, the base station may configure each codepoint of the co-scheduled cells and/or SRS request field within the MC-DCI, based on the information transmitted to the UE. In addition, the base station may assume that the UE will also configure each codepoint of the co-scheduled cells and/or SRS request field in the same manner.

In operation 1820, the base station may transmit MC-DCI to the UE. At this time, the MC-DCI may include scheduling information and an SRS request field for one or more cells.

In operation 1825, the base station may receive SRS signals for multiple cells, based on the scheduling information in the MC-DCI transmitted to the UE.

FIG. 19 is a diagram illustrating the operation of a UE according to an embodiment of the disclosure. Various modifications may be made to the method shown in the flowchart of FIG. 19. For example, although a series of operations are illustrated, various operations in each drawing may overlap, occur in parallel, occur in a different order, or occur multiple times. In other examples, operations may be omitted or replaced with other operations.

In operation 1910, the UE may receive information about sounding reference signal (SRS) resource configuration via an RRC message or higher layer signaling.

In operation 1920, the UE may receive a MAC CE. The operation of receiving the MAC CE may be omitted.

In operation 1930, the UE may receive downlink control information (DCI) for scheduling multiple cells. The DCI may include an SRS request field.

In operation 1940, the UE may transmit an SRS. According to an embodiment, the UE may identify multiple SRS resources for multiple cells, based on information about an SRS resource configuration and a code point of the SRS request field, and transmit SRSs for the multiple cells, based on the identified SRS resources. According to an embodiment, the code point in the SRS request field may indicate a mapping relationship between one or more SRS resource sets included in the SRS resource configuration and the multiple cells, and the SRS resource for each cell may be included in the SRS resource set corresponding to each cell.

When a MAC CE for updating the mapping relationship is received in operation 1920, the mapping relationship may be identified as having been updated by the MAC CE. The MAC CE may include information corresponding to the multiple cells and information indicating one or more SRS resource sets mapped to specific values among the code points in the SRS request field.

For more specific details on the operation of the UE according to an embodiment of the disclosure described above, refer to the description of an embodiment of the disclosure described above.

FIG. 20 is a diagram illustrating the operation of a base station according to an embodiment of the disclosure. Various modifications may be made to the method shown in the flowchart of FIG. 20. For example, although a series of operations are illustrated, various operations in each drawing may overlap, occur in parallel, occur in a different order, or occur multiple times. In other examples, operations may be omitted or replaced with other operations.

In operation 2010, the base station may transmit information about sounding reference signal (SRS) resource configuration via an RRC message or higher layer signaling.

In operation 2020, the base station may receive a MAC CE. The operation of transmitting the MAC CE may be omitted.

In operation 2030, the base station may transmit downlink control information (DCI) for scheduling multiple cells. The DCI may include an SRS request field.

In operation 2040, the base station may receive an SRS. According to an embodiment, the base station may receive SRSs for multiple cells, based on multiple SRS resources. According to an embodiment, the code point of the SRS request field may indicate a mapping relationship between one or more SRS resource sets included in the SRS resource configuration and the multiple cells, and the SRS resource for each cell may be included in the SRS resource set corresponding to each cell.

When a MAC CE for updating the mapping relationship is transmitted in operation 2020, the mapping relationship may be updated by the MAC CE. The MAC CE may include information corresponding to the multiple cells and information indicating one or more SRS resource sets mapped to specific values among the code points of the SRS request field.

For more details of the operation of the base station according to an embodiment of the disclosure described above, refer to the description of an embodiment of the disclosure described above.

FIG. 21 illustrates a structure of a UE in a wireless communication system according to an embodiment of the disclosure.

Referring to FIG. 21, the UE may include a transceiver, which refers to a UE receiver 2100 and a UE transmitter 2110 as a whole, a memory (not illustrated), and a UE processor 2105 (or UE controller or processor). The UE transceiver 2100 and 2110, the memory, and the UE processor 2105 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform the operation of controlling the components of the UE by executing programs stored in the memory.

FIG. 22 illustrates a structure of a base station in a wireless communication system according to an embodiment of the disclosure.

Referring to FIG. 22, the base station may include a transceiver, which refers to a base station receiver 2200 and a base station transmitter 2210 as a whole, a memory (not illustrated), and a base station processor 2105 (or base station controller or processor). The base station transceiver 2200 and 2210, the memory, and the base station processor 2205 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described specific embodiments of the disclosure, an element included in an embodiment is expressed in the singular or the plural according to presented specific embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

**1.** A method performed by a terminal in a communication system, the method comprising:

receiving information on sounding reference signal (SRS) resource configuration through higher layer signaling;
receiving downlink control information (DCI) for scheduling a plurality of cells, wherein the DCI includes an SRS request field;
identifying a plurality of SRS resources for the plurality of cells, based on the information on the SRS resource configuration and code points of the SRS request field, wherein the code points of the SRS request field indicates a mapping relationship between one or more SRS resource sets included in the SRS resource configuration and the plurality of cells, and wherein the SRS resources for each cell are included in an SRS resource set corresponding to each cell; and
transmitting an SRS for the plurality of cells, based on the plurality of SRS resources.

**2.** The method of claim 1, wherein the SRS request field has a size of 4 bits,

wherein 2 most significant bits (MSBs) of the SRS request field are associated with one or more cells among the plurality of cells,
wherein 2 least significant bits (LSBs) of the SRS request field are associated with remaining one or more cells, excluding the one or more cells, among the plurality of cells, and
wherein each of indices of the one or more cells associated with the 2 MSBs is smaller than each of indices of the one or more cells associated with the 2 LSBs.

**3.** The method of claim 1, wherein the maximum number of the plurality of cells is 4, and
wherein the DCI further comprises a 4-bit field indicating the plurality of cells.

**4.** The method of claim 1, wherein a format of the DCI is DCI format 0_3 or DCI format 1_3, and
wherein an information element (IE) for a size of the SRS request field is received through the higher layer signaling, and the IE is separately configured according to the format of the DCI.

**5.** The method of claim 1, wherein, in a case that a medium access control control element (MAC CE) for updating the mapping relationship is received prior to the receiving of the DCI, the mapping relationship is identified as having been updated by the MAC CE, and
wherein the MAC CE comprises information corresponding to the plurality of cells and information indicating one or more SRS resource sets mapped to specific values of the code points of the SRS request field.

**6.** A terminal in a communication system, the terminal comprising:

a transceiver; and
one or more processors connected to the transceiver,
wherein the processors are configured to:

receive information on sounding reference signal (SRS) resource configuration through higher layer signaling;
receive downlink control information (DCI) for scheduling a plurality of cells, wherein the DCI includes an SRS request field;
identify a plurality of SRS resources for the plurality of cells, based on the information on the SRS resource configuration and code points of the SRS request field, wherein the code points of the SRS request field indicates a mapping relationship between one or more SRS resource sets included in the SRS resource configuration and the plurality of cells, and wherein the SRS resources for each cell are included in an SRS resource set corresponding to each cell; and
transmit an SRS for the plurality of cells, based on the plurality of SRS resources.

**7.** The terminal of claim 6, wherein the SRS request field has a size of 4 bits,

wherein 2 most significant bits (MSBs) of the SRS request field are associated with one or more cells among the plurality of cells,
wherein 2 least significant bits (LSBs) of the SRS request field are associated with one or more of the remaining cells, excluding the one or more cells, among the plurality of cells, and
wherein each of indices of the one or more cells associated with the 2 MSBs is smaller than each of indices of the one or more cells associated with the 2 LSBs.

**8.** A method performed by a base station in a communication system, the method comprising:

transmitting information on sounding reference signal (SRS) resource configuration through higher layer signaling;
transmitting downlink control information (DCI) for scheduling a plurality of cells, wherein the DCI includes an SRS request field; and
transmitting an SRS for the plurality of cells, based on a plurality of SRS resources,
wherein the plurality of SRS resources are based on information on the SRS resource configuration and code points of the SRS request field,
wherein the code points of the SRS request field indicate a mapping relationship between one or more SRS resource sets included in the SRS resource configuration and the plurality of cells, and
wherein the SRS resources for each cell are included in an SRS resource set corresponding to each cell.

**9.** The method of claim 8, wherein the SRS request field has a size of 4 bits,

wherein 2 most significant bits (MSBs) of the SRS request field are associated with one or more cells among the plurality of cells,
wherein 2 least significant bits (LSBs) of the SRS request field are associated with one or more of the remaining cells, excluding the one or more cells, among the plurality of cells, and
wherein each of indices of the one or more cells associated with the 2 MSBs is smaller than each of indices of the one or more cells associated with the 2 LSBs.

**10.** The method of claim 8, wherein the maximum number of the plurality of cells is 4, and
wherein the DCI further comprises a 4-bit field indicating the plurality of cells.

**11.** The method of claim 8, wherein a format of the DCI is DCI format 0_3 or DCI format 1_3, and
wherein an information element (IE) for a size of the SRS request field is received through the higher layer signaling, and the IE is separately configured according to the format of the DCI.

**12.** The method of claim 8, wherein, in a case that a medium access control control element (MAC CE) for updating the mapping relationship is transmitted prior to the transmitting of the DCI, the mapping relationship is updated by the MAC CE, and
wherein the MAC CE comprises information corresponding to the plurality of cells and information indicating one or more SRS resource sets mapped to specific values of the code points of the SRS request field.

**13.** A base station of a communication system, the base station comprising:

a transceiver; and
one or more processors connected to the transceiver,
wherein the processors is configured to:

transmit information on sounding reference signal (SRS) resource configuration through higher layer signaling;
transmit downlink control information (DCI) for scheduling a plurality of cells, wherein the DCI includes an SRS request field; and
transmit an SRS for the plurality of cells, based on a plurality of SRS resources,
wherein the plurality of SRS resources are based on information on the SRS resource configuration and code points of the SRS request field,
wherein the code points of the SRS request field indicate a mapping relationship between one or more SRS resource sets included in the SRS resource configuration and the plurality of cells, and
wherein the SRS resources for each cell are included in an SRS resource set corresponding to each cell.

**14.** The base station of claim 13, wherein the SRS request field has a size of 4 bits,

wherein 2 most significant bits (MSBs) of the SRS request field are associated with one or more cells among the plurality of cells,
wherein 2 least significant bits (LSBs) of the SRS request field are associated with one or more of the remaining cells, excluding the one or more cells, among the plurality of cells, and
wherein each of indices of the one or more cells associated with the 2 MSBs is smaller than each of indices of the one or more cells associated with the 2 LSBs.

**15.** The base station of claim 13, wherein the maximum number of the plurality of cells is 4, and
wherein the DCI further comprises a 4-bit field indicating the plurality of cells.

FIG. 1

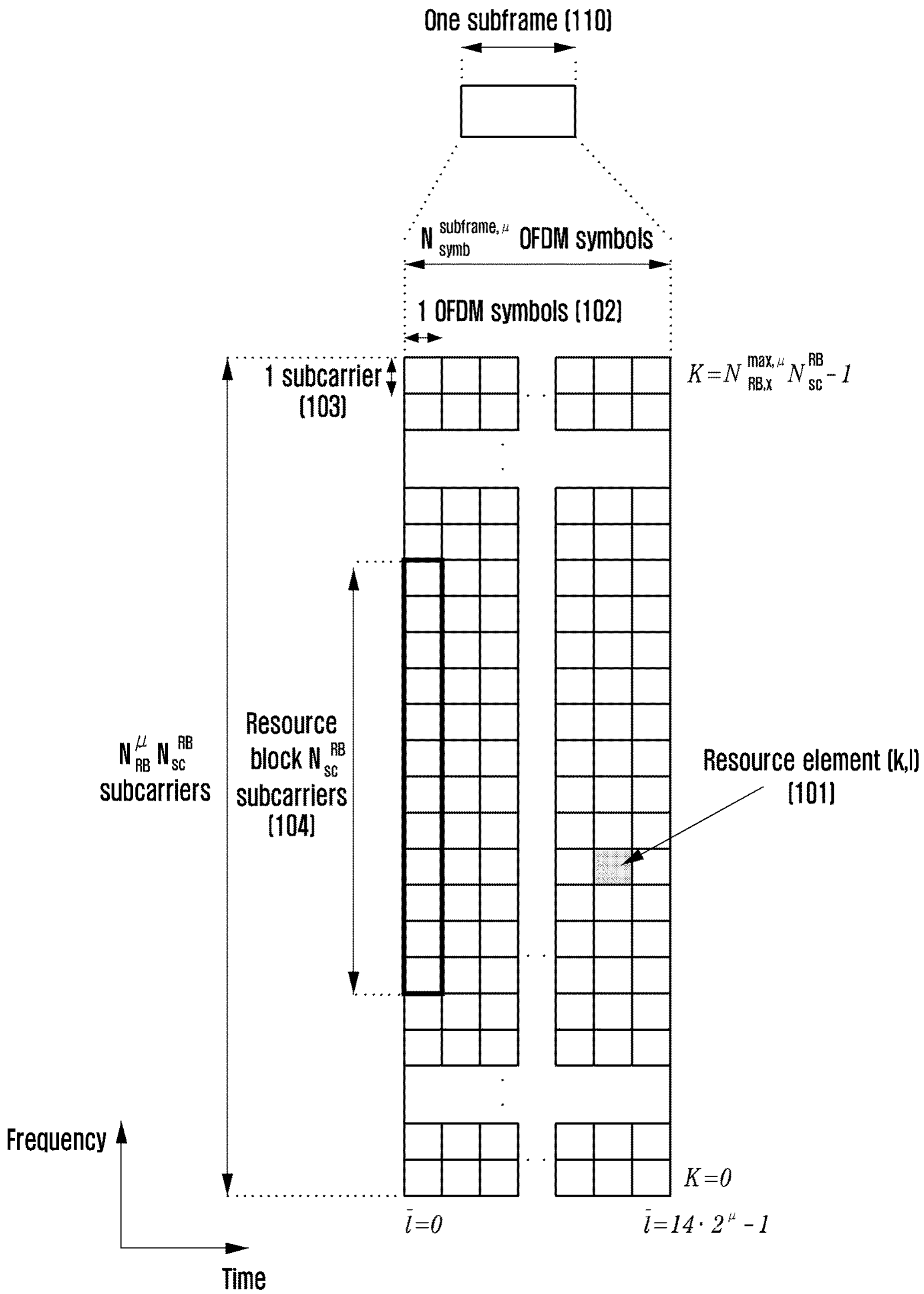

One subframe (110)
$N_{symb}^{subframe,\mu}$ OFDM symbols
1 OFDM symbols (102)
1 subcarrier (103)
$K=N_{RB,x}^{max,\mu}N_{sc}^{RB}-1$
$N_{RB}^{\mu}N_{sc}^{RB}$ subcarriers
Resource block $N_{sc}^{RB}$ subcarriers (104)
Resource element (k,l) (101)
Frequency
K=0
$\bar{l}=0$
$\bar{l}=14\cdot 2^{\mu}-1$
Time

FIG. 2

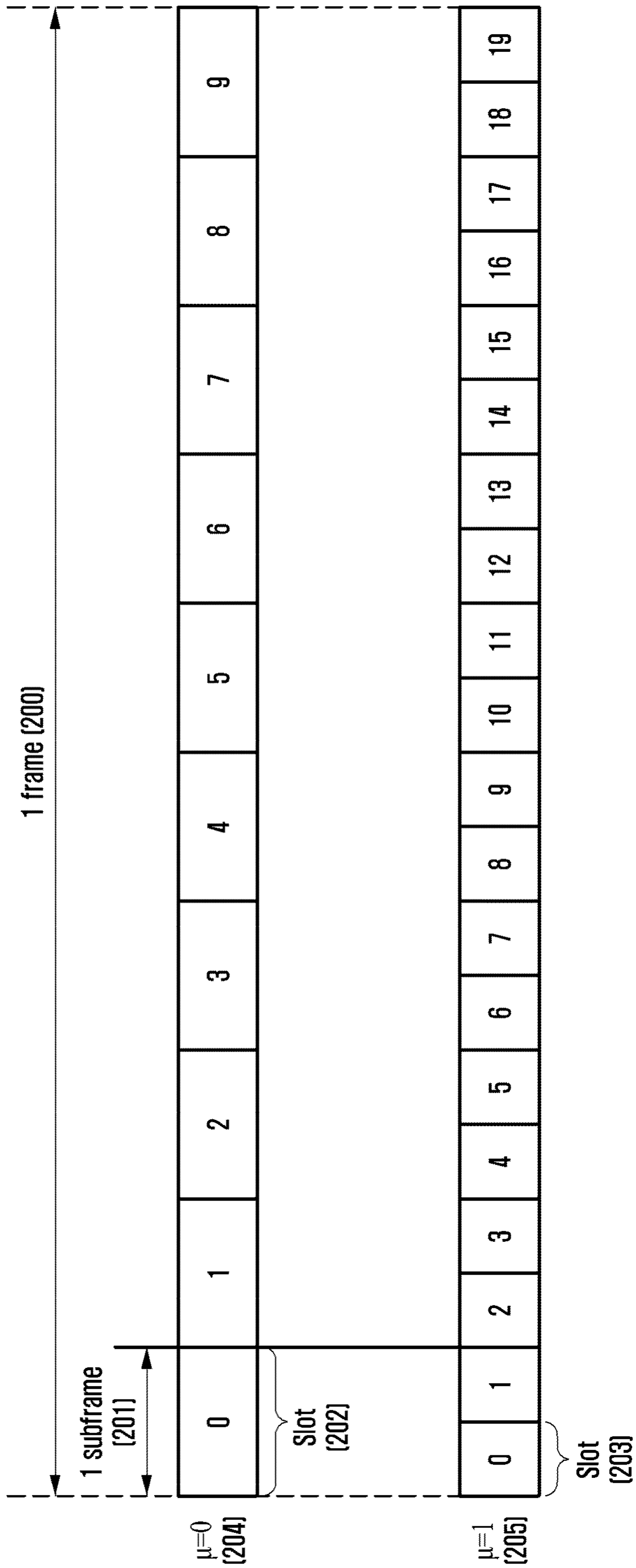
1 frame (200)
1 subframe (201)
Slot (202)
Slot (203)
μ=0 (204)
μ=1 (205)
0
1
2
3
4
5
6
7
8
9
0
1
2
3
4
5
6
7
8
9
10
11
12
13
14
15
16
17
18
19

FIG. 3

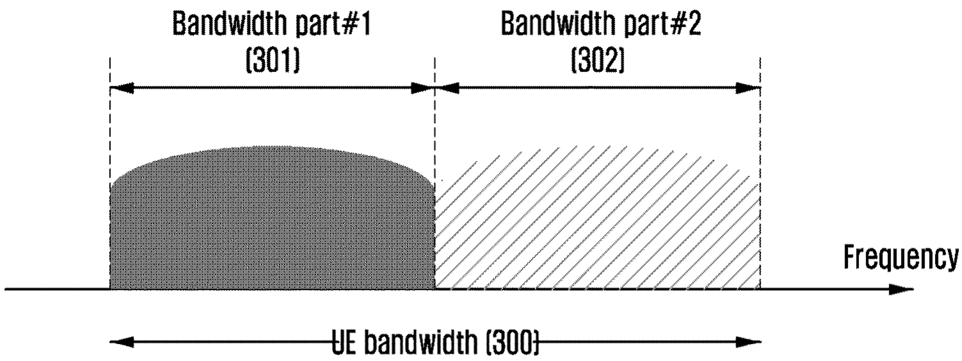
Bandwidth part#1
(301)
Bandwidth part#2
(302)
Frequency
UE bandwidth (300)

FIG. 4

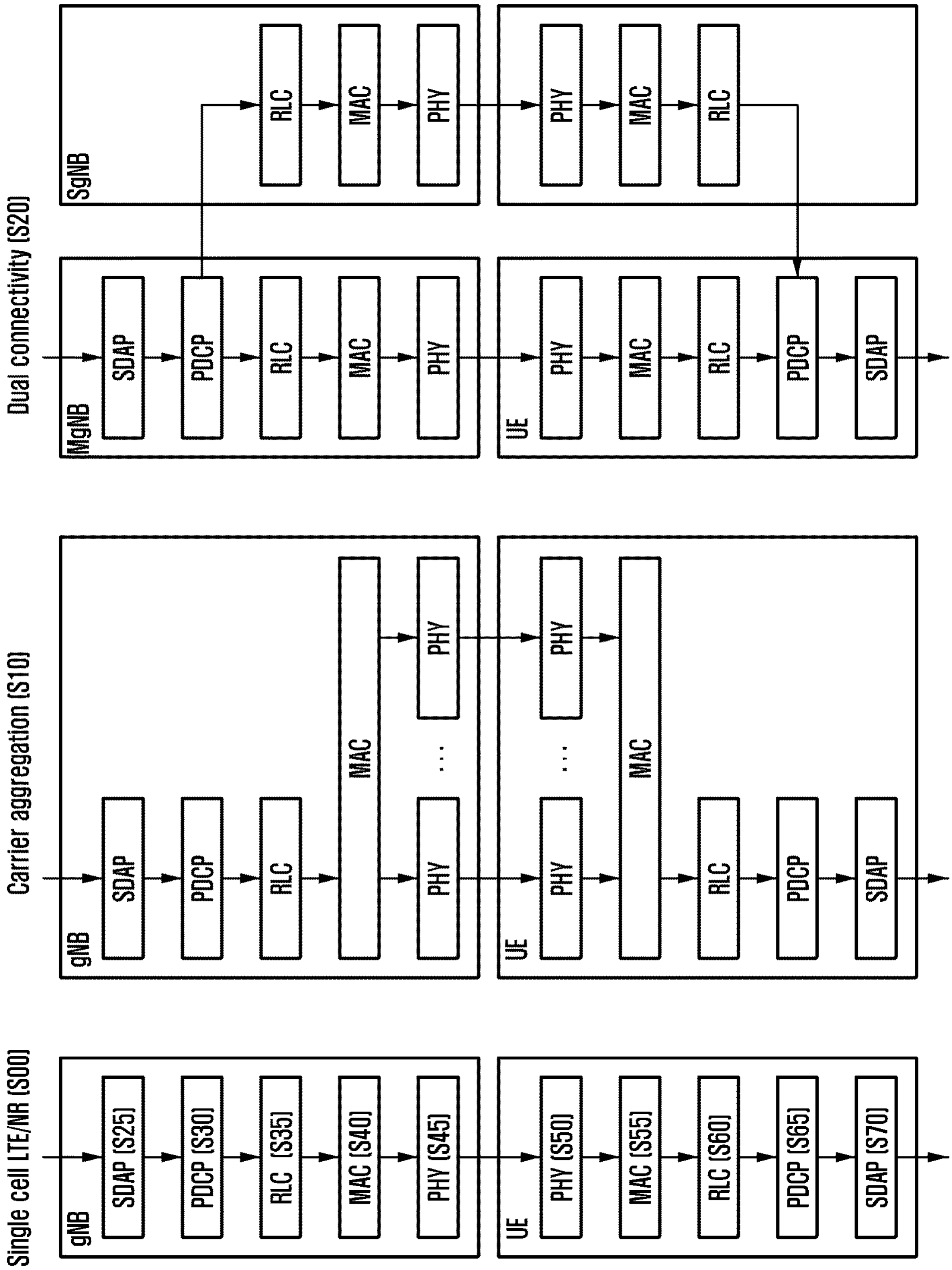
Single cell LTE/NR (S00)
gNB
SDAP (S25)
PDCP (S30)
RLC (S35)
MAC (S40)
PHY (S45)
UE
PHY (S50)
MAC (S55)
RLC (S60)
PDCP (S65)
SDAP (S70)
Carrier aggregation (S10)
gNB
SDAP
PDCP
RLC
MAC
PHY
...
PHY
UE
PHY
...
PHY
MAC
RLC
PDCP
SDAP
Dual connectivity (S20)
MgNB
SDAP
PDCP
RLC
MAC
PHY
SgNB
RLC
MAC
PHY
UE
PHY
MAC
RLC
PDCP
SDAP
PHY
MAC
RLC

FIG. 5

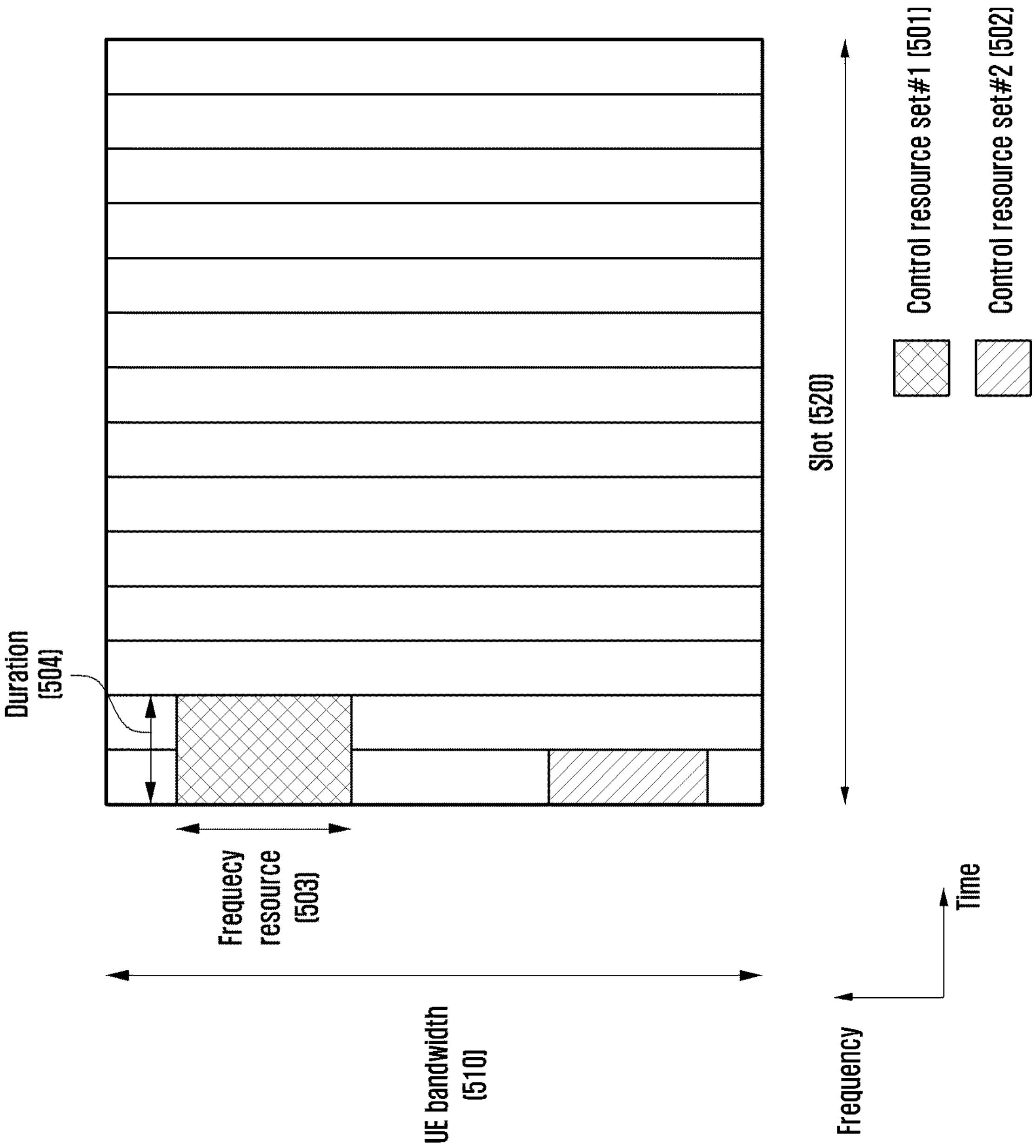
Duration
[504]
Frequecy
resource
[503]
UE bandwidth
[510]
Slot [520]
Control resource set#1 [501]
Control resource set#2 [502]
Frequency
Time

FIG. 6

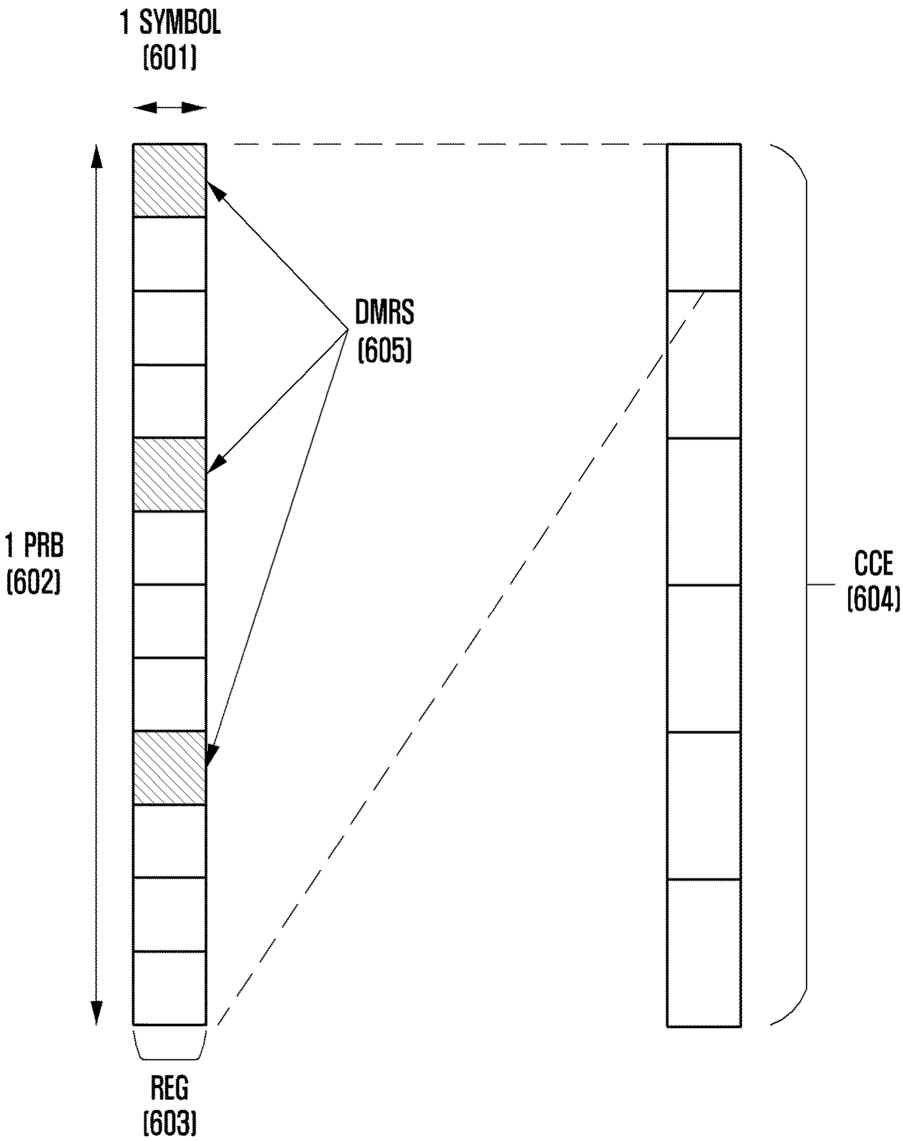

FIG. 7

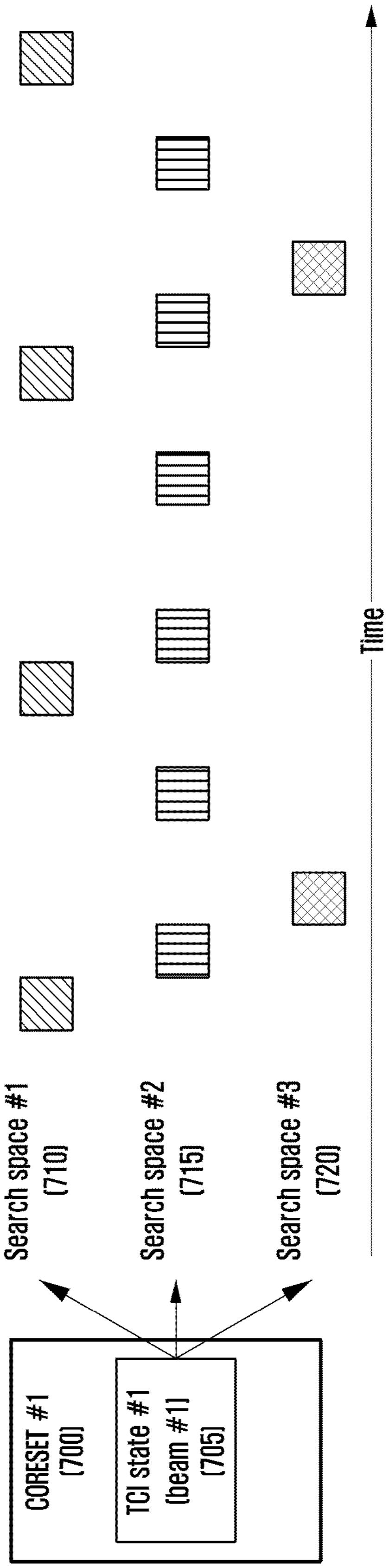
CORESET #1
(700)
TCI state #1
(beam #1)
(705)
Search space #1
(710)
Search space #2
(715)
Search space #3
(720)
Time

FIG. 8

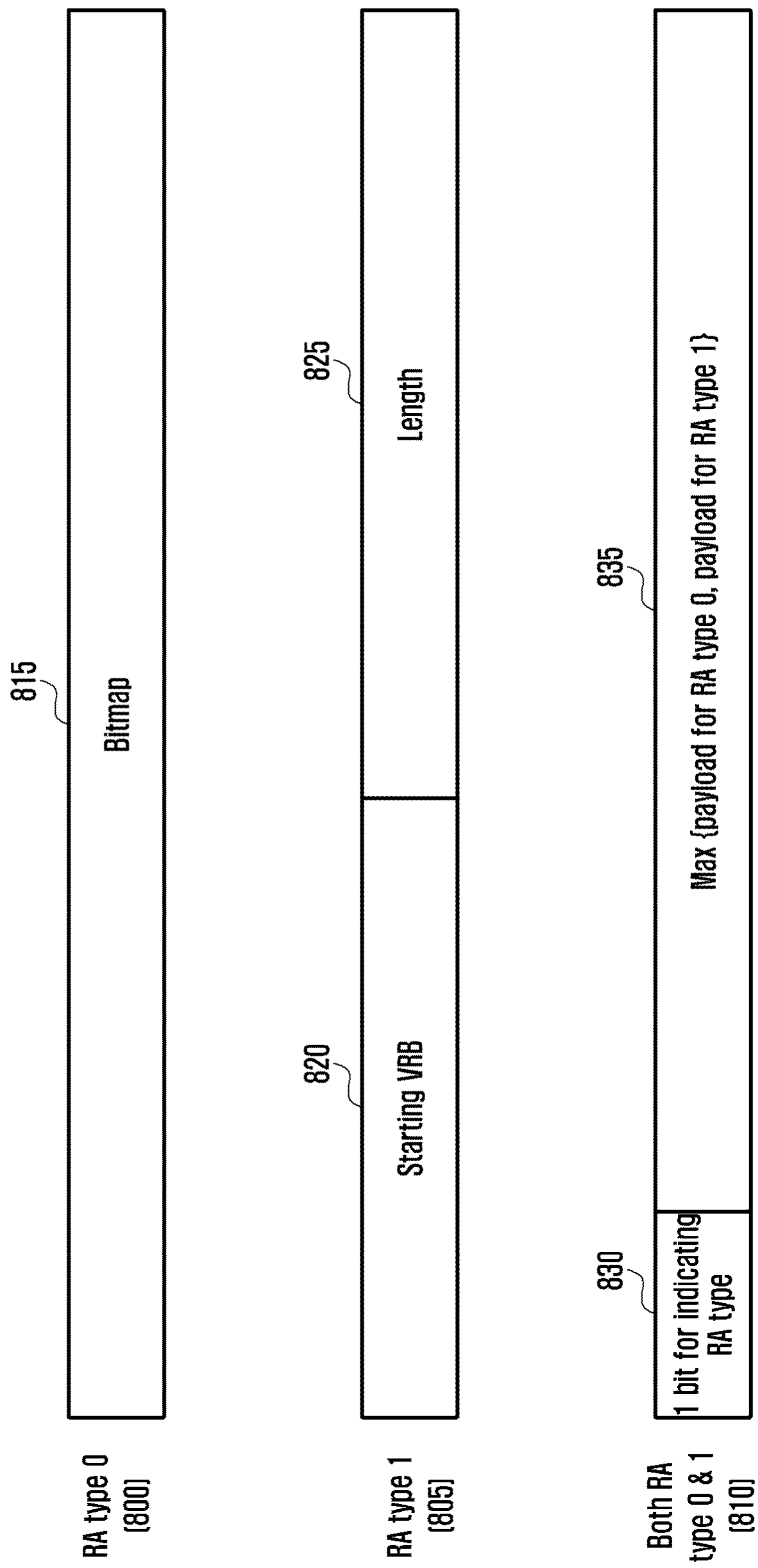
RA type 0
(800)
815
Bitmap
RA type 1
(805)
820
Starting VRB
825
Length
Both RA
type 0 & 1
(810)
830
1 bit for indicating
RA type
835
Max {payload for RA type 0, payload for RA type 1}

FIG. 9

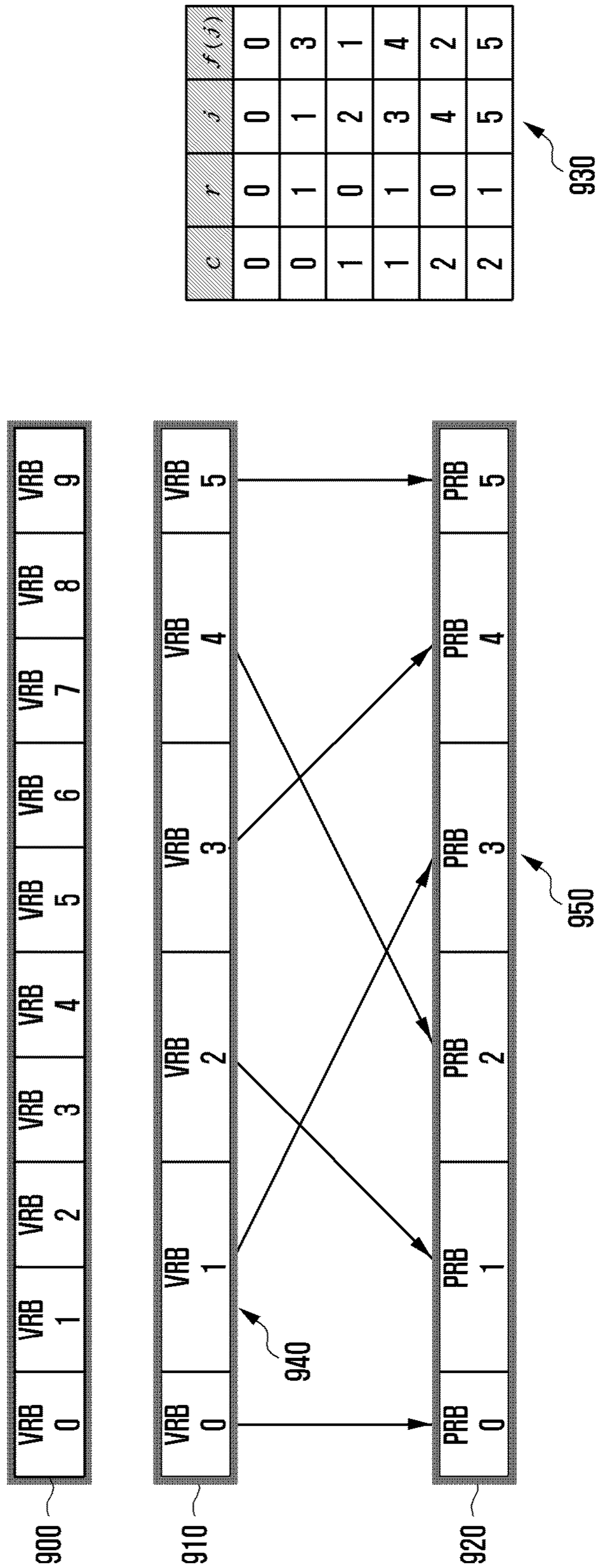
900
910
920
930
940
950
VRB 0
VRB 1
VRB 2
VRB 3
VRB 4
VRB 5
VRB 6
VRB 7
VRB 8
VRB 9
PRB 0
PRB 1
PRB 2
PRB 3
PRB 4
PRB 5
c r j f(j)
0 0 0 0
0 1 1 3
1 0 2 1
1 1 3 4
2 0 4 2
2 1 5 5

FIG. 10

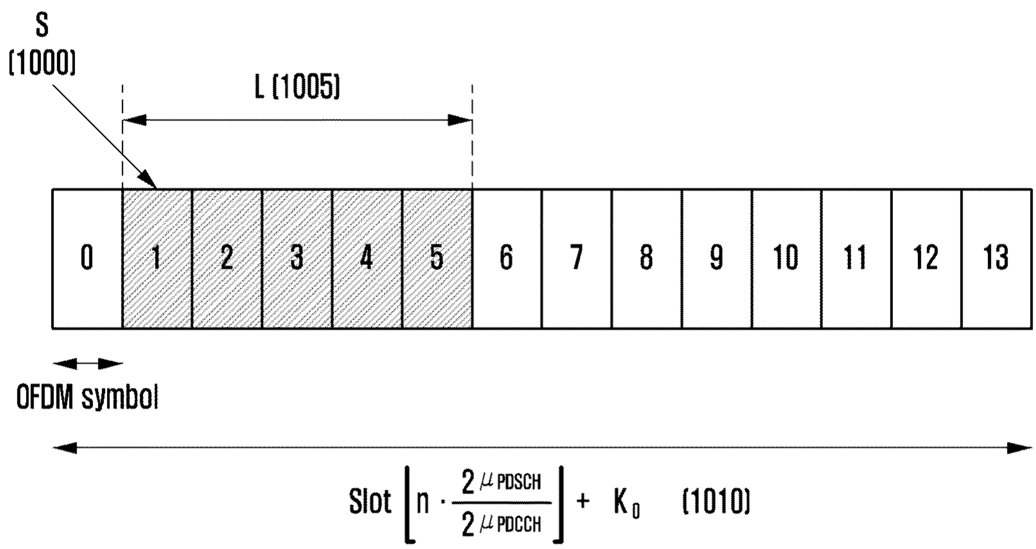
S
(1000)
L (1005)
0
1
2
3
4
5
6
7
8
9
10
11
12
13
OFDM symbol
Slot $\left\lfloor n \cdot \frac{2^{\mu_{PDSCH}}}{2^{\mu_{PDCCH}}} \right\rfloor + K_0$ (1010)

FIG. 11

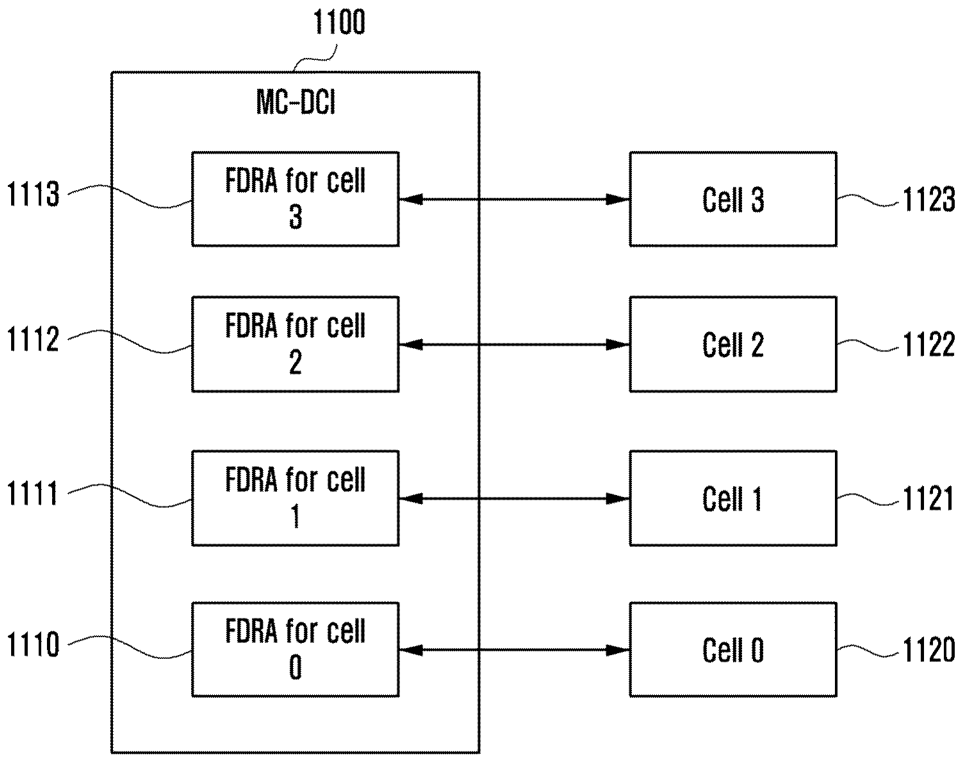
1100
MC-DCI
1113
FDRA for cell 3
Cell 3
1123
1112
FDRA for cell 2
Cell 2
1122
1111
FDRA for cell 1
Cell 1
1121
1110
FDRA for cell 0
Cell 0
1120

FIG. 12

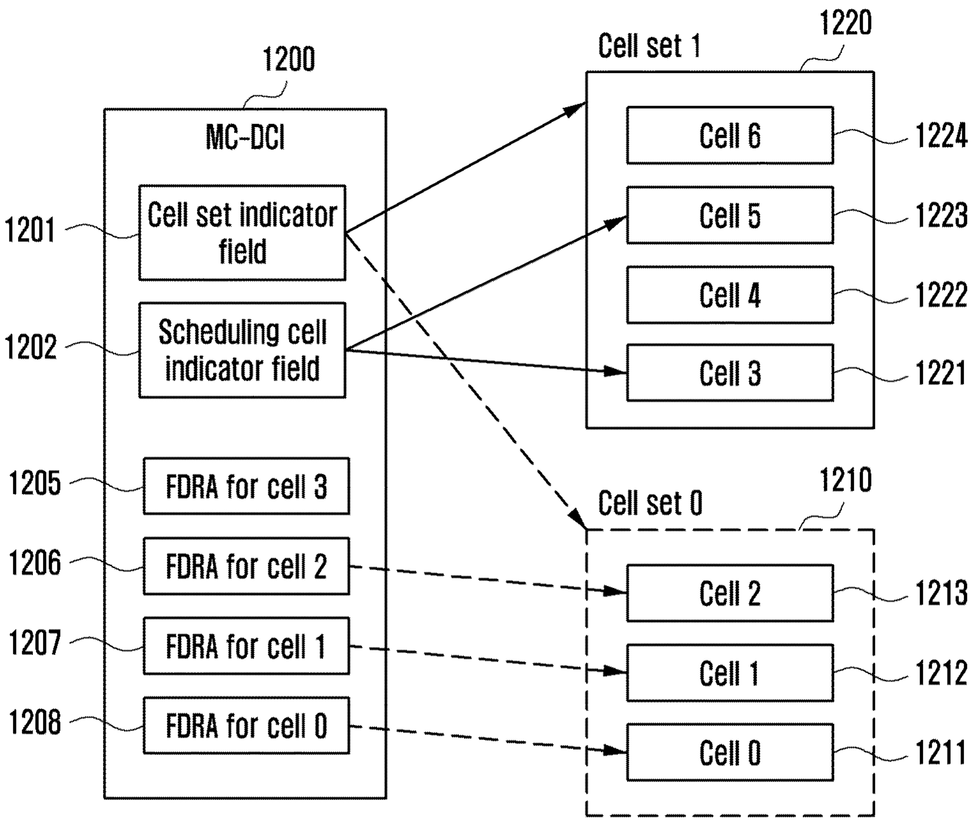
1200
MC-DCI
1201
Cell set indicator field
1202
Scheduling cell indicator field
1205
FDRA for cell 3
1206
FDRA for cell 2
1207
FDRA for cell 1
1208
FDRA for cell 0
Cell set 1
1220
Cell 6
1224
Cell 5
1223
Cell 4
1222
Cell 3
1221
Cell set 0
1210
Cell 2
1213
Cell 1
1212
Cell 0
1211

FIG. 13

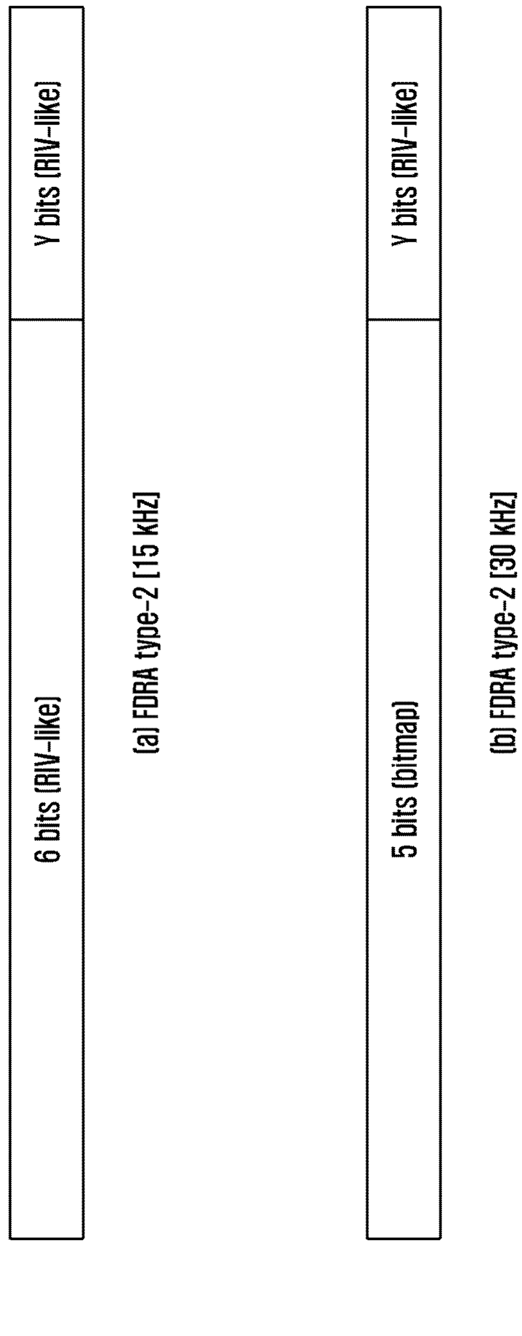


(a) FDRA type-2 [15 kHz]

(b) FDRA type-2 [30 kHz]

FIG. 14A

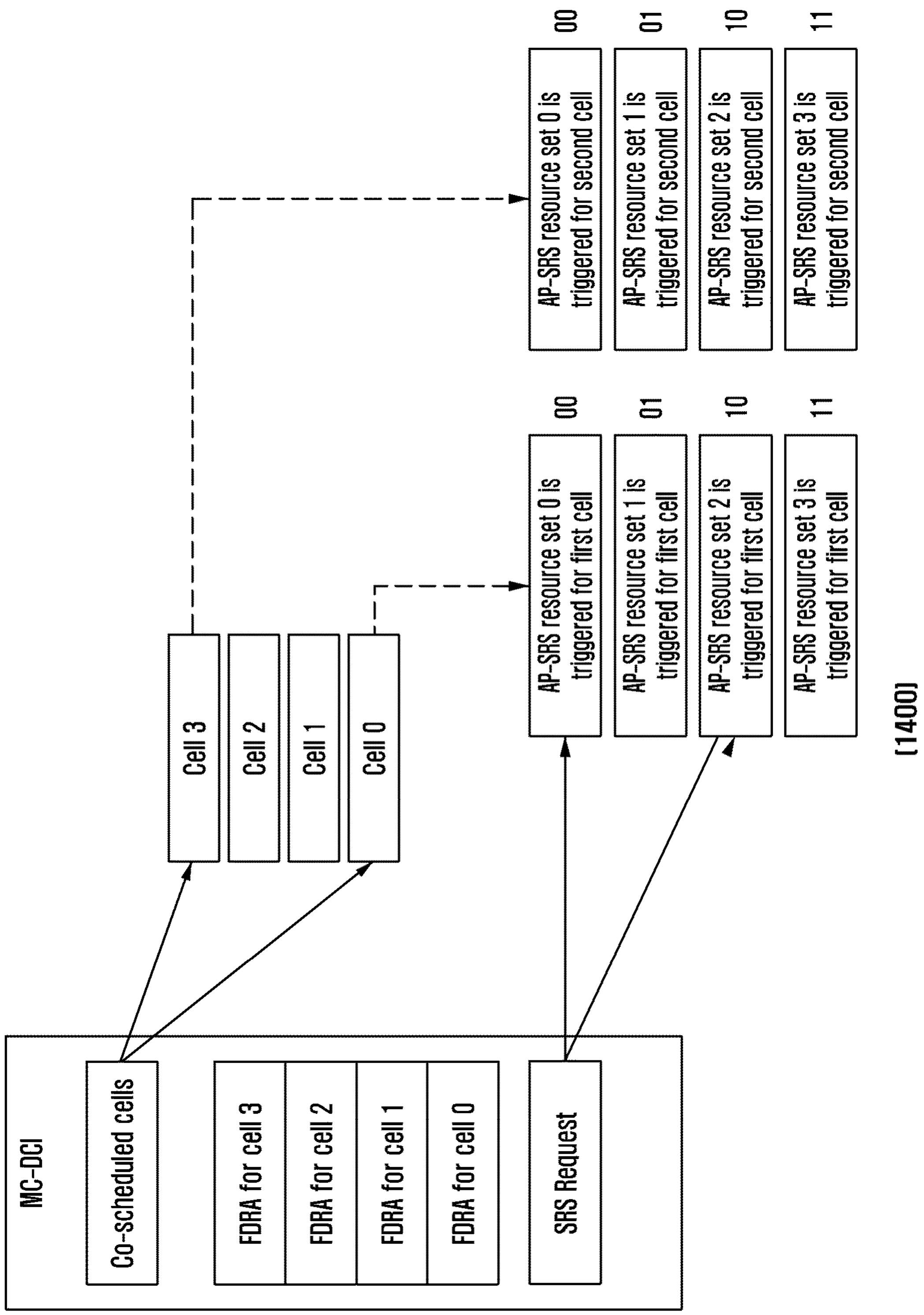
MC-DCI
Co-scheduled cells
FDRA for cell 3
FDRA for cell 2
FDRA for cell 1
FDRA for cell 0
SRS Request
Cell 3
Cell 2
Cell 1
Cell 0
AP-SRS resource set 0 is triggered for first cell
00
AP-SRS resource set 1 is triggered for first cell
01
AP-SRS resource set 2 is triggered for first cell
10
AP-SRS resource set 3 is triggered for first cell
11
AP-SRS resource set 0 is triggered for second cell
00
AP-SRS resource set 1 is triggered for second cell
01
AP-SRS resource set 2 is triggered for second cell
10
AP-SRS resource set 3 is triggered for second cell
11
[1400]

FIG. 14B

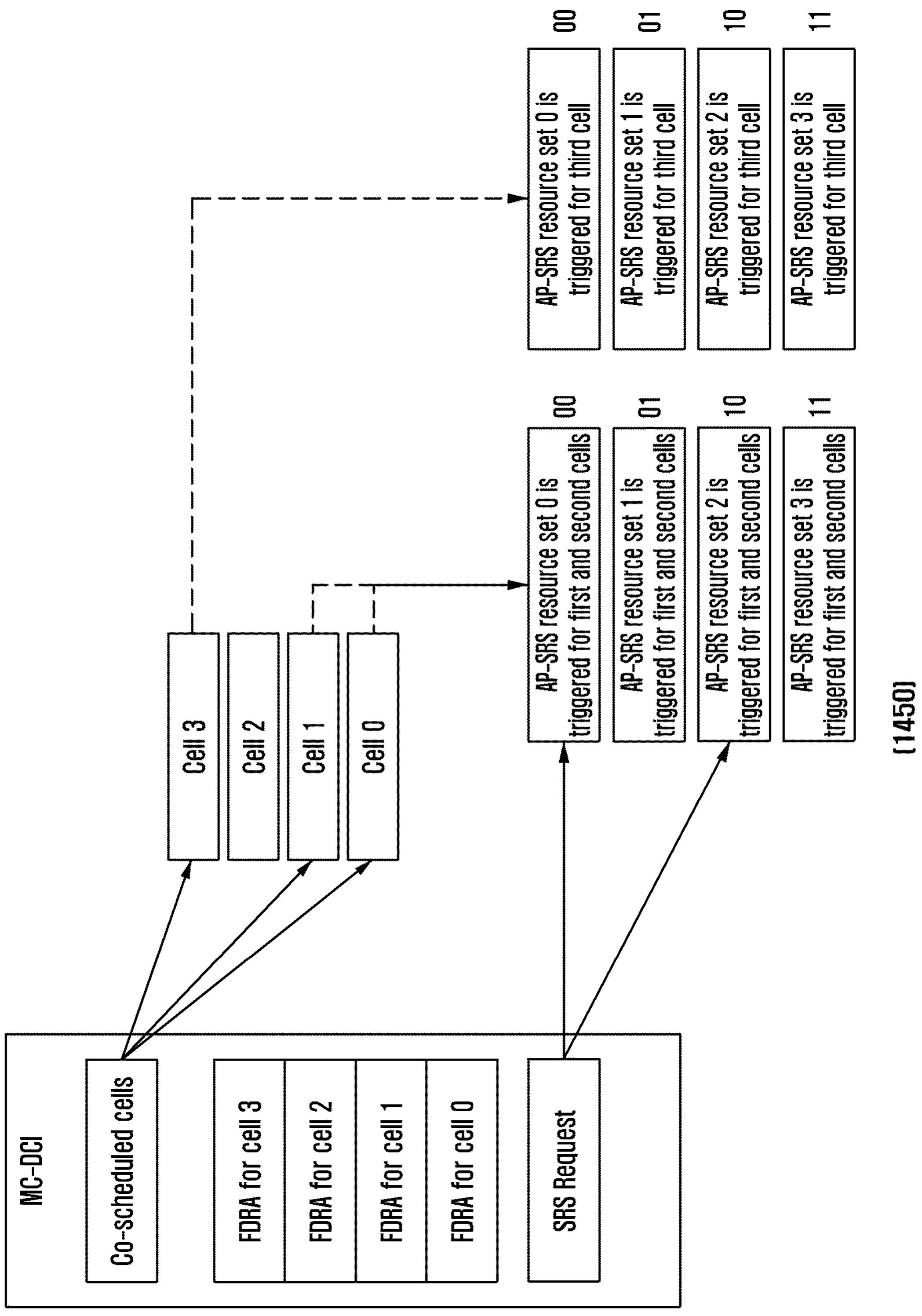
MC-DCI
Co-scheduled cells
FDRA for cell 3
FDRA for cell 2
FDRA for cell 1
FDRA for cell 0
SRS Request
Cell 3
Cell 2
Cell 1
Cell 0
AP-SRS resource set 0 is triggered for first and second cells
00
AP-SRS resource set 1 is triggered for first and second cells
01
AP-SRS resource set 2 is triggered for first and second cells
10
AP-SRS resource set 3 is triggered for first and second cells
11
AP-SRS resource set 0 is triggered for third cell
00
AP-SRS resource set 1 is triggered for third cell
01
AP-SRS resource set 2 is triggered for third cell
10
AP-SRS resource set 3 is triggered for third cell
11
[1450]

FIG. 15A

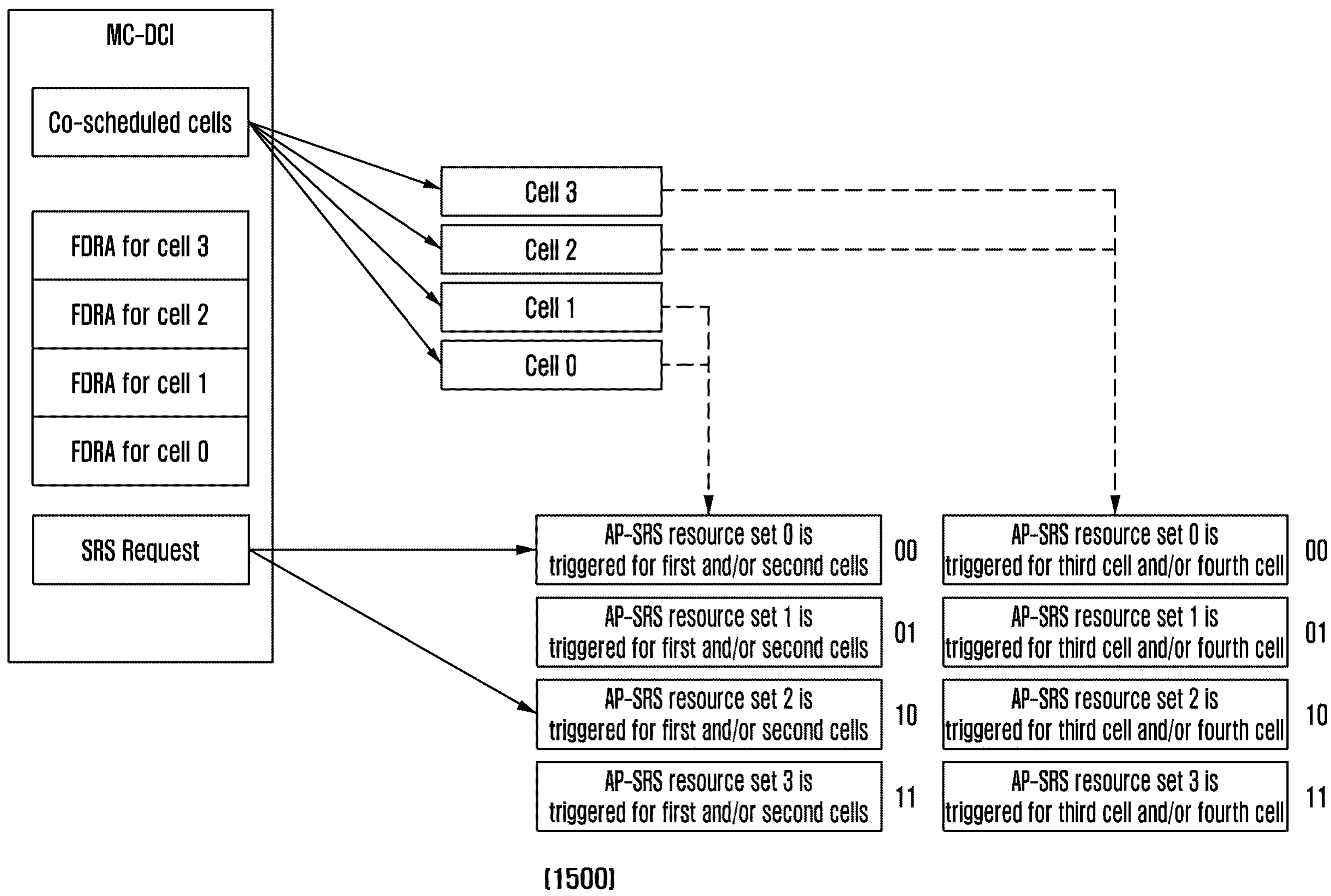
MC-DCI
Co-scheduled cells
FDRA for cell 3
FDRA for cell 2
FDRA for cell 1
FDRA for cell 0
SRS Request
Cell 3
Cell 2
Cell 1
Cell 0
AP-SRS resource set 0 is triggered for first and/or second cells
00
AP-SRS resource set 1 is triggered for first and/or second cells
01
AP-SRS resource set 2 is triggered for first and/or second cells
10
AP-SRS resource set 3 is triggered for first and/or second cells
11
AP-SRS resource set 0 is triggered for third cell and/or fourth cell
00
AP-SRS resource set 1 is triggered for third cell and/or fourth cell
01
AP-SRS resource set 2 is triggered for third cell and/or fourth cell
10
AP-SRS resource set 3 is triggered for third cell and/or fourth cell
11
[1500]

FIG. 15B

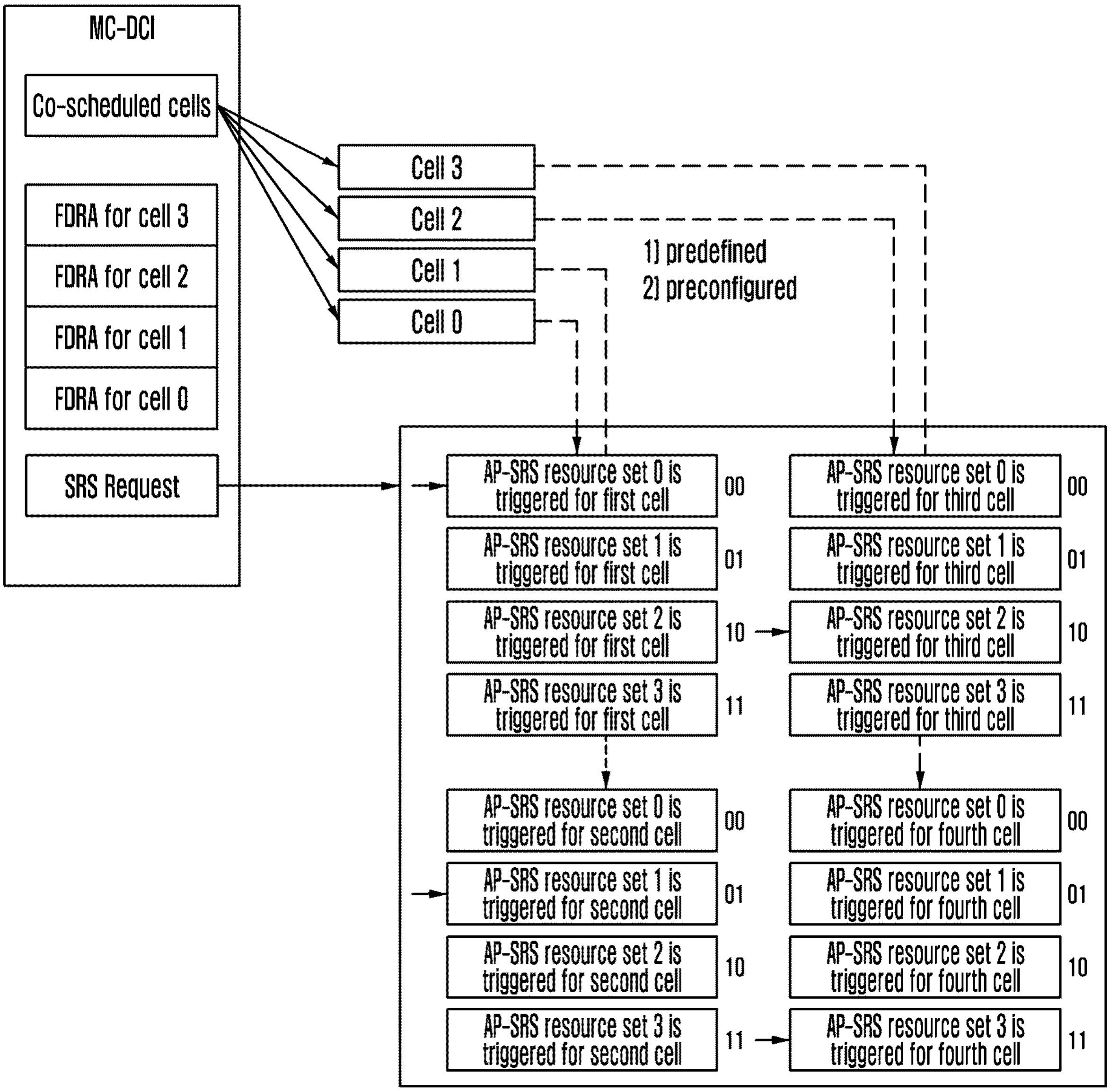
MC-DCI
Co-scheduled cells
FDRA for cell 3
FDRA for cell 2
FDRA for cell 1
FDRA for cell 0
SRS Request
Cell 3
Cell 2
Cell 1
Cell 0
1) predefined
2) preconfigured
AP-SRS resource set 0 is triggered for first cell
00
AP-SRS resource set 1 is triggered for first cell
01
AP-SRS resource set 2 is triggered for first cell
10
AP-SRS resource set 3 is triggered for first cell
11
AP-SRS resource set 0 is triggered for second cell
00
AP-SRS resource set 1 is triggered for second cell
01
AP-SRS resource set 2 is triggered for second cell
10
AP-SRS resource set 3 is triggered for second cell
11
AP-SRS resource set 0 is triggered for third cell
00
AP-SRS resource set 1 is triggered for third cell
01
AP-SRS resource set 2 is triggered for third cell
10
AP-SRS resource set 3 is triggered for third cell
11
AP-SRS resource set 0 is triggered for fourth cell
00
AP-SRS resource set 1 is triggered for fourth cell
01
AP-SRS resource set 2 is triggered for fourth cell
10
AP-SRS resource set 3 is triggered for fourth cell
11

[1550]

FIG. 16A

| | | | |
|---|---|---|---|
| Number of co-scheduled cells | Co-scheduled Cell ID | BWP IDs of SRS resource set | Oct 1 |
| SRS resource Set ID (for 0001) | SRS resource Set ID (for 0000) | | Oct 2 |
| SRS resource Set ID (for 0011) | SRS resource Set ID (for 0010) | | Oct 3 |
| SRS resource Set ID | SRS resource Set ID | | Oct 4 |
| SRS resource Set ID | SRS resource Set ID | | Oct 5 |
| ⋮ | | | ... |
| SRS resource Set ID (for 1111) | SRS resource Set ID (for 1110) | | Oct 9 |

(1600)

FIG. 16B

| | | | |
|---|---|---|---|
| Number of co-scheduled cells | Co-scheduled Cell ID | BWP IDs of SRS resource set | Oct 1 |
| SRS resource Set ID (for 0000) | SRS resource Set ID (for 0000) | | Oct 2 |
| SRS resource Set ID (for 0001) | SRS resource Set ID (for 0001) | | Oct 3 |
| SRS resource Set ID | SRS resource Set ID | | Oct 4 |
| SRS resource Set ID | SRS resource Set ID | | Oct 5 |
| ⋮ | | | ... |
| SRS resource Set ID (for 1111) | SRS resource Set ID (for 1111) | | Oct 17 |

(1620)

FIG. 16C

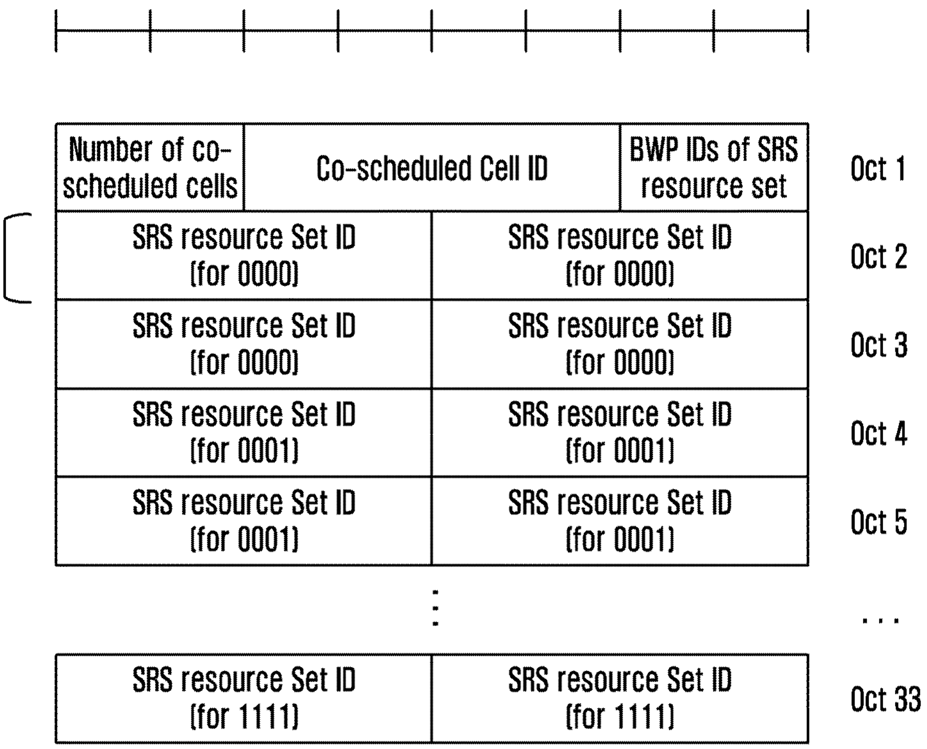
Number of co-scheduled cells
Co-scheduled Cell ID
BWP IDs of SRS resource set
Oct 1
SRS resource Set ID (for 0000)
SRS resource Set ID (for 0000)
Oct 2
SRS resource Set ID (for 0000)
SRS resource Set ID (for 0000)
Oct 3
SRS resource Set ID (for 0001)
SRS resource Set ID (for 0001)
Oct 4
SRS resource Set ID (for 0001)
SRS resource Set ID (for 0001)
Oct 5
...
SRS resource Set ID (for 1111)
SRS resource Set ID (for 1111)
Oct 33

(1640)

FIG. 16D

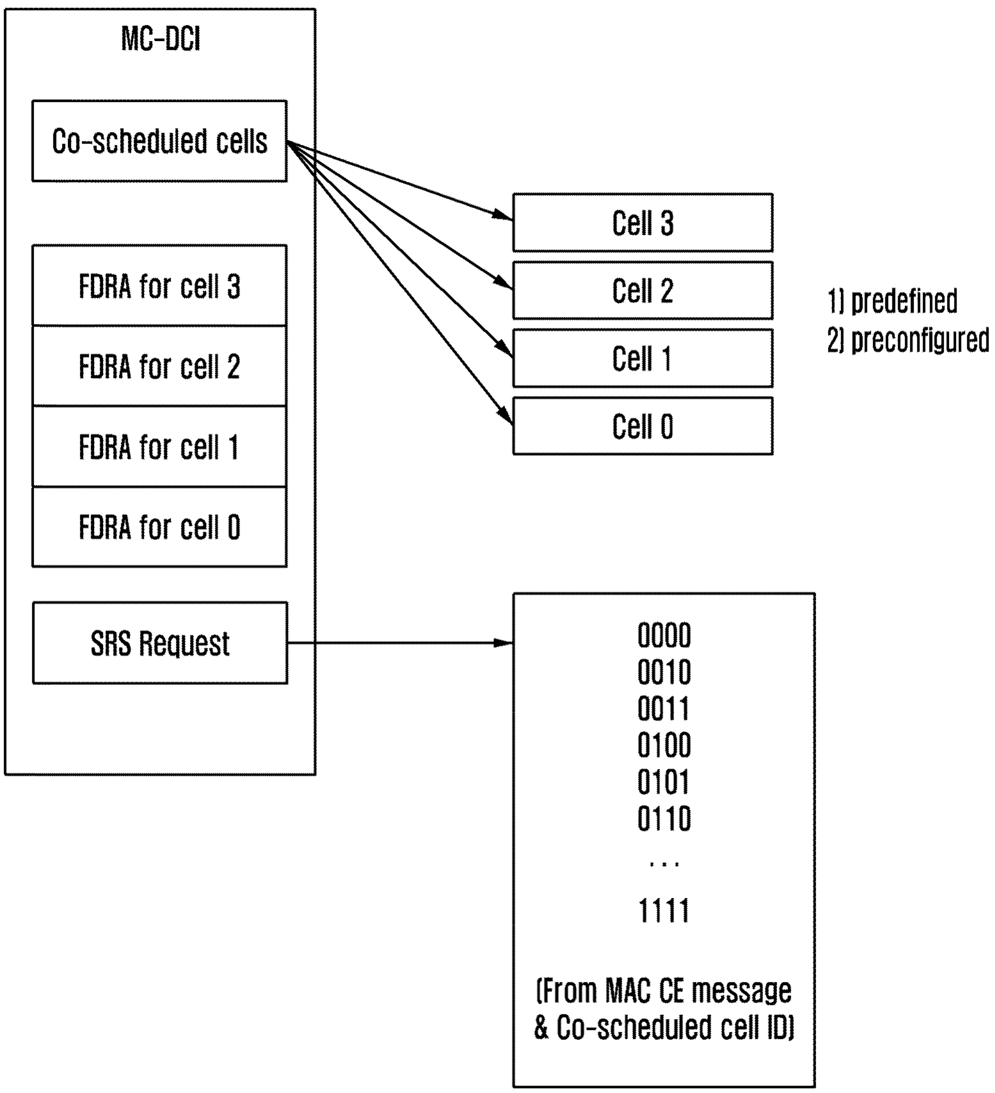
MC-DCI
Co-scheduled cells
FDRA for cell 3
FDRA for cell 2
FDRA for cell 1
FDRA for cell 0
SRS Request
Cell 3
Cell 2
Cell 1
Cell 0
1) predefined
2) preconfigured
0000
0010
0011
0100
0101
0110
...
1111
(From MAC CE message
& Co-scheduled cell ID)

(1660)

FIG. 17

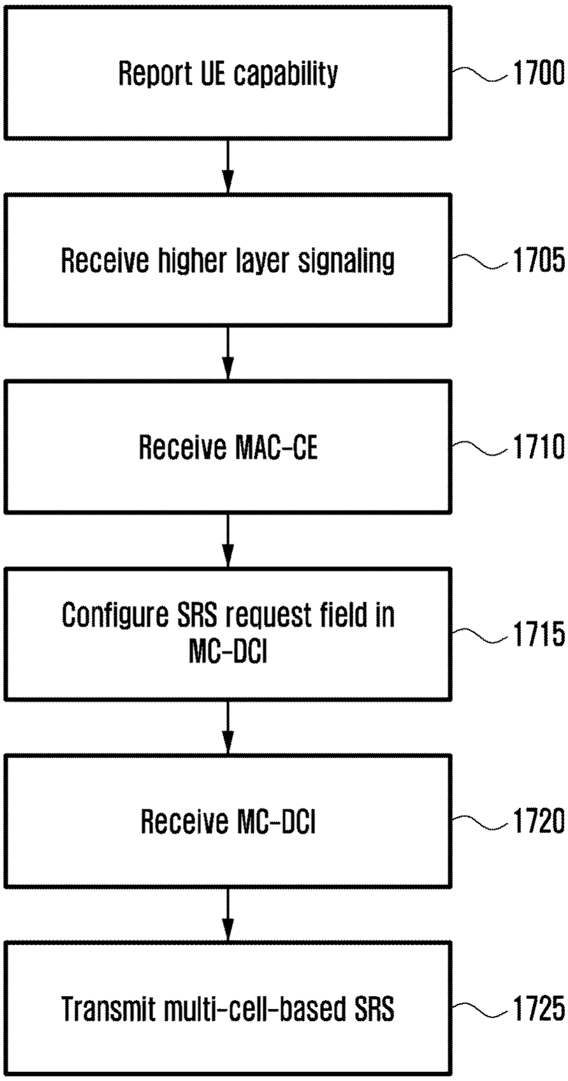
Report UE capability
1700
Receive higher layer signaling
1705
Receive MAC-CE
1710
Configure SRS request field in MC-DCI
1715
Receive MC-DCI
1720
Transmit multi-cell-based SRS
1725

FIG. 18

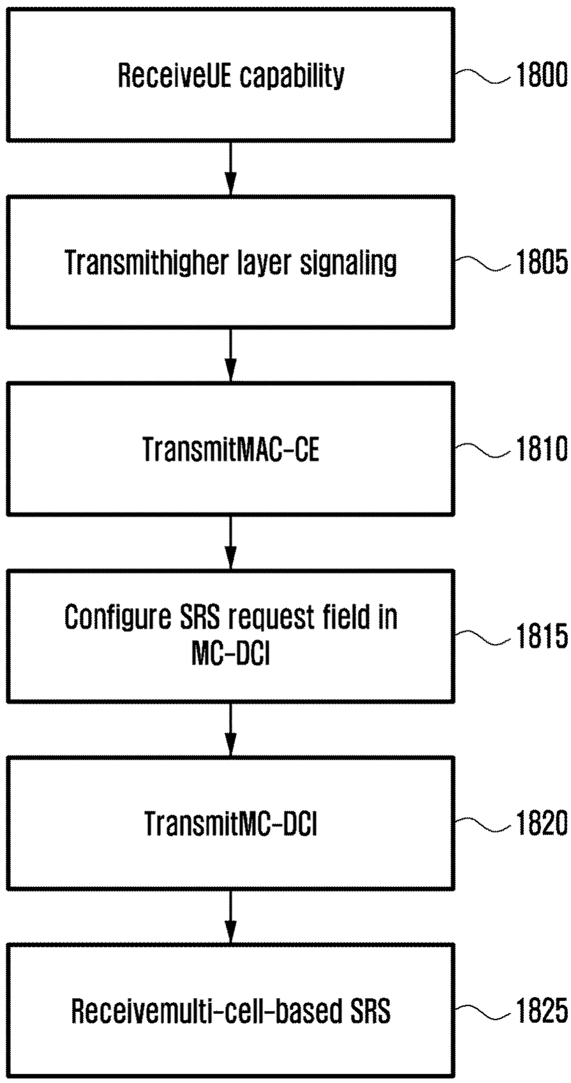
ReceiveUE capability
1800
Transmithigher layer signaling
1805
TransmitMAC-CE
1810
Configure SRS request field in MC-DCI
1815
TransmitMC-DCI
1820
Receivemulti-cell-based SRS
1825

FIG. 19

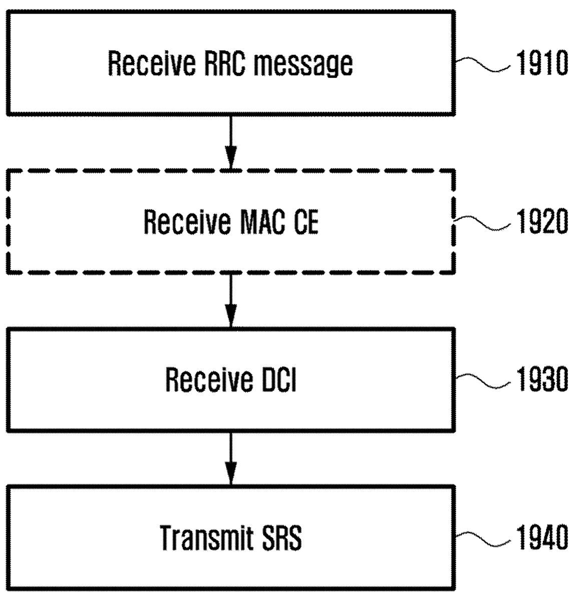
Receive RRC message
1910
Receive MAC CE
1920
Receive DCI
1930
Transmit SRS
1940

FIG. 20

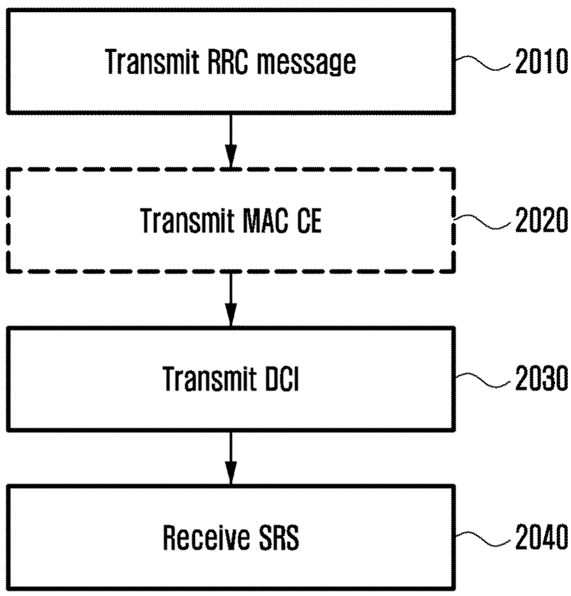
Transmit RRC message
2010
Transmit MAC CE
2020
Transmit DCI
2030
Receive SRS
2040

FIG. 21

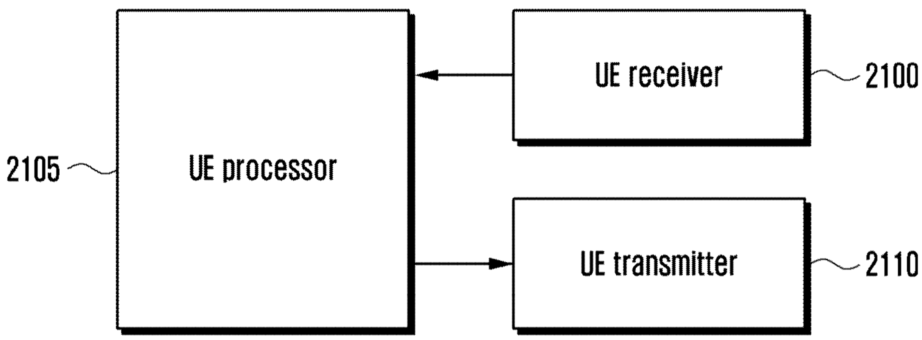

FIG. 22

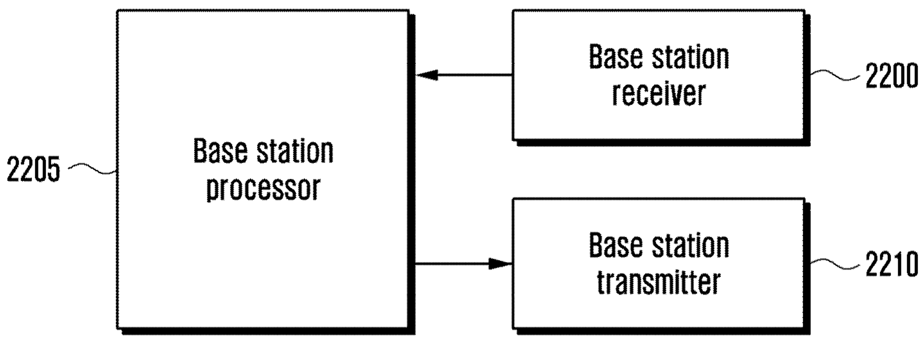
Base station receiver
2200
2205
Base station processor
Base station transmitter
2210

# INTERNATIONAL SEARCH REPORT

International application No.

**PCT/KR2023/019715**

## A. CLASSIFICATION OF SUBJECT MATTER

**H04L 5/00**(2006.01)i; **H04W 72/232**(2023.01)i; **H04W 72/231**(2023.01)i; **H04W 72/04**(2009.01)i; **H04L 27/26**(2006.01)i; **H04W 72/12**(2009.01)i; **H04B 7/0413**(2017.01)i

According to International Patent Classification (IPC) or to both national classification and IPC

## B. FIELDS SEARCHED

Minimum documentation searched (classification system followed by classification symbols)

H04L 5/00(2006.01); H04B 7/0404(2017.01); H04B 7/0426(2017.01); H04B 7/0456(2017.01); H04B 7/26(2006.01); H04J 11/00(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS 자원 설정(SRS resource configuration), SRS 요청 필드(SRS request field), 코드 포인트(codepoint), 셀(cell), 매핑(mapping)

## C. DOCUMENTS CONSIDERED TO BE RELEVANT

| Category* | Citation of document, with indication, where appropriate, of the relevant passages | Relevant to claim No. |
|---|---|---|
| A | US 2019-0174466 A1 (INTEL CORPORATION) 06 June 2019 (2019-06-06)<br>See paragraphs [0281]-[0287]; claims 1, 5 and 7; and figures 12-14. | 1-15 |
| A | CN 111417199 A (RESEARCH INSTITUTE OF CHINA MOBILE COMMUNICATIONS CORPORATION et al.) 14 July 2020 (2020-07-14)<br>See claims 1 and 4. | 1-15 |
| A | KR 10-2020-0066682 A (HUAWEI TECHNOLOGIES CO., LTD.) 10 June 2020 (2020-06-10)<br>See paragraphs [0040]-[0042]; and figure 3. | 1-15 |
| A | KR 10-2022-0141831 A (ZTE CORPORATION) 20 October 2022 (2022-10-20)<br>See paragraphs [0027]-[0075]; and figure 1. | 1-15 |
| A | KR 10-2013-0018074 A (PANTECH CO., LTD.) 20 February 2013 (2013-02-20)<br>See paragraphs [0218]-[0224]; and figure 4. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 March 2024** | **05 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/019715**

| Patent document cited in search report | Publication date (day/month/year) | Patent family member(s) | Publication date (day/month/year) |
|---|---|---|---|
| US 2019-0174466 A1 | 06 June 2019 | US 10863494 B2 | 08 December 2020 |
| | | US 11405911 B2 | 02 August 2022 |
| | | US 2021-0105753 A1 | 08 April 2021 |
| CN 111417199 A | 14 July 2020 | CN 111417199 B | 13 January 2023 |
| KR 10-2020-0066682 A | 10 June 2020 | CA 3078839 A1 | 18 April 2019 |
| | | CN 111201733 A | 26 May 2020 |
| | | CN 111201733 B | 24 December 2021 |
| | | CN 114430314 A | 03 May 2022 |
| | | EP 3692665 A1 | 12 August 2020 |
| | | EP 3692665 B1 | 28 December 2022 |
| | | EP 4149044 A1 | 15 March 2023 |
| | | JP 2020-537426 A | 17 December 2020 |
| | | JP 7361686 B2 | 16 October 2023 |
| | | US 11025388 B2 | 01 June 2021 |
| | | US 11588601 B2 | 21 February 2023 |
| | | US 2019-0109679 A1 | 11 April 2019 |
| | | US 2021-0288767 A1 | 16 September 2021 |
| | | US 2023-0254085 A1 | 10 August 2023 |
| | | WO 2019-072138 A1 | 18 April 2019 |
| KR 10-2022-0141831 A | 20 October 2022 | AU 2021-223034 A1 | 26 August 2021 |
| | | AU 2021-223034 B2 | 02 November 2023 |
| | | BR 112022016229 A2 | 11 October 2022 |
| | | CN 111207988 A | 29 May 2020 |
| | | CN 111207988 B | 27 August 2021 |
| | | CN 111253475 A | 09 June 2020 |
| | | CN 111253475 B | 09 March 2021 |
| | | CN 111293993 A | 16 June 2020 |
| | | EP 3915827 A1 | 01 December 2021 |
| | | EP 3915827 B1 | 16 August 2023 |
| | | EP 3916887 A1 | 01 December 2021 |
| | | EP 3916887 B1 | 12 April 2023 |
| | | EP 4068514 A1 | 05 October 2022 |
| | | JP 2021-129492 A | 02 September 2021 |
| | | JP 2022-551716 A | 13 December 2022 |
| | | JP 7012789 B2 | 28 January 2022 |
| | | KR 10-2022-0140788 A | 18 October 2022 |
| | | KR 10-2022-0154775 A | 22 November 2022 |
| | | KR 10-2022-0157940 A | 29 November 2022 |
| | | US 11500445 B2 | 15 November 2022 |
| | | US 11700153 B2 | 11 July 2023 |
| | | US 11848494 B2 | 19 December 2023 |
| | | US 11881820 B2 | 23 January 2024 |
| | | US 2021-0247830 A1 | 12 August 2021 |
| | | US 2021-0257976 A1 | 19 August 2021 |
| | | US 2021-0370799 A1 | 02 December 2021 |
| | | WO 2021-164318 A1 | 26 August 2021 |
| | | WO 2021-164327 A1 | 26 August 2021 |
| | | WO 2021-164457 A2 | 26 August 2021 |
| | | WO 2021-164457 A3 | 14 October 2021 |
| KR 10-2013-0018074 A | 20 February 2013 | WO 2013-024983 A2 | 21 February 2013 |

Form PCT/ISA/210 (patent family annex) (July 2022)

**INTERNATIONAL SEARCH REPORT**
**Information on patent family members**

International application No.
**PCT/KR2023/019715**

| Patent document cited in search report | Publication date (day/month/year) | Patent family member(s) | Publication date (day/month/year) |
|---|---|---|---|
| | | WO 2013-024983 A3 | 11 April 2013 |

Form PCT/ISA/210 (patent family annex) (July 2022)